(19) Europäisches Patentamt
European Patent Office
Office européen des brevets

(11) **EP 2 712 179 A1**

(12) **EUROPEAN PATENT APPLICATION**
published in accordance with Art. 153(4) EPC

(43) Date of publication:
**26.03.2014 Bulletin 2014/13**

(21) Application number: **12790037.1**

(22) Date of filing: **11.05.2012**

(51) Int Cl.:
*H04N 5/44* (2011.01)  *H04B 1/16* (2006.01)
*H04H 20/61* (2008.01)  *H04H 20/93* (2008.01)
*H04H 60/40* (2008.01)  *H04H 60/42* (2008.01)
*H04H 60/43* (2008.01)  *H04N 7/173* (2011.01)

(86) International application number:
**PCT/JP2012/062089**

(87) International publication number:
**WO 2012/160989 (29.11.2012 Gazette 2012/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.05.2011 JP 2011113928**

(71) Applicant: **Sony Corporation**
**Tokyo 108-0075 (JP)**

(72) Inventors:
• **KITAZATO Naohisa**
**Tokyo 108-0075 (JP)**

• **HATAKEYAMA Izumi**
**Tokyo 108-0075 (JP)**
• **OBAYASHI Masayuki**
**Tokyo 108-0075 (JP)**
• **HIRAGA Tooru**
**Tokyo 108-0075 (JP)**

(74) Representative: **Horner, David Richard**
**D Young & Co LLP**
**120 Holborn**
**London EC1N 2DY (GB)**

(54) **RECEIVER APPARATUS, RECEPTION METHOD, AND PROGRAM**

(57) The present technique relates to a receiving device that can promptly present receivable one-segment broadcasts, a receiving method, and a program.

Station information acquiring units (111 through 113) acquire area broadcast information about stations that transmit broadcast waves of arbitrary one-segment broadcasting through arbitrary segments. Using the area broadcast information, a station selecting unit (117) selects stations of one-segment broadcasts receivable at a predetermined location as selectable stations that can be selected by tuning. A tuning control unit (118) performs tuning control to select a one-segment broadcast of a selectable station. The present invention can be applied to mobile one-segment broadcast receiving terminals, for example.

FIG. 24

**Description**

TECHNICAL FIELD

The present technique relates to receiving devices, receiving methods, and programs, and more particularly, to a receiving device that can promptly present receivable one-segment broadcasts, a receiving method, and a program.

BACKGROUND ART

In digital terrestrial broadcasting, an approximately 6 MHz frequency band (hereinafter also referred to as a physical channel) of a UHF (Ultra High Frequency) band is divided into 13 segments, and broadcasting for fixed terminals such as television receivers is performed through 12 segments among the 13 segments. Broadcasting for mobile terminals, or one-segment broadcasting, is performed through the remaining one segment.

In the current one-segment broadcasting that is being conducted as broadcasting for mobile terminals, the same content as that in the broadcasting for fixed terminals is broadcast, and the segment at the center of the 13 segments of a physical channel (the seventh segment in ascending frequency order) is used.

The one-segment broadcasting that is currently conducted through the segment at the center (hereinafter also referred to as the center segment) is also called conventional one-segment broadcasting.

After the transition from analog terrestrial broadcasting to digital terrestrial broadcasting was completed, the digital terrestrial broadcasting is conducted through physical channels called the 13th through 52nd channels of the UHF band.

In some regions, however, not all the 13th through 52nd channels are actually used in the digital terrestrial broadcasting, and therefore, there are unused channels that are physical channels not being used in the digital terrestrial broadcasting.

Methods of effectively using those unused channels are being studied today, and one of such methods is one-segment broadcasting using any desired segment of the unused channels.

As each one physical channel of the digital terrestrial broadcasting has 13 segments, 13 one-segment broadcasts can be transmitted through one physical channel. One-segment broadcasts transmitted by using respective segments among the 13 segments of one physical channel are called a multi-segment broadcast.

A one-segment broadcast transmitted by using one or more segments of the 13 segments is called an arbitrary one-segment broadcast, and arbitrary one-segment broadcasts include multi-segment broadcasts.

In a conventional receiving terminal that receives regular one-segment broadcasts (hereinafter also referred to as a regular one-segment terminal), a user selects a regular one-segment broadcast. Therefore, channel scanning is performed for acquiring tuning information such as a frequency that is information about tuning, and a tuning information table (hereinafter also referred to as the tuning table) is created (see Patent Documents 1 and 2, for example).

In channel scanning by a regular one-segment terminal, the center segment of each physical channel of the digital terrestrial broadcasting is selected (tuning). When a TS (Transport Stream) is received through the center segment, an NIT (Network Information Table) containing frequency information about each service for tuning the carrier through which services are transmitted and information about the respective services, and an SDT (Service Description Table) containing meta information about the respective services (such as the names of the services) are extracted from the TS, and a tuning table is created from the NIT and the SDT.

When a receiving terminal that receives arbitrary one-segment broadcasts is realized, a tuning table needs to be created as in the case of a regular one-segment terminal.

However, an arbitrary one-segment broadcast is transmitted through any desired segment among the 13 segments of a physical channel. Therefore, in the channel scanning, it is necessary to select not only the center segment of each physical channel but also all the 13 segments, and a much longer period of time is required than in the channel scanning by a regular one-segment terminal.

In view of this, there is a demand for a suggestion of a method of performing channel scanning quickly (in a short period of time) in arbitrary one-segment broadcasts.

CITATION LIST

PATENT DOCUMENTS

Patent Document 1: JP 2006-325032 A
Patent Document 2: JP 2007-329847 A

SUMMARY OF THE INVENTION

PROBLEMS TO BE SOLVED BY THE INVENTION

In suggested arbitrary one-segment broadcasting (hereinafter also referred to as the area-limited broadcasting), an area of several tens of meters to several kilometers around (the antenna of) a station that is a transmitting device to transmit broadcast waves of the arbitrary one-segment broadcasting is set as the broadcast area in which (the broadcast waves of) the arbitrary one-segment broadcasting can be received.

Since the area-limited broadcasting falls in the category of arbitrary one-segment broadcasting, a tuning table needs to be created in a receiving terminal that receives area-limited broadcasts, as in a case where arbitrary one-segment broadcasts are received. In the area-limited broadcasting, however, the broadcast area is small. After the receiving terminal moves several tens of meters or several kilometers, a broadcast that has been received cannot be received, or a new broadcast can be received. In some cases, the tuning table created prior to the move cannot be used after the move.

Specifically, where a broadcast to be selected by a user touching a so-called channel button is a logical channel, a receiving terminal that receives area-limited broadcasts might not be able to present the logical channel that has been receivable prior to a move based on the tuning table created prior to the move, and the user might not be able to receive the logical channel even by touching the channel button to select the logical channel.

Therefore, to present receivable logical channels to the user after movement, it is necessary to again perform channel scanning after the movement.

However, if channel scanning is performed every time there is a move, a certain period of time is required to present receivable logical channels to the user.

The present invention has been made in view of those circumstances, and is to promptly present receivable one-segment broadcasts.

SOLUTIONS TO PROBLEMS

A receiving device or a program of one aspect of the present technique is a receiving device including or a program for causing a computer as: an acquiring unit that acquires area broadcast information about a station transmitting broadcast waves of a one-segment broadcast through an arbitrary segment; a storage unit that stores the area broadcast information; a selecting unit that selects the station transmitting the one-segment broadcast by using the area broadcast information, the one-segment broadcast being receivable at a predetermined location, the station being selected as a selectable station that can be selected by tuning; and a tuning control unit that performs tuning control to select the one-segment broadcast of the selectable station.

A receiving method of the one aspect of the present technique is a receiving method including the steps of: acquiring area broadcast information about a station transmitting broadcast waves of a one-segment broadcast through an arbitrary segment; storing the area broadcast information; selecting the station transmitting the one-segment broadcast by using the area broadcast information, the one-segment broadcast being receivable at a predetermined location, the station being selected as a selectable station that can be selected by tuning; and performing tuning control to select the one-segment broadcast of the selectable station, the steps being carried out by a one-segment broadcast receiving device.

In the one aspect described above, area broadcast information about a station that transmits broadcast waves of a one-segment broadcast through an arbitrary segment is acquired and stored. With the use of the area broadcast information, the station of the one-segment broadcast receivable at a predetermined location is selected as a selectable station that can be selected by tuning. Tuning control is then performed to select the one-segment broadcast of the selectable station.

The receiving device may be an independent device, or may be an internal block of one device.

The program can be provided by transmission via a transmission medium or can be recorded on a recording medium to be provided.

EFFECTS OF THE INVENTION

According to one aspect of the present technique, receivable one-segment broadcasts can be promptly presented.

BRIEF DESCRIPTION OF DRAWINGS

Fig. 1 is a flowchart for explaining a tuning table creating operation.

Fig. 2 is a diagram showing an example of a tuning table.

Fig. 3 is a diagram for explaining channel scanning by a regular one-segment terminal.

Fig. 4 is a diagram showing an example structure of one embodiment of a transmitting and receiving system to which the present invention is applied.

Fig. 5 is a diagram for explaining bandwidth allocation in digital terrestrial broadcasting.

Fig. 6 is a diagram showing an example of allocation of segments to be used for arbitrary one-segment broadcasting.

Fig. 7 is a diagram for explaining methods of acquiring tuning information about area-limited broadcasts.

Fig. 8 is a diagram for explaining an NIT to be transmitted through the center segment of a physical channel for area-limited broadcasting.

Fig. 9 is a diagram showing the structures of NITs and SDTs of a center segment and non-center segments.

Fig. 10 is a diagram showing channel scanning by a receiving terminal 33 and channel scanning by a regular one-segment terminal 100.

Fig. 11 is a diagram showing an example of a tuning table.

Fig. 12 is a diagram showing broadcast areas of regular one-segment broadcasting, and movement lines that are the trajectories of moves of a user carrying the conventional regular one-segment terminal 100 that receives only regular one-segment broadcasts.

Fig. 13 is a diagram showing broadcast areas of area-limited broadcasting, and movement lines that are the trajectories of moves of a user carrying the receiving terminal 33 that can receive area-limited broadcasts.

Fig. 14 is a diagram showing an example of station information.

Fig. 15 is a diagram showing an example station ID.

Fig. 16 is a diagram showing classifications of identification values of station IDs.

Fig. 17 is a diagram illustrating a method of setting a service period of an area-limited broadcast.

Fig. 18 is a diagram showing an example syntax of an NIT containing area broadcast information descriptors.

Fig. 19 is a diagram showing an example syntax of broadcast information descriptors.

Fig. 20 is a block diagram showing a specific example structure of a station 32.

Fig. 21 is a flowchart for explaining a transmitting operation of the station 32.

Fig. 22 is a block diagram showing a specific example structure of the receiving terminal 33.

Fig. 23 is a diagram for explaining acquisition and use of station information at the receiving terminal 33.

Fig. 24 is a block diagram showing an example functional structure of the portion that performs tuning control by using station information in the control unit 80.

Fig. 25 is a flowchart for explaining an operation to acquire station information by channel scanning and receive a service.

Fig. 26 is a diagram showing an example display on the display unit 76 in a case where station information is acquired by channel scanning, and a service is received.

Fig. 27 is a flowchart for explaining an operation to acquire station information by the direct method and receive a service.

Fig. 28 is a diagram showing an example display on the display unit 76 in a case where station information is acquired by the direct method, and a service is received.

Fig. 29 is a flowchart for explaining an operation to acquire station information by some other method.

Fig. 30 is a flowchart for explaining a tuning operation in the individual select mode.

Fig. 31 is a flowchart for explaining a selectable station registering operation.

Fig. 32 is a diagram showing an example display on the display unit 76 in a case where a tuning operation in the individual select mode is performed.

Fig. 33 is a flowchart for explaining a tuning operation in the sequential select mode.

Fig. 34 is a diagram showing an example display on the display unit 76 in a case where a tuning operation in the sequential select mode is performed.

Fig. 35 is a flowchart for explaining a tuning operation in the map display mode.

Fig. 36 is a diagram showing an example display on the display unit 76 in a case where a tuning operation in the map display mode is performed.

Fig. 37 is a flowchart for explaining a tuning operation in the GPS mode.

Fig. 38 is a diagram showing an example display on the display unit 76 in a case where a tuning operation in the GPS mode is performed.

Fig. 39 is a flowchart for explaining a selectable station list registering operation.

Fig. 40 is a flowchart for explaining a checking operation.

Fig. 41 is a diagram showing an example notification screen.

Fig. 42 is a diagram showing an example display on the display unit 76 in a case where the checking operation is performed.

Fig. 43 is a flowchart for explaining a checking operation by wireless communication.

Fig. 44 is a diagram showing the relationship between the broadcast area of a station and the communication areas of wireless IP access points.

Fig. 45 is a block diagram showing an example structure of the hardware of a computer.

## MODES FOR CARRYING OUT THE INVENTION

The following is a description of embodiments of the present technique, with reference to the drawings.

[Channel Scanning by a Regular One-Segment Terminal]

First, channel scanning by a regular one-segment terminal that is a conventional receiving terminal to receive regular one-segment broadcasts is described.

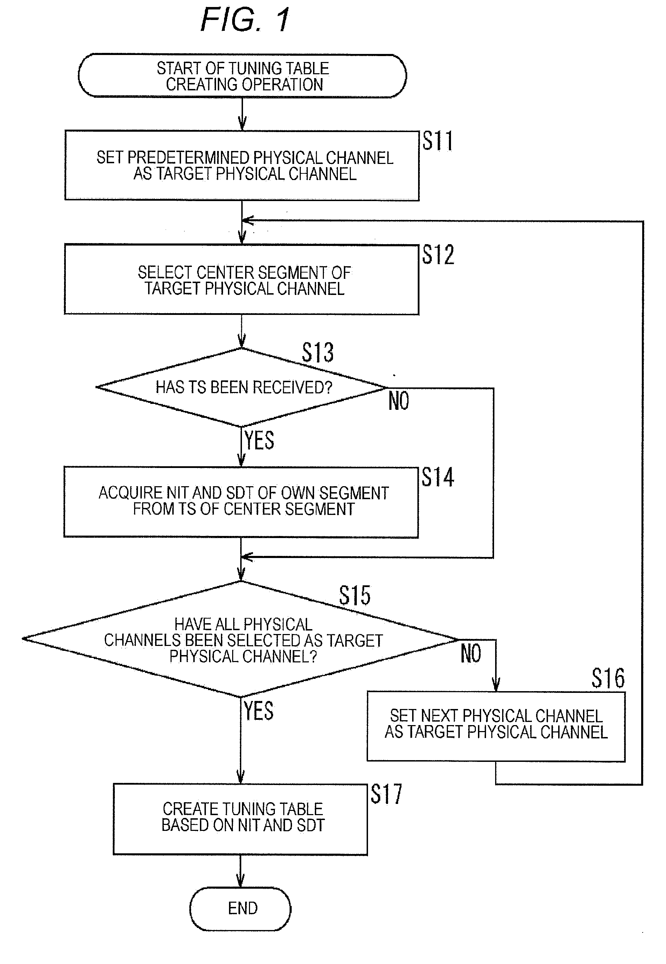

Fig. 1 is a flowchart for explaining channel scanning by a regular one-segment terminal.

In step S11, the regular one-segment terminal selects a physical channel as a target physical channel to be subjected to the operation, from the 13th through 52nd channels of the UHF band. The selected channel is the physical channel with the lowest frequency, for example. The operation then moves on to step S12.

In step S12, the regular one-segment terminal selects the center segment of the target physical channel, and the operation then moves on to step S13.

In step S13, the regular one-segment terminal determines whether the TS of the center segment of the target physical channel has been received. If it is determined that the TS has not been received, step S14 is skipped, and the operation moves on to step S15.

If it is determined in step S13 that the TS of the center segment of the target physical channel has been received, the operation moves on to step S14, and the regular one-segment terminal acquires (extracts), from the TS received through the center segment, the NIT (Network Information Table) of own segment (the segment that has received the TS) described as "NIT actual", and the SDT (Service Description Table) of own segment described as "SDT actual". The operation then moves on to step S15.

In step S15, the regular one-segment terminal determines whether all the 13th through 52nd channels of the UHF band have been selected as a target physical channel.

If it is determined in step S15 that there is a physical channel yet to be selected as a target physical channel, the operation moves on to step S16, and the regular one-segment terminal selects a new target physical channel that is the physical channel with the second highest frequency after the current target physical channel. The operation then returns to step S12.

If it is determined in step S15 that all the physical channels have been selected as a target physical channel, on the other hand, the operation moves on to step S17, and the regular one-segment terminal creates a tuning table based on the NIT and the SDT acquired in step S14, and ends the channel scanning.

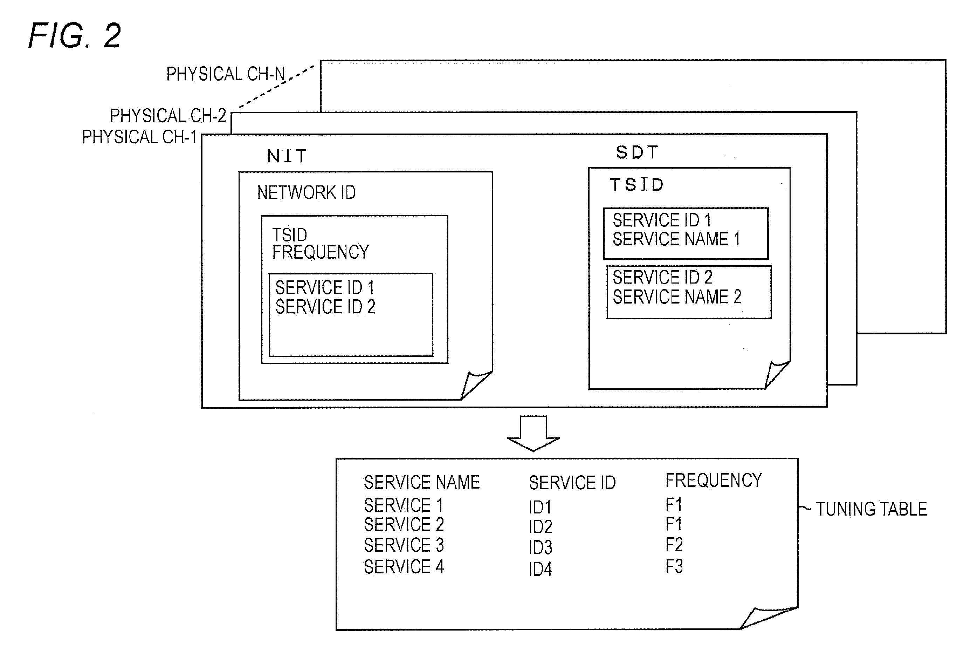

Fig. 2 is a diagram showing the tuning table created based on the NIT and the SDT.

In the NIT, the network ID unique to the network, the TSID unique to the TS, a frequency, the service ID unique to the (broadcasting) service, and the like are written in relation to its own segment. In the SDT, the TSID, the service ID, the service name corresponding to the service ID, and the like are written in relation to its own segment.

The regular one-segment terminal acquires the service IDs and the frequencies for tuning from the NITs of the center segments of the respective physical channels, and associate the service IDs and the frequencies with the service names acquired from the SDTs corresponding to the NITs. The regular one-segment terminal then registers the service IDs, the service names, and the frequencies as tuning information in the tuning table.

In Fig. 2, two service IDs 1 and 2 are written in the NIT of the center segment of a physical channel CH-1 at a frequency F1, as the center segment of the physical channel CH-1 at the frequency F1 is used in two services having the service IDs which are service IDs 1 and 2.

On the regular one-segment terminal, the service names in the tuning table are presented as the names of logical channels (such as "aa TV" or "bb channel" in the program listing). When a user makes an action to select a service (a logical channel) with a service name, the frequency associated with the service name is selected.

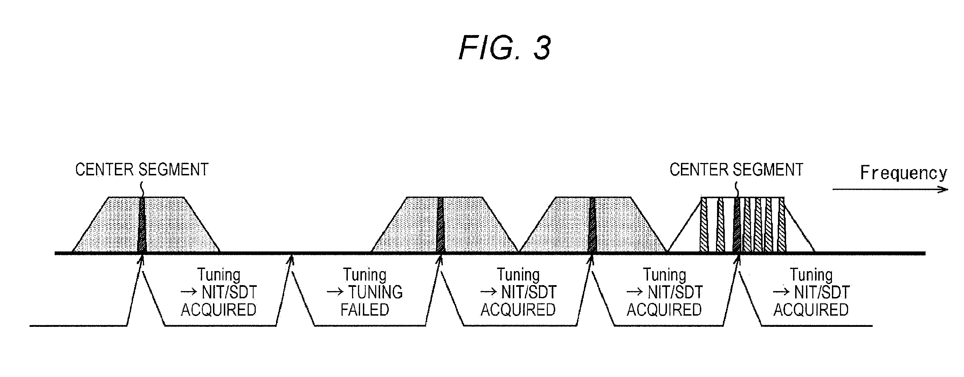

Fig. 3 is a diagram for explaining channel scanning by the regular one-segment terminal.

As described above with reference to Fig. 1, the regular one-segment terminal selects the center segments of the respective physical channels of digital terrestrial broadcasting in ascending frequency order. Every time a TS is received through a center segment, a NIT and a SDT are acquired from the TS.

The regular one-segment terminal then creates a tuning table from the NITs and the SDTs acquired from the TSs in the above described manner.

Accordingly, when an arbitrary one-segment broadcast is transmitted through a center segment, the regular one-segment terminal can acquire the tuning information about the arbitrary one-segment broadcast. However, when an arbitrary one-segment broadcast is transmitted through a segment other than the center segments (any of the shaded portions in Fig. 3), the regular one-segment terminal cannot acquire the tuning information about the arbitrary one-segment broadcast

[Example Structure of One Embodiment of a Transmitting and Receiving System to Which the Present Invention is Applied]

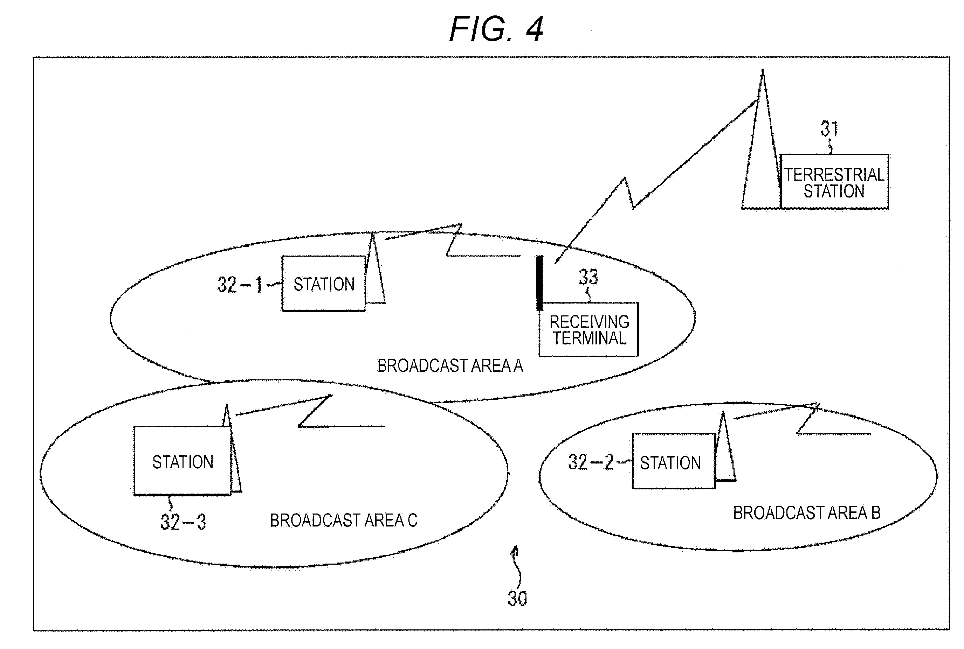

Fig. 4 is a diagram showing an example structure of one embodiment of a transmitting and receiving system to which the present invention is applied.

In Fig. 4, a transmitting and receiving system 30 includes a terrestrial station 31, stations 32-1, 32-2, and 32-3, and a receiving terminal 33.

The terrestrial station 31 is a broadcasting station that conducts digital terrestrial broadcasting, and transmits broadcasts for fixed terminals through 12 segments and broadcasts for mobile terminals (regular one-segment broadcasts) through one segment.

The stations 32-1 through 32-3 are transmitting devices that transmit broadcast waves of arbitrary one-segment broadcasts, and conducts area-limited broadcasting, which is one-segment broadcasting, through any one or more segments in an unused channel of the digital terrestrial broadcasting.

Specifically, the station 32-1 transmits area-limited broadcasts that can be received only in a broadcast area A.

The station 32-2 transmits area-limited broadcasts that can be received only in a broadcast area B, and the station 32-3 transmits area-limited broadcasts that can be received only in a broadcast area C.

Where the stations 32-1 through 32-3 do not need to be particularly distinguished from one another, those stations are collectively referred to as the station 32.

Examples of area-limited broadcasts include broadcasts that can be received only in a theme park and relate to the theme park, and broadcasts that can be received only in a certain ward or city and relate to shops being developed in the ward or city.

Stations that have no overlapping broadcast areas can transmit area-limited broadcasts through the same segment.

Specifically, in Fig. 4, the broadcast areas A and B do not have any overlapping portion. Accordingly, the station 32-1 in the broadcast area A and the station 32-2 in the broadcast area B can transmit area-limited broadcasts through the same segment, for example.

Also, in Fig. 4, the broadcast areas B and C do not have any overlapping portion. Accordingly, the station 32-2 in the broadcast area B and the station 32-3 in the broadcast area C can transmit area-limited broadcasts through the same segment, for example.

However, the broadcasting areas A and C have overlapping portions in Fig. 4. Therefore, the station 32-1 in the broadcast area A and the station 32-3 in the broadcast area C cannot use the same segment for transmitting area-limited broadcasts (as long as those broadcasts are transmitted at the same time).

The receiving terminal 33 is a mobile terminal that can receive regular one-segment broadcasts and area-limited broadcasts.

For example, in a case where a user carrying the receiving terminal 33 is in the broadcast area A, as shown in Fig. 4, the receiving terminal 33 can receive a regular one-segment broadcast and an area-limited broadcast from the station 32-1 of the broadcast area A.

The operation to be performed by the receiving terminal 33 to receive a regular one-segment broadcast is the same as the operation to be performed by a conventional receiving terminal (a regular one-segment terminal) to receive a regular one-segment broadcast, and therefore, explanation of the operation will not be repeated.

[Description of Segments to be Used in Arbitrary One-Segment Broadcasting]

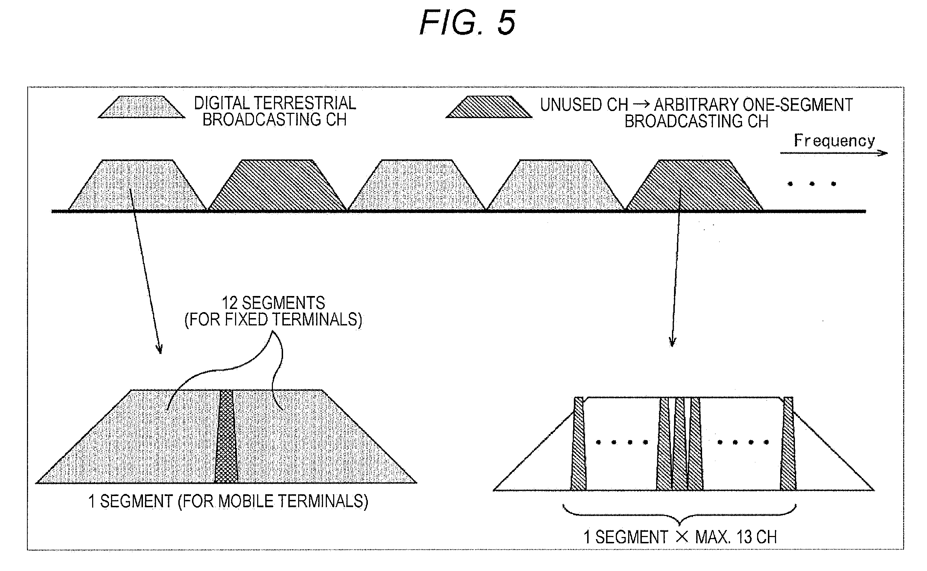

Fig. 5 is a diagram for explaining band allocation in digital terrestrial broadcasting in the transmitting and receiving system 30 shown in Fig. 4.

As shown in Fig. 5, in a physical channel used for digital terrestrial broadcasting among all the bands of digital terrestrial broadcasting, the transmitting and receiving system 30 conducts regular one-segment broadcasting in a band equivalent to the one segment at the center, and conducts broadcasting for fixed terminals in bands equivalent to the other 12 segments.

As for an unused channel, one or more segments can be used for area-limited broadcasting. In one unused channel, the largest number of segments (logical channels) that can be used for area-limited broadcasting is 13.

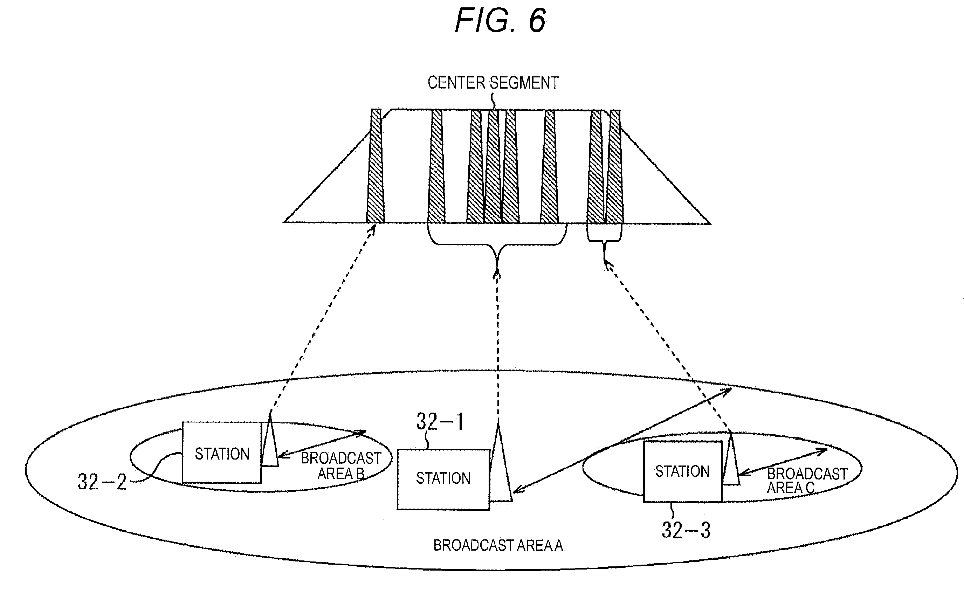

Fig. 6 is a diagram showing an example of allocation of segments to be used for arbitrary one-segment broadcasting.

As the segments to be used by the station 32 for area-limited broadcasting that is arbitrary one-segment broadcasting, any segments of an unused channel can be allocated. However, in a case where one station has one or more other stations under the control thereof, for example, the center segment can be allocated to the one station.

Specifically, the station 32-1 is a so-called center station having a predetermined area as the broadcast area A, the stations 32-2 and 32-3 are so-called local stations having buildings or amusement parks or the like as the broadcast areas B and C, and the broadcast area A includes the broadcast areas B and C, for example. In this case, one or more segments including the center segment of a predetermined unused channel can be allocated to the station 32-1 as the center station, and segments of the unused channel other than the segment(s) allocated to the station 32-1 can be allocated to the stations 32-2 and 32-3 as the local stations, as shown in Fig. 6.

[Methods of Acquiring Tuning Information]

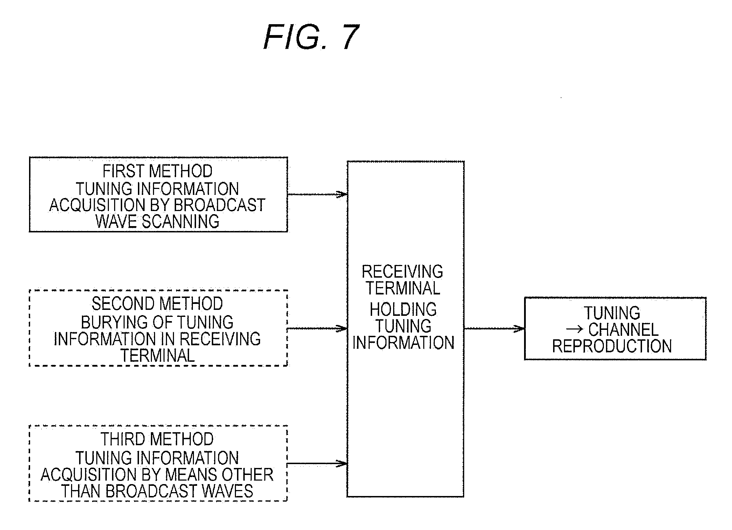

Fig. 7 is a diagram for explaining methods of acquiring tuning information about area-limited broadcasts.

As shown in Fig. 7, there are three typical methods, a first, second, and third methods, of acquiring tuning information about area-limited broadcasts.

The first method is a method of acquiring tuning information by performing channel scanning on broadcast waves of digital terrestrial broadcasting.

By the first method, the receiving terminal 33 selects the respective segments of respective physical channels of digital terrestrial broadcasting, and acquires tuning information about receivable area-limited broadcasts.

According to the first method, the user carrying the receiving terminal 33 can automatically acquire the tuning information about receivable area-limited broadcasts without conscious awareness as to whether there is an area-limited broadcast receivable at his/her location.

By the first method, however, the user needs to select the respective segments of the respective physical channels of digital terrestrial broadcasting every time he/she moves, and time is required to acquire the tuning information about receivable area-limited broadcasts.

The second method is a method of burying tuning information (or storing tuning information beforehand) in the receiving terminal 33.

By the second method, tuning information is stored beforehand in the receiving terminal 33, and accordingly, time is not required to acquire the tuning information.

However, even when the user carrying the receiving terminal 33 performs an operation to select a logical channel from the stored tuning information, the logical channel (an area-limited broadcast) might not be received outside the broadcast area of the logical channel.

The third method is a method of acquiring tuning information by means other than broadcast waves, such as communications via the Internet or communications with a non-contact IC (Integrated Circuit) card.

By the third method, tuning information can be acquired more quickly than by the first method.

However, even when the user carrying the receiving terminal 33 makes an action to select a logical channel, the logical channel might not be received with the third method, as in the case with the second method.

As described above, the first method of performing channel scanning to select the respective segments of the respective physical channels of digital terrestrial broadcasting requires more time to acquire tuning information than the second and third methods.

In view of this, a method for the receiving terminal 33 to acquire tuning information more quickly by channel scanning will be described below.

[Description of NITs and SDTs to be Transmitted by the Station 32]

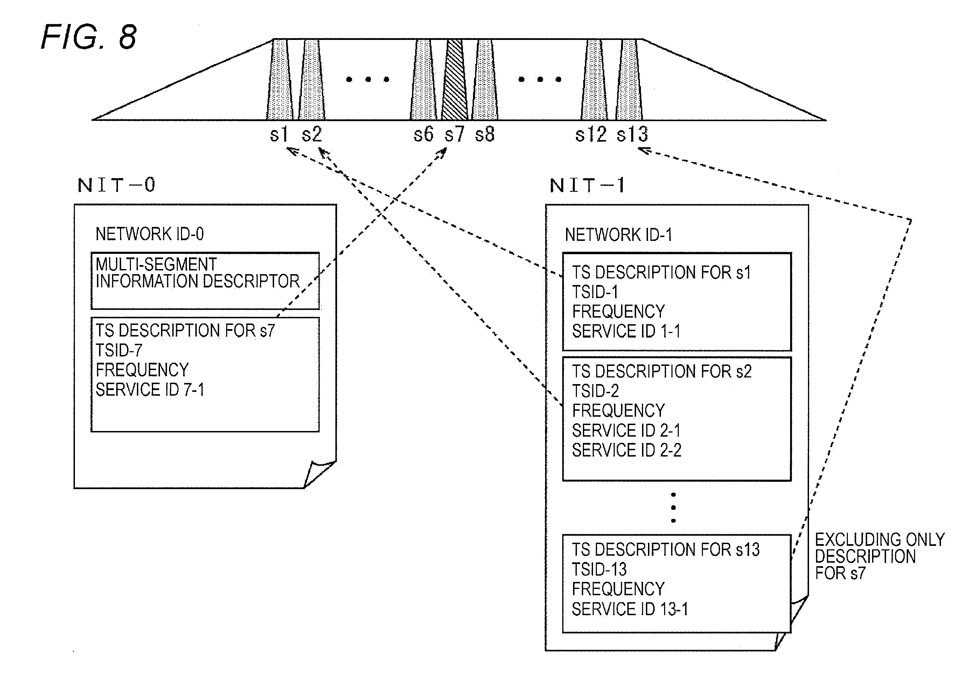

Fig. 8 is a diagram for explaining NITs to be transmitted by the station 32 shown in Fig. 4.

Where area-limited broadcasts receivable in a certain broadcast area are transmitted through the respective 13 segments s1 through s13 forming a physical channel, for example, the station 32 having the center segment allocated thereto transmits the NIT-0 and NIT-1 described below through the center segment s7.

The NIT-0 is formed with a network ID, a multi-segment information descriptor, and information about the TS of the center segment s7 (hereinafter referred to as the TS information).

The multi-segment information descriptor is a descriptor indicating that arbitrary one-segment broadcasting is being conducted through physical channel segments including the center segment s7.

The TS information about the center segment s7 includes the TSID of the TS of the center segment s7, the frequency of the center segment s7, the service ID of the broadcasting service of the center segment s7, and the like.

The NIT-1 is formed with a network ID and the TS information about the segments other than the center segment s7, which are the segments s1 through s6 and s8 through s13. The network ID of the NIT-0 and the network ID of the NIT-1 differ from each other. In the example shown in Fig. 8, the network ID of the NIT-0 is "0", while the network ID of the NIT-1 is "1".

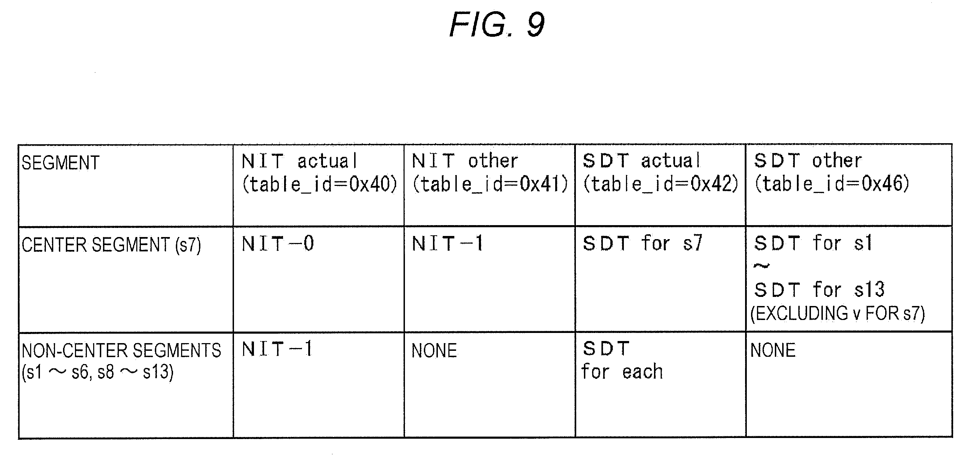

Fig. 9 is a diagram for explaining the NITs and SDTs to be transmitted through the respective segments.

As shown in Fig. 9, through the center segment s7, the NIT-0 is transmitted as "NIT actual" describing the NIT of own segment.

Through the center segment s7, the NIT-1 is transmitted as "NIT other" describing the NIT of the segments (hereinafter referred to as the non-center segment) of the physical channel other than the center segment s7 that is its own segment.

Through the center segment s7, the SDT of the center segment s7 is also transmitted as "SDT actual" describing the SDT of own segment. Further, through the center segment s7, the SDT of each of the non-center segments s1 through s6 and s8 through s13 is transmitted as "SDT other" describing the SDT of each non-center segment.

Through each of the non-center segments s1 through s6 and s8 through s13, the NIT-1 is transmitted as "NIT actual", and any "NIT other" is not transmitted. Through the non-center segments s1 through s6 and s8 through s13, the SDTs of own segments s1 through s6 and s8 through s13 are transmitted as "SDT actual", and any "SDT other" is not transmitted.

As described above, where NITs and SDTs are transmitted, the receiving terminal 33 selects the center segments of respective physical channels of digital terrestrial broadcasting in ascending frequency order.

When having received a TS through a center segment through a center segment, the receiving terminal 33 acquires the NIT and the SDT of the area-limited broadcast transmitted through the center segment from "NIT actual" and "SDT actual" of the TS.

Based on whether a multi-segment information descriptor exists in the NIT acquired from "NIT actual" of the TS of the center segment, the receiving terminal 33 determines whether area-limited broadcasting as arbitrary one-segment broadcasting is being conducted, or whether regular one-segment broadcasting is being conducted.

When recognizing that area-limited broadcasting is being conducted, the receiving terminal 33 acquires the NITs and the SDTs of the area-limited broadcasts being transmitted through the non-center segments, from "NIT other" and "SDT other" of the TS received through the center segment.

The receiving terminal 33 creates a tuning table containing the tuning information about area-limited broadcasts based on the NITs and SDTs acquired in the above manner.

As described above with reference to Figs. 8 and 9, "NIT other" and "SDT other", as well as "NIT actual" and "SDT actual", are included in the TS of each center segment. Accordingly, the receiving terminal 33 can acquire the NITs and the SDTs of all the area-limited broadcasts of the physical channels having the center segments simply by sequentially selecting the center segments of the respective physical channels.

Thus, the receiving terminal 33 can promptly acquire tuning information about area-limited broadcasts.

It should be noted that "NIT other" and "SDT other" are not necessarily transmitted through the center segments.

In a case where "NIT other" and "SDT other" are not transmitted through a center segment, however, the receiving terminal 33 determines whether area-limited broadcasting is being conducted based on whether a multi-segment information descriptor exists in "NIT actual" of the center segment. When area-limited broadcasting is being conducted, the non-center segments need to be sequentially selected, and "NIT actual" and "SDT actual" of the non-center segments through which TSs have been received should be acquired.

Here, "NIT actual" contains information about the network over which the "NIT actual" is transmitted, and "NIT other" contains information about a different network from the network over which the "NIT other" is transmitted. Also, "SDT actual" contains information about the services of the network over which the "SDT actual" is transmitted, and "SDT other" contains information about the services of a different network from the network over which the "SDT other" is transmitted.

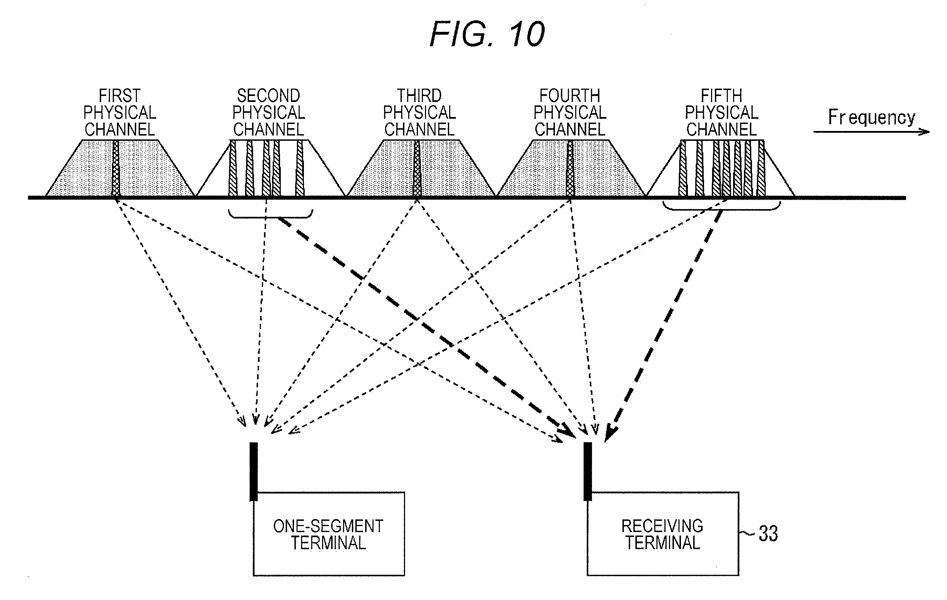

Fig. 10 is a diagram showing channel scanning by the receiving terminal 33 shown in Fig. 4 and channel scanning by a regular one-segment terminal 100 as a conventional receiving terminal that receives regular one-segment broadcasts.

The receiving terminal 33 and the conventional regular one-segment terminal 100 each create a tuning table by selecting the center segments of respective physical channels in ascending frequency order and acquiring tuning information, for example.

Not being compatible with area-limited broadcasting (arbitrary one-segment broadcasting), the regular one-segment terminal 100 ignores the multi-segment information descriptor in "NIT actual" included in the TS of each center segment of physical channels having area-limited broadcasts allocated thereto. Therefore, the regular one-segment terminal 100 does not malfunction but cannot acquire "NIT other" and "SDT other".

As a result, the regular one-segment terminal 100 acquires the tuning information from the NITs and the SDTs of regular one-segment broadcasts and area-limited broadcasts transmitted through the center segments of the respective physical channels, as shown in Fig. 10.

On the other hand, the receiving terminal 33, which is compatible with area-limited broadcasting, recognizes the multi-segment information descriptor in "NIT actual" included in the TS of each center segment of physical channels having area-limited broadcasts allocated thereto, and acquires "NIT other" and "SDT other" as well as "NIT actual" and "SDT actual".

As a result, the receiving terminal 33 can acquire tuning information from the NITs and SDTs of all the one-segment broadcasts and area-limited broadcasts allocated to the respective physical channels.

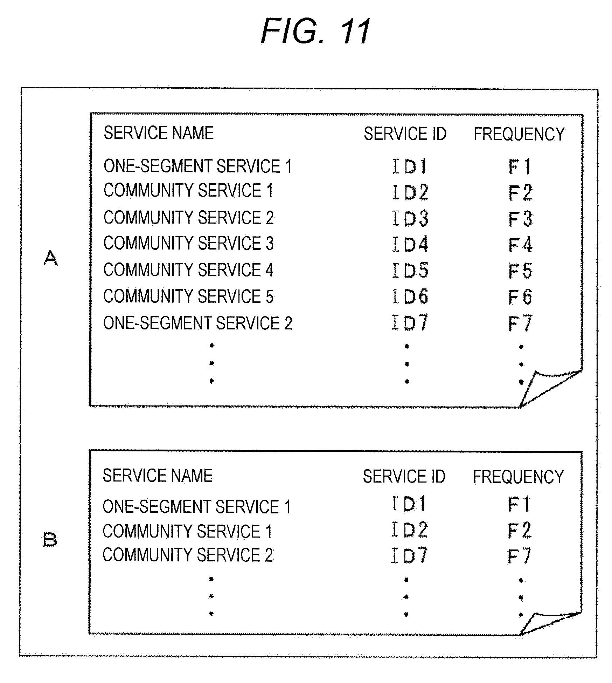

Fig. 11 is a diagram showing an example of the tuning table created by the receiving terminal 33 in the example illustrated in Fig. 10, and an example of the tuning table created by the regular one-segment terminal.

A of Fig. 11 shows the tuning table created by the receiving terminal 33.

In the tuning table created by the receiving terminal 33, the service name "one segment service 1", the service ID "ID1", and the frequency "F1" of the regular one-segment broadcast allocated to the center segment of the first physical channel in Fig. 10 are first registered.

Next, the service names "community service 1" through "community service 5", the service IDs "ID2" through "ID6", and the frequencies "F2" through "F6" of the area-limited broadcasts allocated to five segments in the second physical channel are registered.

The service name "one segment service 2", the service ID "ID7", and the frequency "F7" of the regular one-segment broadcast allocated to the center segment of the third physical channel are then registered.

After that, the service names, the service IDs, and the frequencies of the regular one-segment broadcast allocated to the center segment of the fourth physical channel and the area-limited broadcasts allocated to seven segments in the fifth physical channel are registered likewise.

B of Fig. 11 shows the tuning table created by the regular one-segment terminal 100.

In the tuning table created by the regular one-segment terminal 100, the service name "one segment service 1", the service ID "ID1", and the frequency "F1" of the regular one-segment broadcast allocated to the center segment of the first physical channel are first registered, as in the tuning table created by the receiving terminal 33.

Next, the service name "community service 1", the service ID "ID2", and the frequency "F2" of the area-limited broadcast allocated to the center segment of the second physical channel are registered.

The service name "one segment service 2", the service ID "ID7", and the frequency "F7" of the regular one-segment broadcast allocated to the center segment of the third physical channel are then registered, as in the tuning table created by the receiving terminal 33.

After that, the service names, the service IDs, and the frequencies of the regular one-segment broadcast allocated to the center segment of the fourth physical channel and the area-limited broadcast allocated to the center segment of the fifth physical channel are registered likewise.

As described above, the conventional regular one-segment terminal 100 cannot acquire the tuning information about the area-limited broadcasts of the non-center segments, and does not register the tuning information about those area-limited broadcasts in the tuning table. However, the conventional regular one-segment terminal 100 can acquire the tuning information about the center segments, and registers the tuning information about those center segments in the tuning table.

Accordingly, transmission of NITs and SDTs does not interfere with reception of regular one-segment broadcasts by the conventional regular one-segment terminal 100, as described above with reference to Figs. 8 and 9.

[Broadcast Areas and Movement Lines of Users]

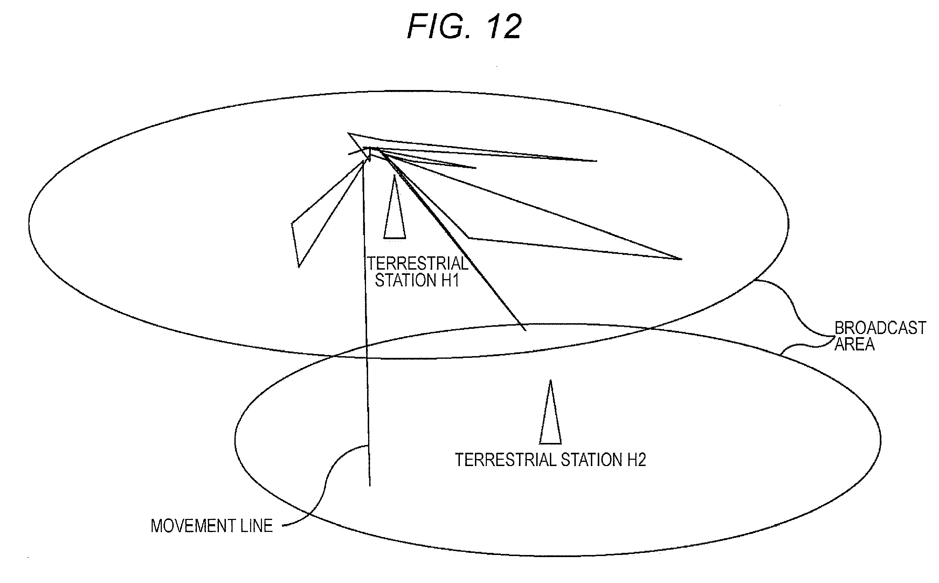

Fig. 12 is a diagram showing broadcast areas of digital terrestrial broadcasting (regular one-segment broadcasting), and movement lines that are the trajectories of moves of a user carrying the conventional regular one-segment terminal 100 that receives only regular one-segment broadcasts.

Since a broadcast area of regular one-segment broadcasting is large, the user carrying the conventional regular one-segment terminal 100 normally moves within the broadcast area of a certain terrestrial station H1 in everyday life, and rarely moves from the broadcast area as the daily living area to the broadcast area of another terrestrial station H2.

Therefore, in the regular one-segment terminal 100 carried by a user who has most movement lines within the broadcast area of the terrestrial station H1 and has only the few remaining movement lines within the broadcast area of the terrestrial station H2 as shown in Fig. 12, the tuning information about regular one-segment broadcasts transmitted from the terrestrial station H1 is registered in the tuning table so that (the service names of) the regular one-segment broadcasts that are transmitted from the terrestrial station H1 and are receivable in most cases can be presented to the user as (the service names of) the regular one-segment broadcast that can be selected by the user.

In the regular one-segment terminal 100, the tuning information about regular one-segment broadcasts transmitted from the terrestrial station H2 as well as the tuning information about the regular one-segment broadcasts transmitted from the terrestrial station H1 may be registered in the tuning table so that the regular one-segment broadcasts transmitted from the terrestrial stations H1 and H2 can be presented to the user as the regular one-segment broadcasts from which the user can select.

In that case, however, when the user carrying the regular one-segment terminal 100 is in the broadcast area of the terrestrial station H1, the regular one-segment terminal 100 cannot receive a regular one-segment broadcast of the terrestrial station H2 by selecting the regular one-segment broadcast of the terrestrial station H2.

Likewise, when the user carrying the regular one-segment terminal 100 is in the broadcast area of the terrestrial station H2, the regular one-segment terminal 100 cannot receive a regular one-segment broadcast of the terrestrial station H1 by selecting the regular one-segment broadcast of the terrestrial station H1.

In the regular one-segment terminal 100, to present only receivable regular one-segment broadcasts to the user, the tuning information about the regular one-segment broadcasts being transmitted from the terrestrial station H1 and the tuning information about the regular one-segment broadcasts being transmitted from the terrestrial station H2 are registered in different tuning tables, and the user needs to (perform an operation to) switch the tuning tables for tuning, where necessary.

As described above, since a broadcast area of regular one-segment broadcasting is large, a user rarely moves from the broadcast area containing his/her daily living area to another broadcast area in everyday life.

Therefore, the tuning table for tuning is rarely switched to another tuning table. Also, the number of tuning tables to register different sets of tuning information is small, and switching of tuning tables is easy.

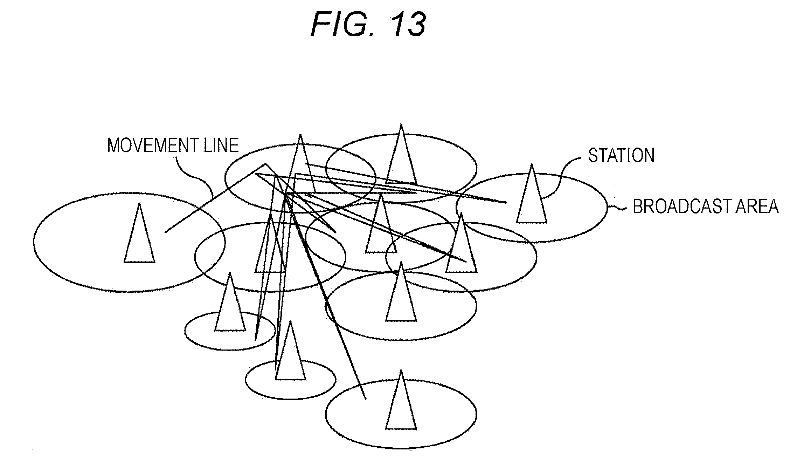

Fig. 13 is a diagram showing broadcast areas of area-limited broadcasting, and movement lines that are the trajectories of moves of a user carrying the receiving terminal 33 that can receive area-limited broadcasts.

Since a broadcast area of area-limited broadcasting is small, many stations are densely located in a not very large area. As a result, it is predicted that the user carrying the receiving terminal 33 will often move across the broadcast areas of many stations.

Therefore, it is predicted that area-limited broadcasts (logical channels) that can be received by the receiving terminal 33 will often change while the user is moving within his/her daily living area.

In the receiving terminal 33, the tuning information about many area-limited broadcasts is registered in many tuning tables so that only receivable area-limited broadcasts can be presented to the user, and the user switches tuning tables for tuning where necessary, as in the regular one-segment terminal 100 described above with reference to Fig. 12. In that case, the user has to switch tuning tables for tuning among a large number of tuning tables, and it is predicted that the switching will be frequent.

In view of this, registering the tuning information about many area-limited broadcasts in many tuning tables, and the user switching tuning tables for tuning are not a realistic method in the receiving terminal 33.

Also, as for an area-limited broadcast transmitted at an event site or the like, the broadcast duration and the broadcast time slot are probably restricted, for example. Therefore, even within the broadcast area of a station, an area-limited broadcast can be received in some cases but cannot be received in other cases.

In view of this, even if the tuning information about area-limited broadcasts is buried as finite but permanent information beforehand in the receiving terminal 33, the tuning information about area-limited broadcasts that were transmitted in the past becomes useless, and it is difficult to cope with area-limited broadcasts that will be started in the future.

Meanwhile, even if the tuning information about area-limited broadcasts that are receivable at that point is acquired by performing the channel scanning described above with reference to Fig. 10, the receiving terminal 33 is not necessarily able to receive the area-limited broadcasts corresponding to the tuning information acquired by the past channel scanning after the user has moved or a certain period of time has passed.

Therefore, to present to the user the area-limited broadcasts that are currently receivable at the location of the user as the area-limited broadcasts from which the user can select, it is necessary to acquire the tuning information about the receivable area-limited broadcasts by performing channel scanning constantly (or at short intervals).

However, the channel scanning described above with reference to Fig. 10 requires a certain period of time, though tuning information can be acquired more quickly than with channel scanning for selecting the respective segments of respective physical channels of digital terrestrial broadcasting.

Therefore, performing channel scanning constantly is not realistic.

In view of the above, to promptly present receivable area-limited broadcasts to the user, station information (hereinafter also referred to as area broadcast information) about stations that transmit broadcast waves of one-segment broadcasts through arbitrary segments is provided to the receiving terminal 33. Using the station information, the receiving terminal 33 selects a station transmitting a receivable area-limited broadcast as a selectable station.

[Description of Station Information]

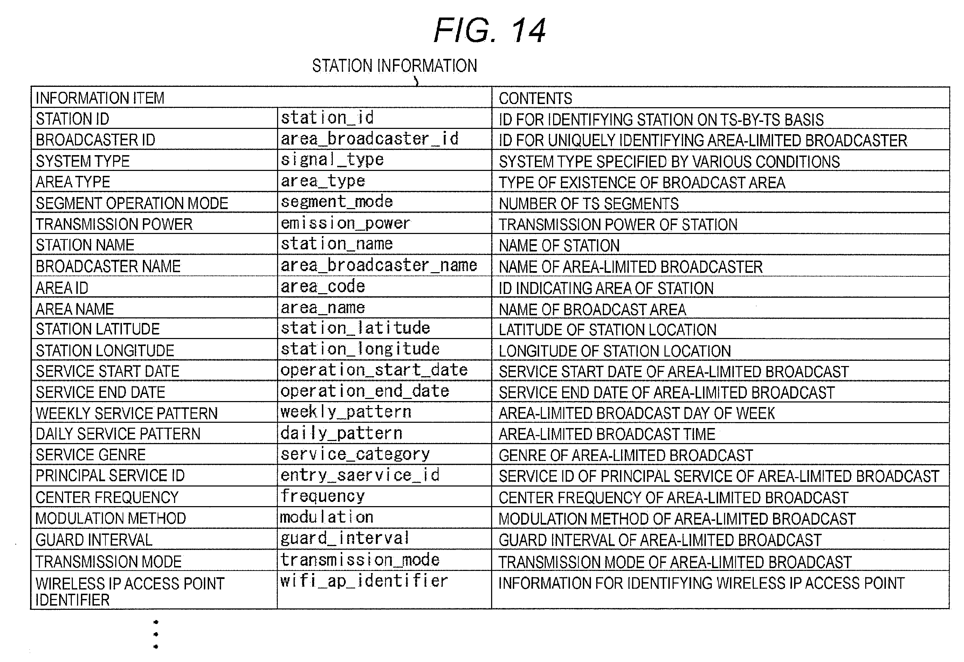

Fig. 14 is a diagram for explaining station information (area broadcast information).

Station information contains a station ID, a broadcaster ID, a system type, an area type, a segment operation mode, transmission power, a station name, a broadcaster name, an area ID, an area name, a station longitude, a station latitude, a service start date, a service end date, a weekly service pattern, a daily service pattern, a service genre, a principal service ID, a center frequency, a modulation method, a guard interval, a transmission mode, a wireless IP address point identifier, and the like.

The station ID (station_id) indicates a unique ID for identifying the station on TS-by-TS basis (segment-by-segment basis).

A network ID may be used as the ID for identifying a station. However, a network ID is formed with 16 bits. Since there are a large number of stations that conduct area-limited broadcasting, it should be difficult to uniquely allocate a 16-bit network ID to each station. In view of this, a 24-bit station ID is used to uniquely identify the station.

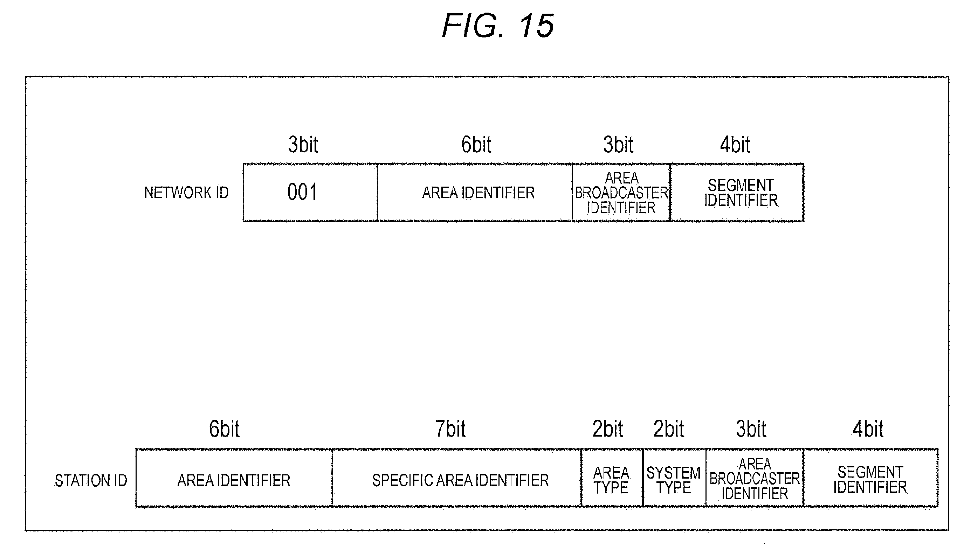

As shown in Fig. 15, of the 16 bits of a network ID, the first three bits are fixed as "001", six bits indicate an area identifier, three bits indicate an area broadcaster identifier, and four bits indicate a segment identifier, in this order.

Of the 24 bits of a station ID, the first six bits indicate an area identifier, seven bits indicate a specific area identifier, two bits indicate an area type, two bits indicate a system type, three bits indicate an area broadcaster identifier, and four bits indicate a segment identifier, in this order.

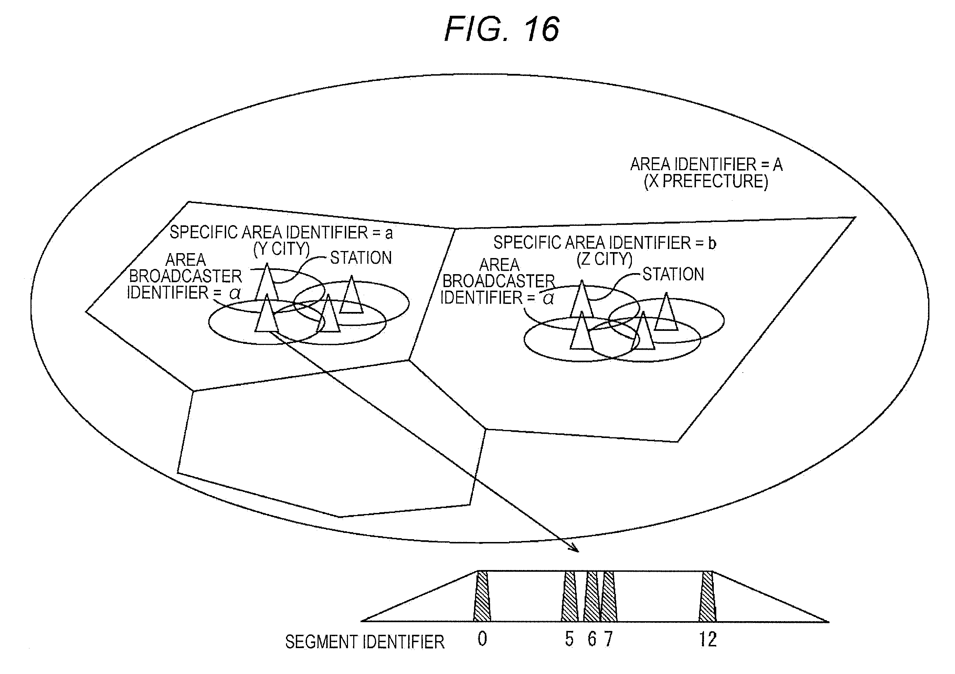

Fig. 16 shows an example case where an area identifier A is allocated to X prefecture, and a and b are allocated as specific area identifiers to Y city and Z city of X prefecture, respectively. Since Y city and Z city have different specific area identifiers a and b in this case, area broadcaster identifiers $\alpha$, $\beta$, $\gamma$, ... can be allocated to stations located in Z city, while the same area broadcaster identifiers $\alpha$, $\beta$, $\gamma$, ... are allocated to stations located in Y city. Also, a segment identifier for identifying 13 segments is allocated to each station to be identified by an area broadcaster identifier.

Alternatively, a station ID may be associated with a network ID so that the 6-bit area identifier, the 3-bit area broadcaster identifier, and the 4-bit segment identifier of the 24 bits of the station ID are allocated as the network ID. Also, as the 24-bit station ID is subjected to bit allocation as shown in Fig. 15, the station ID contains information such as the system type, the area type, and the area ID, and there is no need to provide those pieces of information.

In the receiving terminal 33, the station information is maintained and managed based on the station ID. In the station information, the station ID is a necessary item.

Referring back to Fig. 14, the broadcaster ID (area_broadcaster_id) indicates a unique ID for identifying the broadcaster (the area-limited broadcaster) that conducts area-limited broadcasting. Since a station is operated by one area-limited broadcaster, one broadcaster ID is allocated to one station ID. However, one area-limited broadcaster can operate more than one station. Therefore, the same broadcaster ID may be allocated to other station IDs.

That is, an area-limited broadcaster can conduct area-limited broadcasting from one or more stations. Therefore, sets of station information with different station IDs might have the same broadcaster ID.

In the station information, the broadcaster ID is a necessary item.

The system type (signal_type) indicates a classification for designating a system type in broadcasting. The system type designates a specific standard with which (signals of) broadcast waves of area-limited broadcasting are compliant, such as physical conditions including a modulation method for each segment, conditions for encoding video signals and audio signals, and a data signal specification. As the system type, any of the following types 0 through 3 may be designated, for example.

0: Retransmission in a limited area of digital terrestrial broadcasting
1: Area-limited broadcasting conditionally using the digital terrestrial broadcasting specification
2: Area-limited broadcasting conditionally using the terrestrial radio broadcasting specification in the UHF band
3: Area-limited broadcasting using the band for area-limited broadcasting in terrestrial radio broadcasting using the VHF band (community broadcasting)

The receiving terminal 33 can determine beforehand which broadcast system is being used based on the system type. Accordingly, by determining beforehand whether the broadcast signals are compatible, settings for signals of respective types can be prepared when preparation can be made.

In the station information, the system type is a necessary item.

The area type (area_type) indicates a classification for designating a type of existence of a broadcast area. As the area type, any of the following types 1 through 3 is designated, for example.

1: A service for an open area (hereinafter referred to as a public area) by a fixed station
2: A service for an area within a specific facility (hereinafter referred to as a closed area) by a fixed station
3: A service for an area within a transportation facility by a mobile station that is the transportation facility

A public area is an open area such as Shibuya ward or Shinagawa Ward, and a closed area is an area within a specific facility such as a shop or a stadium. An area within a transportation facility is an area inside a train or a bus, for example.

In the receiving terminal 33, station information about fixed stations and station information about mobile stations are registered separately in a list (the later described station list) in accordance with area types. In the case of a fixed station, it is possible to notify the viewer of the existence of the fixed station by using information such as the area identifier, the station latitude/longitude, and the transmission power. In the case of a mobile station, any area identifier cannot be designated, as a transportation facility such as a train should constantly move. Still, it is possible to notify the viewer of the existence of the mobile station by using information for specifying a train or a bus, for example, instead of information such as an area identifier. Also, it is necessary to acquire the present location as the information indicating whether the viewer is in a train or a bus or the like.

For example, as services for closed areas can be identified, it is possible to notify the viewer of a service for a closed area. If the viewer is notified of the available channels of all the closed area within a public area at once, for example, the viewer is notified of an enormous number of channels for facilities such as shops and stadiums, and might find it difficult to select a desired station. In view of this, when a user enters a public area, the user may be notified only of the available channels of the public area, and may be made to intentionally select an available channel of a closed area only when the user enters the closed area in a desired facility.

The segment operation mode (segment_mode) indicates the number of TS segments through which (signals of) broadcast waves of area-limited broadcasting are transmitted. As the segment operation mode, any of the following modes 1 through 3 can be designated, for example.

1: One segment
2: Three segments
3: 13 segments

A combination of the segment operation mode and the above described system type determines the specification with which (signals of) area-limited broadcasting is compliant. In this manner, tuner performance required in the receiving terminal 33 is determined. Specifically, in the receiving terminal 33, a check is made to determine beforehand whether signals of broadcast waves are compatible with the terminal based on the segment operation mode and the system type, and, if the signals are compatible signals, settings for the signals are prepared.

In the station information, the segment operation mode is a necessary item.

The transmission power (emission_power) indicates a broadcast wave transmission output (power (mW)) from the station identified by the station ID.

The receiving terminal 33 can determine whether (signals of) broadcast waves of area-limited broadcasting can be received based on the transmission power and the positional relationship with the station. In practice, however, the transmission power depends on radio wave directionality and various conditions for transmitting radio waves. Therefore, there are cases where (or there is a high possibility that) an area-limited broadcast cannot be (properly) received, and, in view of this, the transmission power is used only in an auxiliary manner.

In the station information, the transmission power is a necessary item.

The station name (station_name) indicates the name of the station identified by the station ID. The station name is text information, and may be omitted when it can be written in a TS information descriptor in an NIT or the like.

The broadcaster name (area_broadcaster_name) indicates the name of the area-limited broadcaster identified by the broadcaster ID.

The area ID (area_code) indicates the ID for identifying the location of the station identified by the station ID, and may be the prefectural code, the postcode, or the area code of the location of the station identified by the station ID, for example. As described above, the area ID can be omitted when the station ID contains an area identifier, but is a necessary item when the station ID does not contain any area identifier.

The area name (area_name) indicates the name (the area-specific name) of the location or the broadcast area of the station identified by the station ID. In a case where the area type is a mobile station, the name of a transportation facility or the like may be designated. In the case of a closed area, the name of a facility or the like may be designated. In the receiving terminal 33, after the area identifier in the area ID or the station ID is selected by the viewer, the area type may be used for reminding the viewer of the name of the selected area.

The station latitude (station_latitude) and the station longitude (station_longitude) are location information indicating the location (location) of the station identified by the station ID, and show the latitude and the longitude of the location of the station identified by the station ID.

In a case where the receiving terminal 33 has a GPS (Global Positioning System) function, the station latitude and the station longitude may be used for displaying the location of the station on a map or for reporting a reception possibility with respect to a relative distance from the station, for example. In the station information, the station latitude and the station longitude are necessary items.

The service start date (operation_start_date) and the service end date (operation_end_date) indicate the service start date and the end date of the duration of time during which the station identified by the station ID is to conduct area-limited broadcasting. In a case where the area-limited broadcasting has already been started, there is no need to designate a service start date. In a case where the end date of the area-limited broadcasting has not been determined, there is no need to designate a service end date. Further, in a case where the area-limited broadcasting is to be conducted only in one day, the same date is designated in the service start date and the service end date.

The weekly service pattern (weekly_pattern) indicates the day(s) of the week on which the area-limited broadcasting is to be conducted. The weekly service pattern is designated with a 7-bit bitmap formed with bits corresponding to the respective days of the week, and the bits corresponding to the days of the week on which the area-limited broadcasting is to be conducted are set.

The daily service pattern (daily_pattern) indicates the hour(s) in which the area-limited broadcasting is to be conducted. The daily service pattern is designated with a 24-bit bitmap formed with bits corresponding to hours 0 through 23, and the bits corresponding to the hours in which the area-limited broadcasting is to be conducted are set.

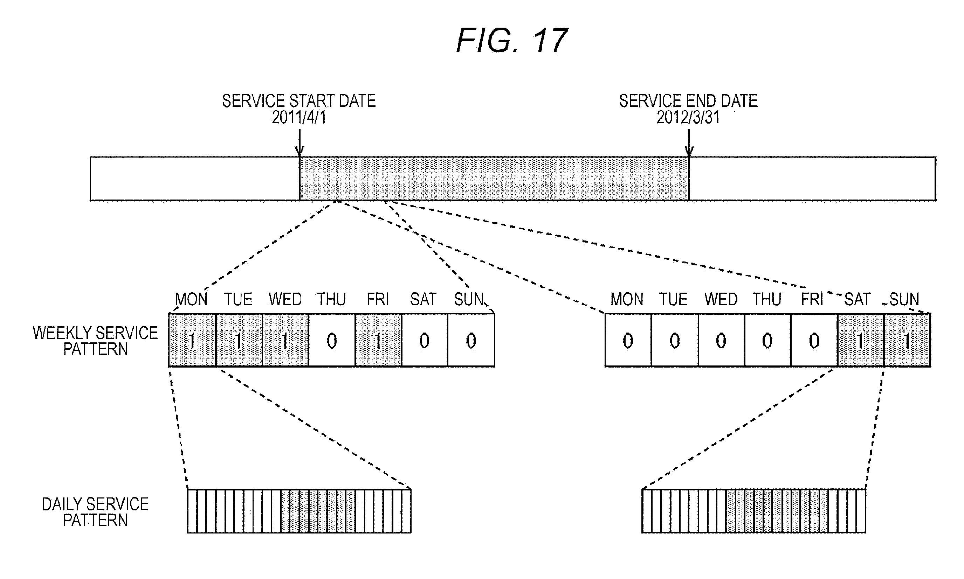

Fig. 17 shows an example schedule designation method that is used in a case where area-limited broadcast is to be conducted for one year from April 1, 2011 to March 31, 2012, 10:00 to 18:00 on weekdays excluding Thursdays, 9:00 to 20:00 on Saturdays and Sundays. Accordingly, 2011/4/1 is designated in the service start date, and 2012/3/31 is designated in the service end date. In the weekly service pattern for weekdays, the bits corresponding to Monday, Tuesday, Wednesday, and Friday are set, while the bit corresponding to Thursday is not set. In the daily service pattern for those days of the week, the bits corresponding to the hours of 10 through 18 are set. In the weekly service pattern for weekends, the bits corresponding to Saturday and Sunday are set. In the daily service pattern for weekends, the bits corresponding to the hours of 9 through 20 are set.

That is, the service duration of the area-limited broadcast is specified by the AND conditions of the service start date, the service end date, the weekly service pattern(s), and the daily service pattern(s). In a case where service hours vary with the days of the week, for example, a day of the week is designated in each daily service pattern. In this case, combinations of a weekly service pattern and a daily service pattern are set in a loop. However, there is no need to set a weekly service pattern and a daily service pattern, if no patterns are specified.

As described above, not only the duration of the area-limited broadcasting but also the broadcast hours of each day of the week during the duration can be designated. Accordingly, the viewer can be notified not only of the hours in which the area-limited broadcasting is to be conducted, but also of the late night hours in which the area-limited broadcasting is not to be conducted, for example.

Referring back to Fig. 14, the service genre (service_category) indicates the genre to which the area-limited broadcasting belongs.

For example, an area-limited broadcast of another station might be provided by a so-called affiliate using an NIT in some cases. If such broadcasts are accepted without limitation, the amount of station information to be stored might become enormous. Therefore, with the use of service genres, filtering is performed so that only station information containing service genres matching the tastes of the viewer can be acquired at the time of acquisition of station information. Accordingly, as well as the station information registered by the user, station information belonging to genres in which the user is interested can be stored by affiliates, for example. Also, at the time of a search for station information, service genres can be used as a search condition, for example.

The principal service ID (entry_saervice_id) indicates the service ID of the principal channel of the station. In a case where one TS includes more than one channel, for example, the channel corresponding to the principal service ID is first selected. If there is only one channel in the TS, there is no need to set the principal service ID.

The center frequency (frequency) indicates the frequency for selecting the channel of the area-limited broadcasting to be conducted by the station identified by the station ID.

The modulation method (modulation) indicates the modulation method for the area-limited broadcasting to be conducted by the station identified by the station ID.

The guard interval (guard_interval) indicates the guard interval of the area-limited broadcasting to be conducted by the station identified by the station ID.

The transmission mode (transmission_mode) indicates the transmission mode of the area-limited broadcasting to be conducted by the station identified by the station ID.

The center frequency, the modulation method, the guard interval, and the transmission mode are parameters for selecting one TS (one segment). In a case where station information is transmitted through a segment used for area-limited broadcasting and is provided to the receiving terminal 33, information such as the center frequency is contained in the TS information descriptor in an NIT transmitted through the segment. Therefore, the station information does not necessarily contain the information.

The wireless IP access point identifier (wifi_ap_identifier) is the identification information for designating a wireless IP access point to which the terminal is to connect when a wireless communication is performed in data broadcasting by area-limited broadcasting.

In a transition from a top page transmitted by data broadcasting to the next page, for example, the next page might be acquired from a communication network such as the Internet. If the receiving terminal 33 has a wireless LAN communication function in such a case, the receiving terminal 33 connects to the wireless IP access point identified by an SSID (Service Set Identifier), to acquire the next page. When it is determined that the terminal can connect to the wireless IP access point identified by the wireless IP access point identifier, on the other hand, the broadcast area can be assumed to be the broadcast area of the station conducting the area-limited broadcasting, and it is possible to notify the user that the station can be used.

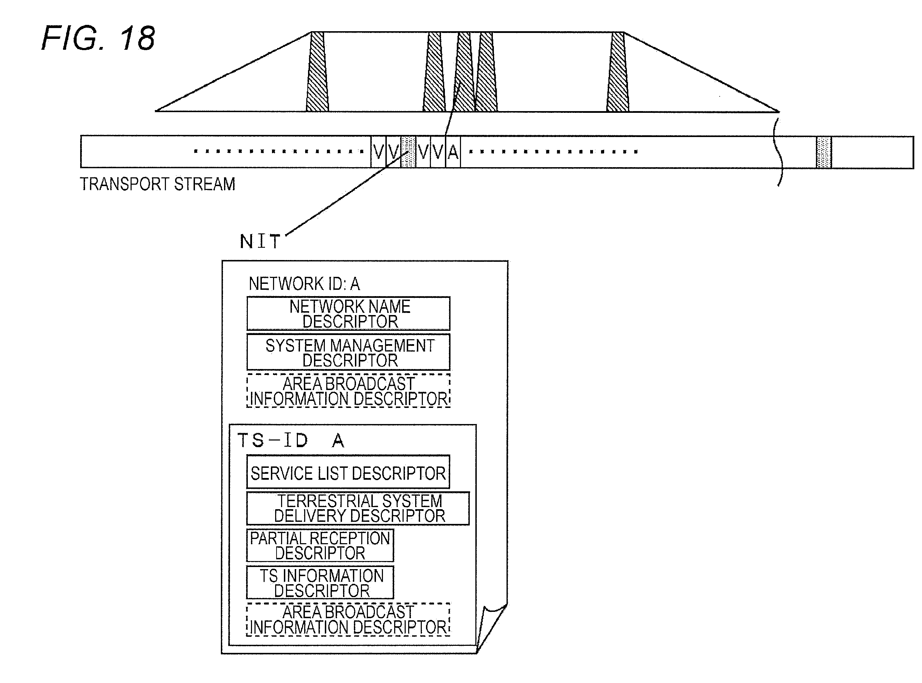

Fig. 18 is a diagram showing an example syntax (data structure) of an NIT containing area broadcast information descriptors.

As shown in Fig. 18, a network loop and a TS loop are sequentially written in an NIT extracted from a TS in which video data, audio data, and the like are multiplexed.

In the network loop, one or more descriptors can be placed. As the descriptors in the network loop, a network name descriptor, a system management descriptor, an area broadcast information descriptor, and the like are placed for each network ID.

A network name is written in the network name descriptor, and information indicating whether the network is a broadcasting network or a communication network is written in the system management descriptor. In the area broadcast information descriptor, station information (Fig. 14) about another station is written. Specifically, as station information about another station is written in the area broadcast information descriptor, an affiliation can be started, for example. However, there is no need to write such station information when any affiliation is not to be started. Also, one or more area broadcast information descriptors can be written.

For example, filtering based on service genres is performed on station information about another station, and the station information is then stored. When the receiving terminal 33 enters the broadcast area of another station, it is possible to notify the user that another station can be used, in conjunction with the later described GPS function or the like.

The TS loop is placed after the network loop.

In the TS loop, one or more descriptors can be written.

Descriptors such as a service list descriptor, a terrestrial system delivery descriptor, a partial reception descriptor, a TS information descriptor, and an area broadcast descriptor are written for each TS (TS-ID) in the TS loop.

A service ID and a service type indicating the type of broadcast service (such as television broadcasting or radio broadcasting) are written in the service list descriptor, and information necessary for tuning, such as frequency (center frequency), is written in the terrestrial system delivery descriptor. The service ID of a partial reception service (one-segment broadcasting) is written in the partial reception descriptor, and information about a TS such as allocation of a remote controller button number to the TS and the service transmission hierarchy in the TS is written in the TS information descriptor. In the area broadcast information descriptor, station information (Fig. 14) about the station 32 is written.

As the station information about the station 32 is written in the area broadcast information descriptor, the receiving terminal 33 recognizes that the TS is of a service of an area-limited broadcast, and stores the station information. Accordingly, when the receiving terminal 33 enters the broadcast area of the station, it is possible to notify the user that the station 32 can be used, in conjunction with the later described GPS function, for example.

As described above, the station information about the station 32 and the station information about a different station from the station 32 can be written in area broadcast information descriptors in an NIT.

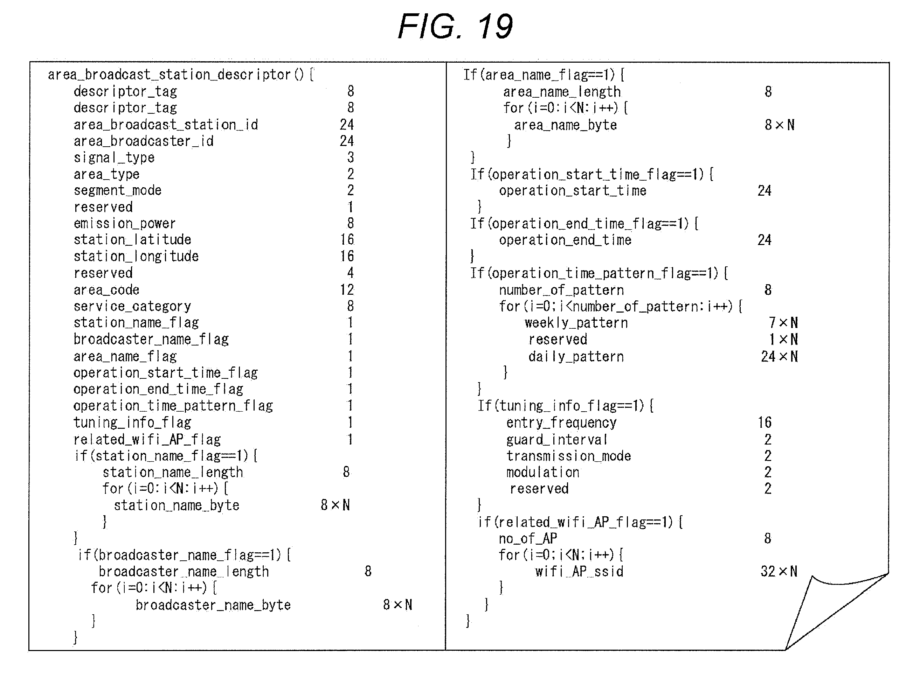

Fig. 19 is a diagram showing an example of one of the area broadcast information descriptors shown in Fig. 18.

As shown in Fig. 19, in an area broadcast information descriptor (area_broadcast_station_descriptor()), the respective items of station information (area broadcast information) (Fig. 14) are written.

The 1-bit flags "station_name_flag", "broadcaster_name_flag", "area_name_flag", "operation_start_time_flag", "operation_end_time_flag", "operation_time_pattern_flag", "tuning_info_flag", and "related_wifi_AP_flag" indicate whether there is information corresponding to the respective flags. When the value of a flag is "1", there is information about the corresponding item.

The N series of 8-bit "station_name_byte" represent a station name, and are contained in area broadcast information descriptor information when "station_name_flag" is "1".

The N series of 8-bit "broadcaster_name_byte" represent a broadcaster name, and are contained in the area broadcast information descriptor information when "broadcaster_name_flag" is "1".

The N series of 8-bit "area_name_byte" represent an area name, and are contained in area broadcast identification information when "area_name_flag" is "1".

The 24-bit "operation_start_time" and the 24-bit "operation_end_time" indicate the service start date and the service end date, respectively. The area broadcast information descriptor contains "operation_start_time" when "operation_start_time_flag" is "1", and contains "operation_end_time" when "operation_end_time_flag" is "1".

The N series of 7-bit "weekly_pattern" and the N series of 24-bit "daily_pattern" indicate weekly service patterns and daily service patterns, respectively. When "operation_time_pattern_flag" is "1", "weekly_pattern" and "daily_pattern" are contained in the area broadcast information descriptor.

The 16-bit "entry_frequency", the 2-bit "guard_interval", the 2-bit "transmission_mode", and the 2-bit "modulation" indicate the center frequency, the guard interval, the transmission mode, and the modulation method, respectively.

When "tuning_info_flag" is "1", "entry_frequency", "guard_interval", "transmission_mode", and "modulation" are contained in the area broadcast information descriptor.

The N series of 32-bit "wifi_AP_ssid" indicate the wireless IP access point identifier, and are contained in the area broadcast information descriptor when "related_wifi_AP_flag" is "1".

[Example Structure of the Station 32]

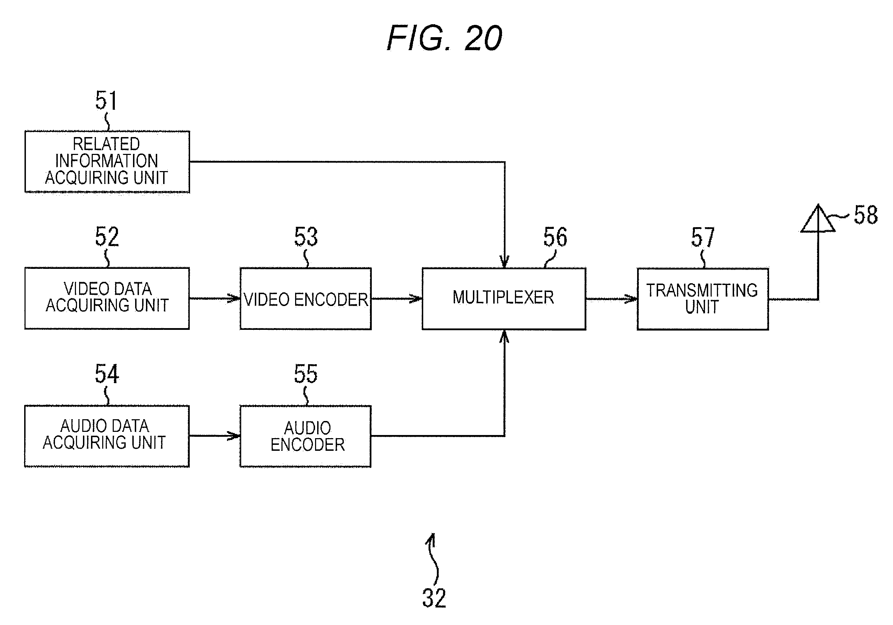

Fig. 20 is a block diagram showing a specific example structure of the station 32 shown in Fig. 4.

In Fig. 20, the station 32 includes a related information acquiring unit 51, a video data acquiring unit 52, a video encoder 53, an audio data acquiring unit 54, an audio encoder 55, a multiplexer 56, a transmitting unit 57, and an antenna 58.

The related information acquiring unit 51 acquires related information by generating the related information, such as information for receiving services, frequency information, PSI (Program Specific Information) as control information such as information for specifying packets compatible with the services, and information for performing displaying by using a browser in area-limited broadcasting (hereinafter referred to as the display control information), including a PMT, PAT, and an NIT and an SDT of area-limited broadcasting. The related information is supplied to the multiplexer 56.

When generating an NIT, the related information acquiring unit 51 acquires the station information to be included in the NIT.

Specifically, in a case where the station information about the station 32 is stored in a memory (not shown), for example, the related information acquiring unit 51 acquires the station information about the station 32 by reading the station information from the memory.

In a case where the station information about another station is included in the NIT, the related information acquiring unit 51 acquires the station information about the other station by downloading the station information from the other station via a network.

The video data acquiring unit 52 acquires video data of an area-limited broadcast from an internal HDD (Hard Disk Drive) (not shown), an external service, a camera, or the like, and supplies the video data to the video encoder 53.

The video encoder 53 encodes the video data supplied from the video data acquiring unit 52 by an encoding method such as MPEG (Moving Picture Experts Group), and supplies the encoded video data to the multiplexer 56.

The audio data acquiring unit 54 acquires audio data of the area-limited broadcast from an internal HDD (not shown), an external server, a microphone, or the like, and supplies the audio data to the audio encoder 55.

The audio encoder 55 encodes the audio data supplied from the audio data acquiring unit 54 by an encoding method such as MPEG, and supplies the encoded audio data to the multiplexer 56.

The multiplexer 56 generates a TS by multiplexing the related information from the related information acquiring unit 51, the video data from the video encoder 53, and the audio data from the audio encoder 55, and supplies the TS to the transmitting unit 57.

The transmitting unit 57 transmits the TS supplied from the multiplexer 56 through a predetermined segment via the antenna 58.

Of TSs supplied from the multiplexer 56, each TS with which an NIT containing the station information about the station 32 is multiplexed as related information is transmitted from the transmitting unit 57 through the principal segment of the station 32.

[Description of an Operation of the Station 32]

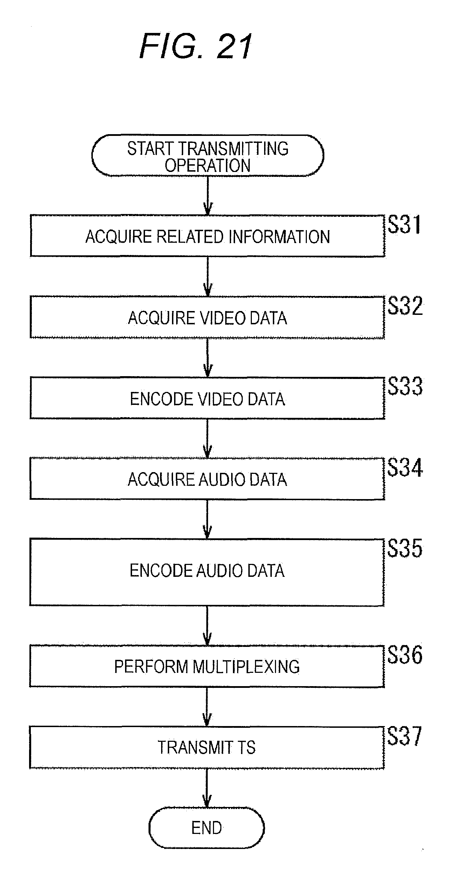

Fig. 21 is a flowchart for explaining an operation (a transmitting operation) of the station 32 shown in Fig. 20.

In step S31, the related information acquiring unit 51 acquires the station information to be transmitted from the station 32, which is the station information about the station 32 or station information about another station. The related information acquiring unit 51 also acquires related information such as area-limited broadcast PSI such as an EIT containing the station information, and display control information. The related information is supplied to the multiplexer 56.

In step S32, the video data acquiring unit 52 acquires video data of an area-limited broadcast, and supplies the video data to the video encoder 53.

In step S33, the video encoder 53 encodes the video data supplied from the video data acquiring unit 52, and supplies the encoded video data to the multiplexer 56.

In step S34, the audio data acquiring unit 54 acquires audio data of the area-limited broadcast, and supplies the audio data to the audio encoder 55.

In step S35, the audio encoder 55 encodes the audio data supplied from the audio data acquiring unit 54, and supplies the encoded audio data to the multiplexer 56.

In step S36, the multiplexer 56 generates a TS by multiplexing the related information from the related information acquiring unit 51, the video data from the video encoder 53, and the audio data from the audio encoder 55.

In step S37, the transmitting unit 57 transmits the TS supplied from the multiplexer 56 through a predetermined segment for transmitting the TS via the antenna 58. The operation then comes to an end.

[Specific Example Structure of the Receiving Terminal 33]

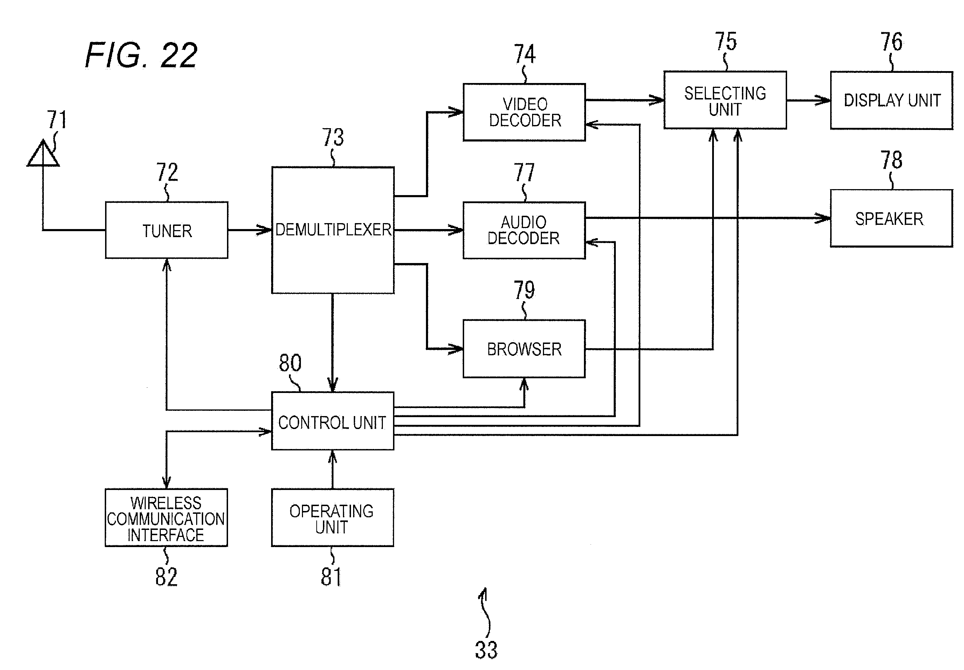

Fig. 22 is a block diagram showing a specific example structure of the receiving terminal 33 shown in Fig. 4.

In Fig. 22, the receiving terminal 33 includes an antenna 71, a tuner 72, a demultiplexer 73, a video decoder 74, a selecting unit 75, a display unit 76, an audio decoder 77, a speaker 78, a browser 79, a control unit 80, an operating unit 81, and a wireless communication interface 82.

The antenna 71 receives a broadcast wave in the UHF band from the terrestrial station 31 or the station 32, and supplies an IF (Intermediate Frequency) signal obtained as a result of the reception of the broadcast wave, to the tuner 72.

Under the control of the control unit 80, the tuner 72 selects (demodulates), from the IF signal from the antenna 71, (a signal of) a regular one-segment broadcast or an area-limited broadcast through a predetermined logical channel (segment), and supplies the resultant TS to the demultiplexer 73.

The demultiplexer 73 separates the TS supplied from the tuner 72 into video data, audio data, display control information, and the respective pieces of information in PSI and the like. The demultiplexer 73 supplies the video data to the video decoder 74, and supplies the audio data to the audio decoder 77. Also, the demultiplexer 73 supplies the display control information to the browser 79, and supplies the respective pieces of information in PSI and the like to the control unit 80.

Under the control of the control unit 80, the video decoder 74 decodes the video data supplied from the demultiplexer 73 by a method compatible with the video encoder 53 (Fig. 20), and supplies the result to the selecting unit 75.

Under the control of the control unit 80, the selecting unit 75 selects the video data supplied from the video decoder 74 or video data supplied from the browser 79, and supplies the selected video data to the display unit 76.

Under the control of the control unit 80, the selecting unit 75 also supplies video data of an image such as OSD (On Screen Display) to the display unit 76.

Based on the video data supplied from the selecting unit 75, the display unit 76 displays an image and the like of the regular one-segment broadcast or the area-limited broadcast.

Under the control of the control unit 80, the audio decoder 77 decodes the audio data supplied from the demultiplexer 73 by a method compatible with the audio encoder 55 (Fig. 20), and supplies the result to the speaker 78.

The speaker 78 outputs the sound corresponding to the audio data from the audio decoder 77, or the sound of the regular one-segment broadcast or the area-limited broadcast.

Under the control of the control unit 80, the speaker 78 can also output a predetermined sound (such as a beep).

The browser 79 interprets the display control information supplied from the demultiplexer 73, generates video data, and supplies the video data to the selecting unit 75.

In accordance with an operating signal or the like from the operating unit 81, the control unit 80 performs various kinds of operations, and controls the respective blocks forming the receiving terminal 33.

Specifically, the control unit 80 stores the frequencies of the center segments of physical channels of digital terrestrial broadcasting as preset frequencies for channel scanning, and performs tuning control to cause the tuner 72 to sequentially select (the segments of) the preset frequencies at the time of channel scanning.

Based on "NIT actual", "SDT actual", "NIT actual", "NIT other", "SDT actual", and "SDT other" of the center segment of each of the physical channels contained in the PSI supplied from the demultiplexer 73, the control unit 80 generates a tuning table, and stores the tuning table into an internal memory (not shown).

Further, in accordance with an operating signal or the like from the operating unit 81, the control unit 80 supplies a service name registered in the tuning table to the display unit 76 via the selecting unit 75, and causes the display unit 76 to display the service name.

Here, the user can see the service name displayed on the display unit 76, and control the operating unit 81 so as to select the service name of the service (logical channel) to be viewed.

In accordance with the control of the operating unit 81, the control unit 80 recognizes, from the tuning table, a frequency as the tuning information about the target service having the service name, and performs tuning control to cause the tuner 72 to select (the segment of) the frequency.

Based on the respective pieces of information in the PSI supplied from the demultiplexer 73, the control unit 80 controls the video decoder 74, the selecting unit 75, the audio decoder 77, and the browser 79. Specifically, the control unit 80 controls the video decoder 74 and the audio decoder 77 to establish synchronization between the video data output from the video decoder 74 and the audio data output from the audio decoder 77, for example.

In a case where the NIT of the PSI contains station information, the control unit 80 further acquires the station information, and stores the station information if necessary.

The control unit 80 then performs tuning control by using the station information.

Specifically, using the station information, the control unit 80 selects the stations of currently receivable area-limited broadcasts as selectable stations, and causes, via the selecting unit 75, the display unit 76 to display the station names (Fig. 14) of the selectable stations and the service names of services of area-limited broadcasts being provided by the selectable stations.

The control unit 80 also recognizes the frequency of (the services of) area-limited broadcasts of the selectable stations from the station information or the tuning table, and performs tuning control to cause the tuner 72 to select the frequency.

The operating unit 81 is controlled by the user, and supplies the operating signal corresponding to the action, to the control unit 80. The operating unit 81 includes not only physical buttons and the like, but also a button to be displayed as a GUI (Graphics User Interface) on the display unit 76.

When a wireless IP access point is detected, the wireless communication interface 82 connects to the Internet via the wireless IP access point under the control of the control unit 80. The wireless communication interface 82 exchanges information with various servers connected to the Internet.

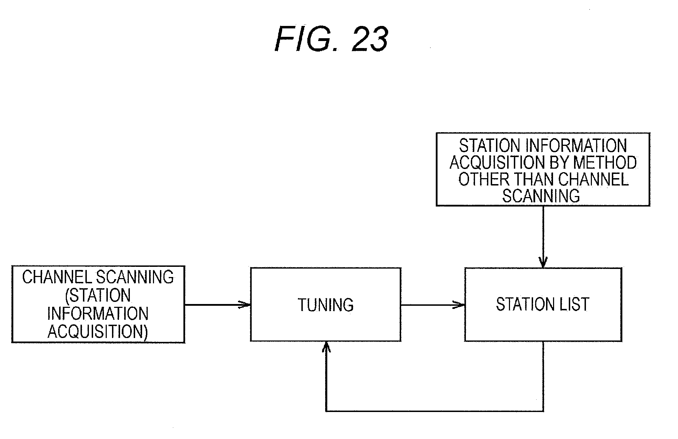

Fig. 23 is a diagram for explaining acquisition and use of station information at the receiving terminal 33 shown in Fig. 22.

As described above, in a case where the station 32 transmits station information included in an NIT, the receiving terminal 33 can acquire the station information from the NIT received at the time of channel scanning, for example.

The receiving terminal 33 can also acquire station information by a method other than channel scanning. For example, station information is stored in a non-contact medium such as a non-contact IC card (Felica (a registered trademark), for example), and the receiving terminal 33 can acquire the station information by performing proximity communication to exchange station information between the non-contact medium and the receiving terminal 33.

Alternatively, station information may be stored as a file in a special-purpose server in the Internet, and the receiving terminal 33 can acquire the station information by performing wireless communication to exchange station information between the server and the receiving terminal via a wireless LAN or the like. Further, station information may be downloaded into a personal computer from a special-purpose server in the Internet, and the receiving terminal 33 can acquire the station information by performing communication to exchange station information between the personal computer and the receiving terminal 33 via a USB (Universal Serial Bus) or the like.

In the receiving terminal 33, the control unit 80 acquires station information, and registers the station information in a station list that is a list to register (store) station information, where necessary.

The control unit 80 then performs tuning control by using the station information.

[Example Structure of the Control Unit 80]

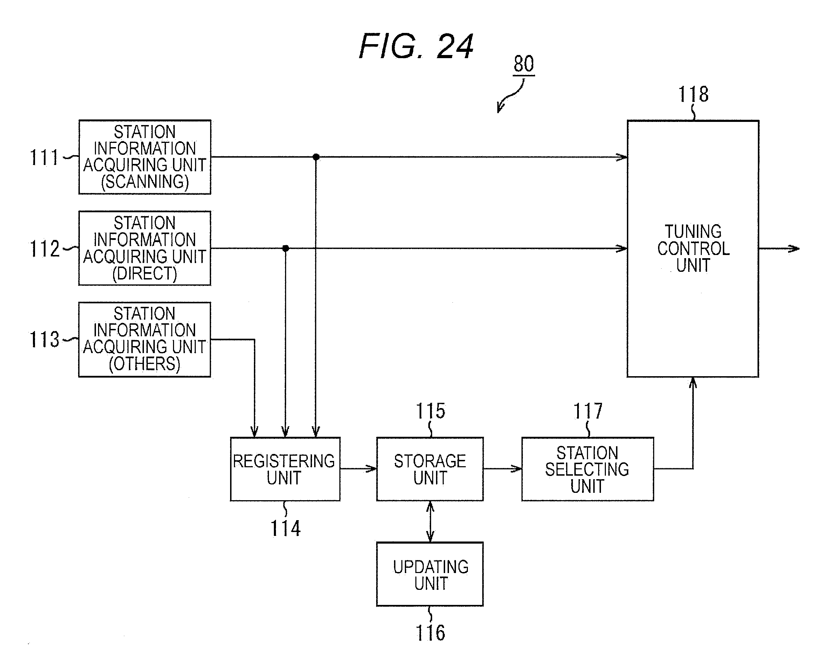

Fig. 24 is a block diagram showing an example functional structure of the portion that performs tuning control by using station information in the control unit 80 shown in Fig. 22.

In Fig. 24, the control unit 80 includes station information acquiring units 111, 112, and 113, a registering unit 114, a storage unit 115, an updating unit 116, a station selecting unit 117, and a tuning control unit 118.

The station information acquiring units 111 through 113 acquire station information.

Specifically, the station information acquiring unit 111 acquires station information from an NIT obtained by channel scanning performed by the tuner 72, and supplies the station information to the registering unit 114 and the tuning control unit 118.

In a case where the operating unit 81 is controlled so that channel scanning is performed, for example, the later described tuning control unit 118 performs tuning control to cause the tuner 72 to sequentially select the frequencies of the center segments of the respective physical channels of digital terrestrial broadcasting, the frequencies of the center segments being stored as preset frequencies.

Under the tuning control of the tuning control unit 118, the tuner 72 selects a preset frequency. In a case where an area-limited broadcast can be received at the selected preset frequency, or where a TS of an area-limited broadcast has been obtained as a result of tuning, the TS is supplied to the demultiplexer 73.

The demultiplexer 73 separates the PSI from the TS supplied from the tuner 72, and supplies the PSI to the control unit 80.

Based on the NITs and SDTs contained in the PSI that is supplied from the demultiplexer 73 at the time of channel scanning as described above, the control unit 80 creates a tuning table in which tuning information about services (area-limited broadcasts) that are receivable at that point are registered, where necessary.

In the control unit 80, the station information acquiring unit 111 acquires station information from NITs acquired at the time of channel scanning.

The station information acquiring unit 112 acquires station information by a direct method, and supplies the station information to the registering unit 114 and the tuning control unit 118.

In a case where an area-limited broadcast being provided by the station 32 is a broadcast related to an event being held in the broadcast area of the station 32, for example, posters on which the station information about the station 32 is printed in the form of a bar-code, or posters each including a wireless tag having the station information stored therein can be put up in the broadcast area of the station 32.

In this case, the station information acquiring unit 112 includes a reading device to read bar-codes or a reader/writer to perform proximity communications (non-contact communications) with wireless tags, and acquires the station information about the station 32 from the bar-code or the wireless tag of a poster when the user brings the receiving terminal 33 close to the poster to acquire the station information about the station 32.

As described above, the station information acquisition method by which only the station information about the station 32 can be acquired in the broadcast area of the certain station 32 is the direct method.

The station information acquiring unit 113 acquires station information by a method other than channel scanning and the direct method, and supplies the station information to the registering unit 114.

Specifically, in a case where an arbitrary one-segment broadcast or a regular one-segment broadcast is being received (or a TS of an arbitrary one-segment broadcast or a regular one-segment broadcast is obtained) in the tuner 72, and an NIT of the TS of the arbitrary one-segment broadcast or the regular one-segment broadcast contains station information about one or more stations, the station information acquiring unit 113 can acquire the station information.

In a case where the receiving terminal 33 has a Web browser function, and a Web server in the Internet is providing station information about one or more stations, for example, the station information acquiring unit 113 can acquire the station information by accessing the Web server.

Further, in a case where the receiving terminal 33 is connected to a PC into which station information about one or more stations is downloaded from the server providing the station information, for example, the station information acquiring unit 113 can acquire the station information from the PC.

Also, in a case where there are printed materials (such as posters, catalogs, and magazines) on which the station information about one or more stations is printed in the form of bar-codes, or printed materials each including a wireless tag having station information about one or more stations stored therein, for example, the station information acquiring unit 113 can acquire the station information from the bar-code or the wireless tag of a printed material when the user brings the receiving terminal 33 close to the printed material.

The registering unit 114 supplies and stores the station information supplied from the station information acquiring units 111 through 113 into the storage unit 115 (or registers the station information in the station list in the storage unit 115), where necessary.

Specifically, the registering unit 114 stores, into the storage unit 115, only the station information requested for registration by the user among the sets of station information supplied from the station information acquiring units 111 through 113.

If the tuning control unit 118 performs tuning control by using the station information supplied from the station information acquiring unit 111, for example, the user who has viewed an area-limited broadcast received by the tuner 72 might not wish to view the area-limited broadcast thereafter.

In that case, the station information for transmitting the area-limited broadcast is unnecessary.

If a large number of sets of station information including such unnecessary station information is stored in the storage unit 115, (the station names of) a large number of stations are displayed on the later described station list screen, and as a result, the user might find it difficult to select a desired station.

In a case where the user controls the operating unit 81 (Fig. 22) to request for registration (hereinafter also referred to as bookmarking), the registering unit 114 can store the station information into the storage unit 115.

In this manner, displaying of a large number of stations on the station list screen, and making it difficult for the user to select a desired station can be prevented.

The storage unit 115 stores the station information supplied from the registering unit 114. Specifically, the storage unit 115 stores a station list to register station information, and registers the station information supplied from the registering unit 114 in the station list.

The updating unit 116 updates the station information stored in the storage unit 115.

Specifically, as shown in Fig. 14, station information contains a service start date indicating the start date of the duration of time during which the station is conducting area-limited broadcasting, a service end date indicating the end date of the duration of time, a weekly service pattern indicating the days of the week on which the area-limited broadcast is to be conducted, and a daily service pattern indicating the hours in which the area-limited broadcast is to be conducted.

The updating unit 116 deletes, from the storage unit 115, station information that is past the expiration date of the area-limited broadcast specified by the service start date, the service end date, the weekly service pattern, and the daily service pattern in the station information stored in the storage unit 115.

Specifically, the updating unit 116 regularly checks the valid periods of area-limited broadcasts recognized from the service start dates and the like in the station information stored in the storage unit 115, for example, and deletes, from the storage unit 115, the station information that is past the expiration date with respect to the present time.

As described above, the updating unit 116 updates the station information stored in the storage unit 115, to avoid making it difficult for the user to select a desired station by displaying too many stations including stations no longer conducting area-limited broadcasting on the station list screen.

The station selecting unit 117 selects selectable stations that are stations transmitting area-limited broadcasts receivable at a predetermined location, by using the station information stored in the storage unit 115. The station information about the selectable stations is supplied to the tuning control unit 118.

The tuning control unit 118 performs tuning control to cause the tuner 72 (Fig. 22) to select an area-limited broadcast from the station corresponding to the station information supplied from the station information acquiring unit 111 or 112 or the station selecting unit 117.

Also, using the station information about selectable stations supplied from the station selecting unit 117, the tuning control unit 118 performs display control to control the selecting unit 75 so that the display unit 76 (Fig. 22) displays a station list screen showing the station names of the selectable stations or a channel list screen showing the service names of area-limited broadcasts (services) being provided by the selectable stations.

[Operation to be Performed by the Receiving Terminal 33 to Acquire Station Information]

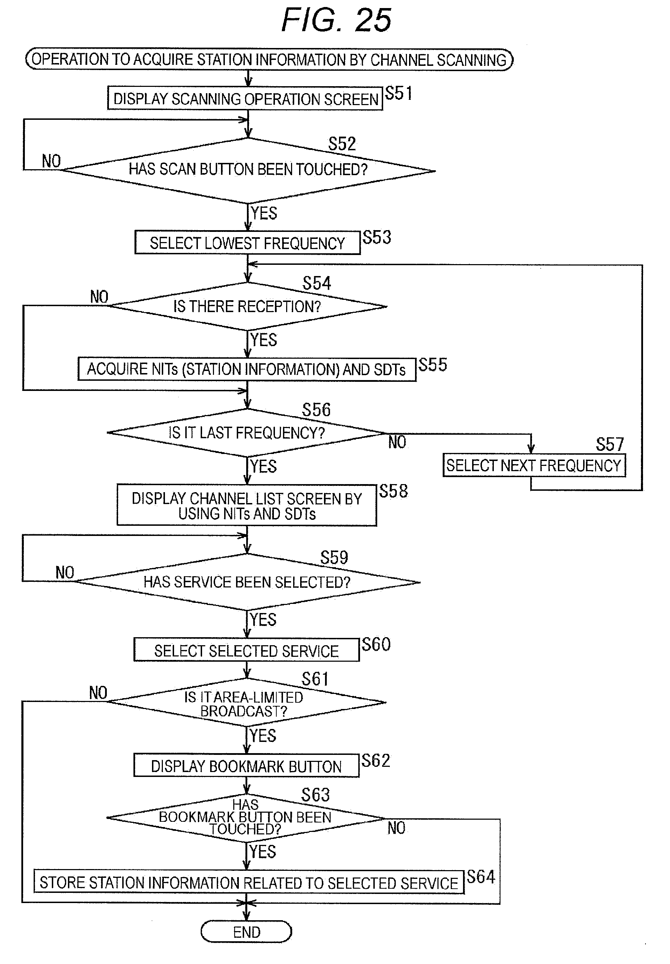

Fig. 25 is a flowchart for explaining an operation to be performed by the receiving terminal 33 shown in Fig. 22 to acquire station information by channel scanning and receive a service.

When the user controls the operating unit 81 (Fig. 22) so that a scanning operation screen as a channel scanning menu screen is displayed, for example, the tuning control unit 118 (Fig. 24) in step S51 controls the selecting unit 75 (Fig. 22) to cause the display unit 76 (Fig. 22) to display the scanning operating screen, and the operation then moves on to step S52.

In step S52, the tuning control unit 118 determines whether the scan button of the scanning operation screen has been touched.

Specifically, a scan button to be touched when channel scanning is to be performed is formed in the scanning operation screen, and, in step S52, a check is made to determine whether the scan button has been touched.

If it is determined in step S52 that the scan button has not been touched, the operation returns to step S52.

If it is determined in step S52 that the scan button has been touched, the operation moves on to step S53. In steps S53 through S57, channel scanning is performed, and NITs, SDTs, and station information are acquired.

Specifically, in step S53, the tuning control unit 118 selects a target frequency that is the lowest frequency among the frequencies (preset frequencies) of the center segments of physical channels of digital terrestrial broadcasting, for example, and performs tuning control to cause the tuner 72 to select the target frequency.

The operation then moves from step S53 on to step S54, and the tuning control unit 118 determines whether a service has been received at the target frequency, or whether a TS has been acquired by the tuner 72 as a result of tuning.

If it is determined in step S54 that a service cannot be received at the target frequency, the operation skips step S55, and moves on to step S56.

If it is determined in step S54 that a service has been received at the target frequency, the operation moves on to step S55, and the control unit 80 acquires NITs and SDTs, and further acquires station information if possible.

Specifically, under the tuning control of the tuning control unit 118, the tuner 72 selects the target frequency. If a TS has been acquired as a result of the tuning, the tuner 72 supplies the TS to the demultiplexer 73. The demultiplexer 73 separates the PSI from the TS supplied from the tuner 72, and supplies the PSI to the control unit 80.

The control unit 80 acquires the NITs and SDTs contained in the PSI that is supplied from the demultiplexer 73 as described above, and creates a tuning table in which tuning information about services (area-limited broadcasts or regular one-segment broadcasts) that are receivable at that point are registered, where necessary.

Further, in a case where the NITs obtained from the PSI supplied from the demultiplexer 73 contains station information, the station information acquiring unit 111 in the control unit 80 acquires the station information from the NITs.

Here, the frequency (the center frequency) at which area-limited broadcasting is being conducted by the station corresponding to the station information acquired from the NITs can be recognized from the NITs in which the station information is contained. For ease of explanation, however, the center frequency is included in the station information in this example.

After acquiring the station information as well as the NITs and the SDTs in the above described manner, the station information acquiring unit 111 in step S55 supplies the NITs, the SDTs, and the station information to the tuning control unit 118, and supplies the station information to the registering unit 114. The operation then moves onto step S56.

In step S56, the tuning control unit 118 determines whether the target frequency is the last frequency among the preset frequencies, or, in this case, whether the target frequency is the highest frequency.

If the target frequency is determined not to be the last frequency among the preset frequencies in step S56, the operation moves on to step S57, and the tuning control unit 118 selects a new target frequency that is the second highest frequency after the current target frequency among the preset frequencies.

Further, in step S57, the tuning control unit 118 performs tuning control to cause the tuner 72 to select the target frequency, and the operation then returns to step S54.

If the target frequency is determined to be the last frequency among the preset frequencies in step S56, the operation moves on to step S58.

In the tuning control on the tuner 72 by the tuning control unit 118 in steps S53 through S57, the tuner 72 can be controlled to not only select the frequencies (preset frequencies) of the center segments of respective physical channels of digital terrestrial broadcasting but also sequentially select the frequencies of the respective segments of each physical channel.

In step S58, the tuning control unit 118 creates a channel list screen showing the service names of all (or some) of the services recognized from the NITs and the SDTs that are obtained by channel scanning and are supplied from the station information acquiring unit 111, and causes the display unit 76 to display the channel list screen via the selecting unit 75.

The operation then moves from step S58 on to step S59, and the tuning control unit 118 determines whether the operating unit 81 has been controlled so as to select one of the service names (logical channels) displayed on the channel list screen.

If it is determined in step S59 that the operating unit 81 has not been controlled so as to select one of the service names displayed on the channel list screen, the operation returns to step S59.

If it is determined in step S59 that the operating unit 81 has been controlled so as to select one of the service names displayed on the channel list screen, the operation moves on to step S60, and the tuning control unit 118 performs tuning control to select a selected service (logical channel) that is the service with the service name selected by controlling the operating unit 81.

Specifically, the tuning control unit 118 recognizes the frequency (at which a one-segment broadcast of the selected service is being transmitted) of the selected service from the NIT of the selected service (or the already created tuning table, if possible).

The tuning control unit 118 then controls the tuner 72 (Fig. 22) to select the frequency of the selected service.

Under the tuning control of the tuning control unit 118, the tuner 72 selects the selected service. In a case where the one-segment broadcast can be received, or in a case where a TS of the one-segment broadcast has been obtained as a result of tuning, the TS is supplied to the demultiplexer 73 (Fig. 22).

The demultiplexer 73 separates the video data, audio data, and display control information of the one-segment broadcast from the TS supplied from the tuner 72, and supplies the data and information to the video decoder 74, the audio decoder 77, and the browser 79.

As a result, the image of the selected service is displayed on the display unit 76, and the sound of the selected service is output from the speaker 78. Accordingly, the user can view the selected service.

The operation then moves from step S60 on to step S61, and the tuning control unit 118 determines whether the selected service is a service of an area-limited broadcast among one-segment broadcasts.

Here, based on whether the NIT of the selected service contains station information, for example, a check can be made to determine whether the selected service is a service of an area-limited broadcast among one-segment broadcasts.

If the selected service is determined not to be a service of an area-limited broadcast in step S61, or in a case where the NIT of the selected service does not contain station information and the selected service is a service of a regular one-segment broadcast, the operation skips steps S62 through S64, and comes to an end.

If the selected service is determined to be a service of an area-limited broadcast in step S61, or in a case where the NIT of the selected service contains station information, on the other hand, the operation moves on to step S62, and the tuning control unit 118 causes, via the selecting unit 75, the display unit 76 to display a bookmark button superimposed on the image of the selected service. The bookmark button is to be touched when registration of station information is requested.

The operation then moves from step S62 on to step S63, and the registering unit 114 determines whether the user has performed bookmarking by touching the bookmark button.

If it is determined in step S63 that bookmarking has been performed, the operation moves on to step S64, and the registering unit 114 registers, in the station list in the storage unit 115, the station information about the station transmitting the area-limited broadcast of the selected service among the sets of station information supplied from the station information acquiring unit 111. The operation then comes to an end.

When station information is registered in the station list, fixed stations are distinguished from mobile stations by using the area types (Fig. 14) included in the station information, and the station information about the fixed stations and the station information about the mobile stations can be registered separately in the station list.

If it is determined in step S63 that bookmarking has not been performed, the operation skips step S64, and comes to an end.

Accordingly, the station information about the station transmitting the area-limited broadcast of the selected service, which has been acquired by the station information acquiring unit 111, is registered in the station list in the storage unit 115 only when bookmarking is performed.

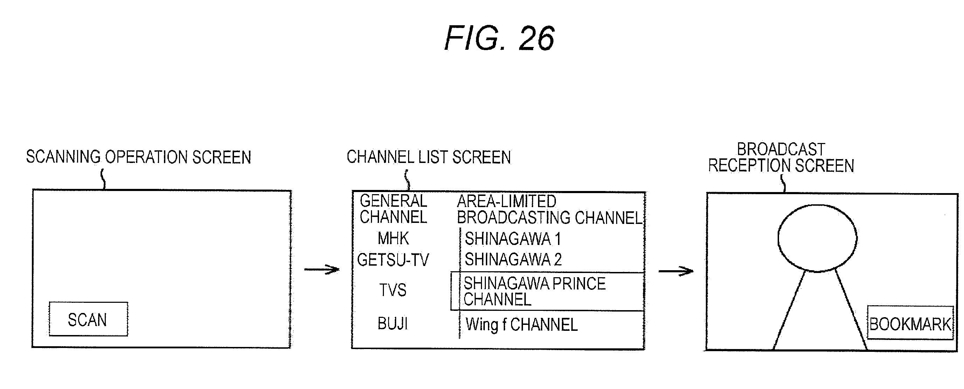

Fig. 26 is a diagram showing an example display on the display unit 76 in a case where the receiving terminal 33 shown in Fig. 22 acquires station information by channel scanning and receives a service.

As described above with reference to Fig. 25, when the user controls the operating unit 81 (Fig. 22) so that the scanning operation screen is displayed, the scanning operation screen including the scan button is displayed on the display unit 76 in the receiving terminal 33, as shown in Fig. 26.

When the user touches the scan button in the scanning operation screen displayed on the display unit 76, channel scanning is performed in the receiving terminal 33, and NITs and SDTs are acquired.

In the receiving terminal 33, the station information acquiring unit 111 acquires station information from NITs acquired at the time of channel scanning.

Further, in the receiving terminal 33, the tuning control unit 118 generates a channel list screen showing the service names of services of one-segment broadcasts from the NITs and SDTs acquired by channel scanning, and causes the display unit 76 to display the channel list screen.

In Fig. 26, the service names of regular one-segment broadcast services (general channels) and the service names of area-limited broadcast services (area-limited broadcasting channels) are displayed separately on the channel list screen.

When the user selects one of the service names (logical channels) displayed on the channel list screen, the tuner 72 in the receiving terminal 33 selects the service having the service name as the selected service.

In the receiving terminal 33, as a result of tuning performed by the tuner 72, a broadcast reception screen showing the image of the selected service having its TS received is displayed on the display unit 76.

In a case where the selected service is a service of an area-limited broadcast, the broadcast reception screen further displays a bookmark button. When the bookmark button is touched, the registering unit 114 in the receiving terminal 33 registers, in the station list in the storage unit 115, the station information about the station transmitting the area-limited broadcast of the selected service among the sets of station information acquired by the station information acquiring unit 111.

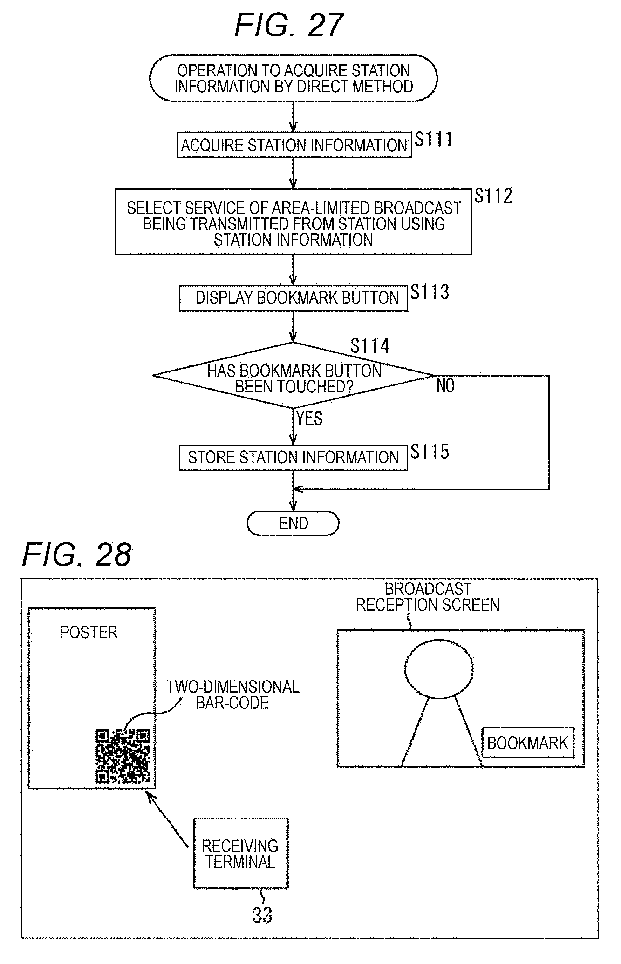

Fig. 27 is a flowchart for explaining an operation to be performed by the receiving terminal 33 shown in Fig. 22 to acquire station information by the direct method and receive a service.

For example, when the user controls the operating unit 81 so as to acquire station information by the direct method, and brings the receiving terminal 33 close to a bar-code on a poster having the station information of a predetermined station printed in the form of the bar-code, the station information acquiring unit 112 (Fig. 24) in step S111 acquires station information by reading the bar-code, and supplies the station information to the registering unit 114 and the tuning control unit 118. The operation then moves on to step S112.

In step S112, the tuning control unit 118 performs tuning control to select the service of an area-limited broadcast being provided at the center frequency of the station information supplied from the station information acquiring unit 112.

Specifically, the tuning control unit 118 controls the tuner 72 (Fig. 22) to select the center frequency of the station information supplied from the station information acquiring unit 112.

Under the tuning control of the tuning control unit 118, the tuner 72 selects the center frequency. In a case where an area-limited broadcast can be received at the center frequency, or where a TS of an area-limited broadcast has been obtained as a result of tuning, the TS is supplied to the demultiplexer 73.

The demultiplexer 73 separates the video data, audio data, and display control information of the area-limited broadcast from the TS supplied from the tuner 72, and supplies the data and information to the video decoder 74, the audio decoder 77, and the browser 79.

As a result, the display unit 76 displays the image of the service of the area-limited broadcast being provided at the center frequency of the station information acquired by the station information acquiring unit 112 (hereinafter also referred to as the directly-acquired service), and the speaker 78 outputs the sound of the directly-acquired service. Thus, the user can view the directly-acquired service.

The operation then moves from step S112 on to step S113, and the tuning control unit 118 causes, via the selecting unit 75, the display unit 76 to display a bookmark button superimposed on the image of the directly-acquired service, as in the case illustrated in Figs. 25 and 26. The operation then moves on to step S114.

In step S114, the registering unit 114 determines whether bookmarking has been performed by touching the bookmark button.

If it is determined in step S114 that bookmarking has been performed, the operation moves on to step S115, and the registering unit 114 registers, in the station list in the storage unit 115, the station information supplied from the station information acquiring unit 112, or the station information about the station transmitting the area-limited broadcast of the directly-acquired service. The operation then comes to an end.

If it is determined in step S114 that bookmarking has not been performed, the operation skips step S115, and comes to an end.

Accordingly, the station information acquired by the station information acquiring unit 112 is registered in the station list in the storage unit 115 only when bookmarking is performed.

Fig. 28 is a diagram showing an example display on the display unit 76 in a case where the receiving terminal 33 shown in Fig. 22 acquires station information by the direct method and receives a service.

When the user controls the operating unit 81 so as to acquire station information by the direct method, and brings the receiving terminal 33 close to a bar-code on a poster having the station information of a predetermined station printed in the form of the bar-code, for example, the station information acquiring unit 112 (Fig. 24) in the receiving terminal 33 acquires station information by reading the bar-code, and supplies the station information to the registering unit 114 and the tuning control unit 118.

The tuning control unit 118 performs tuning control to select a service (a directly-acquired service) of an area-limited broadcast being provided at the center frequency of the station information supplied from the station information acquiring unit 112. Under the control of the tuning control unit 118, the tuner 72 selects the directly-acquired service.

In the receiving terminal 33, as a result of tuning performed by the tuner 72, a broadcast reception screen showing the image of the directly-acquired service having its TS received is displayed on the display unit 76.

The broadcast reception screen further displays a bookmark button. When the bookmark button is touched, the registering unit 114 in the receiving terminal 33 registers, in the station list in the storage unit 115, the station information acquired by the station information acquiring unit 112 (the station information about the station transmitting the area-limited broadcast of the directly-acquired service).

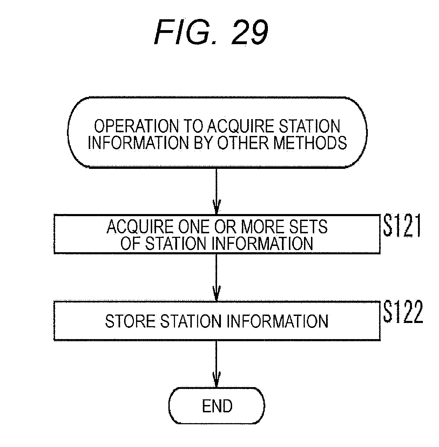

Fig. 29 is a flowchart for explaining an operation to be performed by the receiving terminal 33 shown in Fig. 22 to acquire station information by some other method.

In step S121, the station information acquiring unit 113 (Fig. 24) acquires station information by some other method as described above with reference to Fig. 24, and supplies the station information to the registering unit 114. The operation then moves on to step S122.

In step S122, the registering unit 114 registers all the station information from the station information acquiring unit 113 in the station list in the storage unit 115. The operation then comes to an end.

Accordingly, all the station information acquired by the station information acquiring unit 113 is registered in the station list in the storage unit 115.

However, of the station information acquired by the station information acquiring unit 113, only station information requested for registration by the user can be registered in the station list in the storage unit 115, as in the case of the station information acquired by the station information acquiring units 111 and 112.

[Tuning Operation Using Station Information]

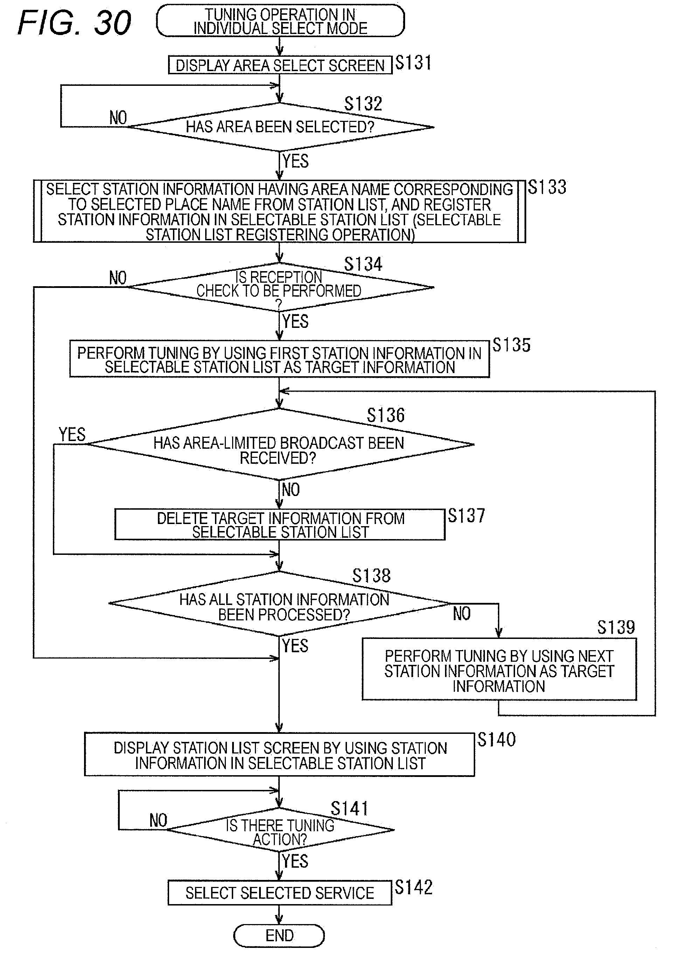

Fig. 30 is a flowchart for explaining a tuning operation to be performed by the receiving terminal 33 to perform tuning by using station information.

Here, tuning operation modes include an individual select mode, a sequential select mode, a map display mode, and a GPS mode, and the flowchart in Fig. 30 shows a tuning operation in the individual select mode.

The mode for a tuning operation can be selected by the user controlling the operating unit 81, for example.

In step S131, the tuning control unit 118 generates an area select screen, and causes the display unit 76 to display the area select screen.

Specifically, the station selecting unit 117 sequentially selects the station information registered in the station list in the storage unit 115 as target station information, and selects the area name (Fig. 14) in the target station information as a display place name to be displayed on the area select screen.

The station selecting unit 117 does not select, as a display place name, the same area name as an area name already selected as a display place name.

After selecting display place names from target station information that is all the station information registered in the station list in the storage unit 115, the station selecting unit 117 supplies a list of the display place names to the tuning control unit 118.

The tuning control unit 118 generates an area select screen showing the list of the display place names supplied from the station selecting unit 117, and causes the display unit 76 to display the area select screen.

After the area select screen is displayed in step S131, the operation moves on to step S132, and the station selecting unit 117 determines whether an area name as one of the display place names to be displayed on the area select screen has been selected by the user controlling the operating unit 81.

In a case where a large number of display place names are displayed on the area select screen at this point, the user might find it difficult to select a desired display place name.

In view of this, a restriction can be put on the display place names to be displayed on the area select screen.

Specifically, in a case where the station selecting unit 117 has a function to acquire the present location, such as a GPS, the station selecting unit 117 supplies only the display place names of areas close to the present location to the tuning control unit 118, so that the display place names to be displayed on the area select screen can be restricted to the display place names of areas close to the present location.

If it is determined in step S132 that any of the display place names displayed on the area select screen has not been selected, the operation returns to step S132.

If it is determined in step S132 that one of the display place names displayed on the area select screen has been selected, on the other hand, the operation moves on to step S133, and the station selecting unit 117 sets the display place name selected from the area select screen as the selected place name, and selects the station information having the area name corresponding to the selected place name from the station information registered in the station list in the storage unit 115. Here, station information is selected by using the system type, the segment operation mode, the service start date, and the like, as well as the area name.

Further, the station selecting unit 117 registers, in a selectable station list to register the station information about selectable stations, the station information selected from the station information registered in the station list in the storage unit 115, and supplies the selectable station list to the tuning control unit 118. The operation then moves on to step S134.

The selectable station list registering operation will be described later in detail.

In step S134, the tuning control unit 118 determines whether to perform a check of reception of a station having its station information registered in the selectable station list supplied from the station selecting unit 117, or a check of reception of (an area-limited broadcast transmitted from) a selectable station.

Here, a check of reception of a selectable station is a check to determine whether a TS of an area-limited broadcast (service) being provided by a selectable station can be obtained when the area-limited broadcast is actually received or when the area-limited broadcast being provided by the selectable station is selected.

Whether to perform a reception check can be set by controlling the operating unit 81, for example.

If it is determined in step S134 that a reception check is not to be performed, the operation skips steps S135 through S139, and moves on to step S140, without a reception check.

If it is determined in step S134 that a reception check is to be performed, the operation moves on to step S135, and a reception check is performed in steps S135 through S139.

Specifically, in step S135, the tuning control unit 118 selects target station information (hereinafter also referred to as target information) that is the first station information in the selectable station list from the station selecting unit 117.

Further, in step S135, using the target station information, the tuning control unit 118 performs tuning control to cause the tuner 72 to select a service of an area-limited broadcast being provided at the center frequency of the target station information.

The operation then moves from step S135 on to step S136, and the tuning control unit 118 determines whether a service of an area-limited broadcast being provided at the center frequency of the target station information has been received, or whether a TS has been acquired by the tuner 72 as a result of tuning.

If it is determined in step S136 that a service of an area-limited broadcast being provided at the center frequency of the target station information has not been received, the operation moves on to step S137, and the tuning control unit 118 deletes the target station information from the selectable station list. The operation then moves on to step S138.

Specifically, in a case where the present location is in the broadcast area of the target station corresponding to the target station information, but the TS of a service of an area-limited broadcast being provided by the target station cannot be received for the reason that there is an obstacle such as a building between the target station and the present location, or that the present location is too far from the target station, for example, the tuning control unit 118 excludes the target station from the selectable stations by deleting the target station information from the selectable station list.

If it is determined in step S136 that a service of an area-limited broadcast being provided at the center frequency of the target station information has been received, on the other hand, the operation skips step S137 and moves on to step S138, and the tuning control unit 118 determines whether all the sets of station information in the selectable station list have been selected as target station information.

If it is determined in step S138 that there is station information yet to be selected as target station information among the sets of station information in the selectable station list, the operation moves on to step S139, and the tuning control unit 118 selects new target station information that is the next station information after the current target station information among the sets of station information in the selectable station list.

Further, in step S139, using the target station information, the tuning control unit 118 performs tuning control to cause the tuner 72 to select a service of an area-limited broadcast being provided at the center frequency of the target station information. The operation then returns to step S136.

If it is determined in step S138 that all the sets of station information in the selectable station list have been selected as target station information, or in a case where a reception check has been performed on all the sets of station information in the selectable station list, the operation moves on to step S140, and the tuning control unit 118 generates a station list screen and causes the display unit 76 to display the station list screen.

Specifically, in step S140, the tuning control unit 118 recognizes the station names (Fig. 14) of selectable stations from the station information in the selectable station list.

The tuning control unit 118 then generates a station list screen that is a list displaying a list of the station names of selectable stations, and causes the display unit 76 to display the station list screen. The operation then moves from step S140 on to step S141.

In step S141, the tuning control unit 118 determines whether the user has made a tuning action. If it is determined that the user has not made a tuning action, the operation returns to step S141.

Here, a tuning action is an action to select a station and select a service of an area-limited broadcast being provided by the station.

Specifically, by controlling the operating unit 81, the user can select the station name of a desired station (a selectable station) from the station names displayed on the station list screen.

When the user selects one of the station names displayed on the station list screen, the tuning control unit 118 recognizes the frequency and the service name of each of one or more services of area-limited broadcasts being provided by the selected station (a selectable station) having its station name selected by the user, from the NITs and SDTs transmitted through the segment (the principal segment) of the center frequency (Fig. 14) of the station information about the selected station (or from an already created tuning table, if possible).

Further, the tuning control unit 118 generates a channel list screen showing the service name of each of one or more services of area-limited broadcasts being provided by the selected station, and causes the display unit 76 to display the channel list screen.

By controlling the operating unit 81, the user can select the service name of a desired service from the service names displayed on the channel list screen.

When the user selects one of the service names displayed on the channel list screen, the tuning control unit 118 performs tuning control to cause the tuner 72 to select a selected service (a logical channel) (a segment) that is the service having the service name selected by the user.

As a result, the image of the selected service is displayed on the display unit 76, and the sound of the selected service is output from the speaker 78, for example, as described above with reference to step S60 of Fig. 25.

In step S141, a check is made to determine whether a tuning action has been made to select the station name of the selected station from the station names displayed on the station list screen, and the service name of the selected service from the service names that are displayed on the channel list screen and are of the services of area-limited broadcasts being provided by the selected station.

If it is determined in step S141 that a tuning action has been made, or in a case where one station has been selected as a selected station from the station list screen, and one service has been selected as a selected service from the channel list screen showing the service name of each of one or more services of area-limited broadcasts being provided by the selected station, the operation moves on to step S142, and the tuning control unit 118 performs tuning control to cause the tuner 72 to select the selected service. The tuning operation in the individual select mode then comes to an end.

As described above, in the receiving terminal 33, the station information acquiring units 111 through 113 acquire station information, and the storage unit 115 stores the station information.

Further, using the area names contained in the station information stored in the storage unit 115, the station selecting unit 117 selects a selectable station that is a station having the area name corresponding to a display place name selected by the user, or a station transmitting an area-limited broadcast receivable at the location with the display place name selected by the user. The station name is registered in the selectable station list.

At the tuning control unit 118, the station list screen showing the station names registered in the selectable station list is displayed as the information about selectable stations, and tuning control is performed to select a service (a selected service) of an area-limited broadcast being provided by a selectable station selected by the user from the station list screen and the channel list screen.

Accordingly, in the receiving terminal 33 after the acquisition of station information, area-limited broadcasts (services) receivable at the location with the display place name selected by the user can be promptly presented in the form of the station list screen and the channel list screen.

When a reception check is not to be performed, a service of an area-limited broadcast being provided by a selectable station selected by the user from the station list screen and the channel list screen might not be received.

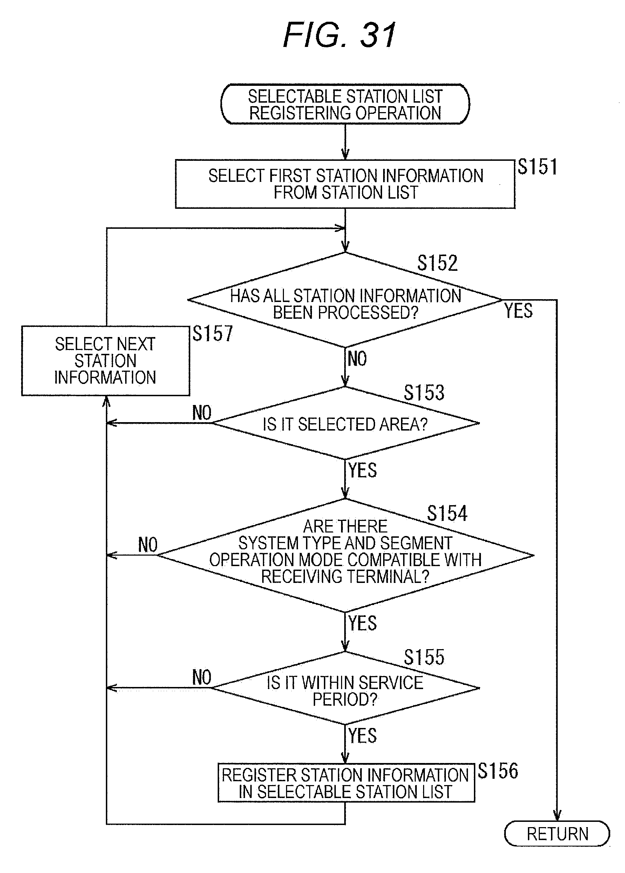

Fig. 31 is a flowchart for explaining the selectable station list registering operation to be performed in step S133 of Fig. 30.

In the selectable station list registering operation shown in Fig. 31, the station selecting unit 117 in step S151 selects the first station information from the station information registered in the station list in the storage unit 115.

In step S152, the station selecting unit 117 determines whether all the station information has been processed. If it is determined in step S152 that not all the station information has been processed, the operation moves on to step S153.

In step S153, the station selecting unit 117 determines whether the area name contained in the selected information is the same as a display place name (a selected place name) selected from the area select screen. If the area name is determined to be the same as the selected place name in step S153, the operation moves on to step S154. On the other hand, if the area name is determined not to be the same as the selected place name, the operation moves from step S153 on to step S157.

In step S154, the station selecting unit 117 determines whether the receiving terminal 33 is compatible with the system type and the segment operation mode contained in the selected station information. In this determining procedure, a check is made to determine whether the receiving terminal 33 is compatible with one of the above described system types 0 through 3 (Fig. 14) and one of the segment operation modes 1 through 3 (Fig. 14), for example. If the receiving terminal 33 is determined to be compatible in step S154, the operation moves on to step S155. On the other hand, if the receiving terminal 33 is determined not to be compatible with any of the system types and any of the segment operation modes, the operation moves from step S154 on to step S157.

In step S155, the station selecting unit 117 determines whether the current time is within the service period of the area-limited broadcast. The service period is specified by the service start date, the service end date, the weekly service pattern, and the daily service pattern in the selected station information, as described above with reference to Fig. 17. If the current time is determined to be within the service period in step S155, the operation moves on to step S156. On the other hand, if the current time is determined not to be within the service period of the area-limited broadcast, the operation moves from step S155 on to step S157.

In step S156, the station selecting unit 117 registers the selected station information in the selectable station list storing the station information about selectable stations, and supplies the selectable station list to the tuning control unit 118. The operation then moves on to step S157. Specifically, station information to be registered in the selectable station list not only contains an area name corresponding to a selected place name, but also contains a system type and the like compatible with the receiving terminal 33 and a service period including the current time.

In step S157, the station selecting unit 117 selects the next station information from the station information registered in the station list in the storage unit 115.

The operation then returns from step S157 to step S152, and thereafter, the same procedures as above are repeated. Specifically, station information to be registered in the selectable station list among all the sets of station information not only contains an area name corresponding to a selected place name, but also contains a system type and the like compatible with the receiving terminal 33 and a service period including the current time.

If it is determined in step S152 that all the station information has been processed, the selectable station list registering operation comes to an end, and the operation returns to the tuning operation.

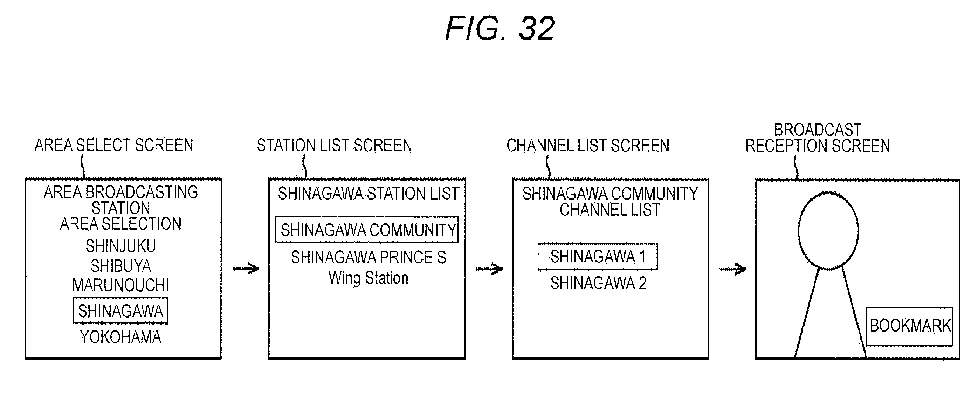

Fig. 32 is a diagram showing an example display on the display unit 76 in a case where a tuning operation in the individual select mode is performed in the receiving terminal 33 shown in Fig. 22.

As described above with reference to Fig. 30, in the individual select mode, the area select screen showing the area names in the station information as display place names is displayed on the display unit 76.

When the user selects one of the display place names displayed on the area select screen, the stations corresponding to the station information having the same area name as the display place name selected from the area select screen among the sets of station information registered in the station list in the storage unit 115 are set as selectable stations, and a station list screen showing the station names of the selectable stations is displayed on the display unit 76.

In Fig. 32, the display place names "Shinjuku", "Shibuya", "Marunouchi", "Shinagawa", and "Yokohama" are displayed on the area select screen, and "Shinagawa" is selected among those display place names.

Further, in Fig. 32, the stations having "Shinagawa" as the area name in station information are the three stations: "Shinagawa Community", "Shinagawa Prince S", and "Wing Station" in station name. The station list screen shows the station names "Shinagawa Community", "Shinagawa Prince S", and "Wing Station".

When the user selects one of the station names displayed on the station list screen, a channel list screen showing the service name of each of one or more services of area-limited broadcasts being provided by the selected station that is the station (a selectable station) having its station name selected by the user is displayed on the display unit 76.

In Fig. 32, the station name "Shinagawa Community" is selected.

Under the station name "Shinagawa Community", area-limited broadcasts of two services having the service names "Shinagawa 1" and "Shinagawa 2" are transmitted, and the channel list screen shows the service names "Shinagawa 1" and "Shinagawa 2".

When the user selects the service name of a desired service from the service names displayed on the channel list screen, the tuner 72 receives the selected service having its service name selected, and a broadcast reception screen showing the image of the selected service is displayed on the display unit 76.

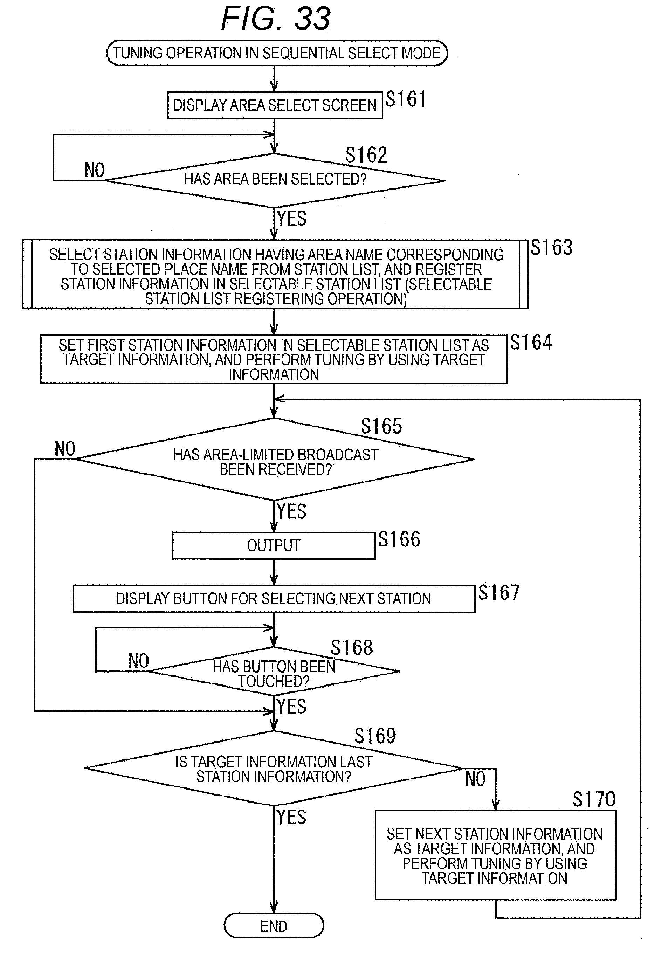

Fig. 33 is a flowchart for explaining a tuning operation in the sequential select mode among tuning operations to be performed by the receiving terminal 33 to perform tuning by using station information.

In the tuning operation in the sequential select mode, in steps S161 through S163, the same procedures as those of steps S131 through S133 of Fig. 30 are carried out.

Specifically, when the area select screen is displayed on the display unit 76, and the user selects an area name that is one of the display place names displayed on the area select screen, the station information containing the same area name as a selected place name that is the display place name selected from the area select screen is selected as the station information about selectable stations from the station information registered in the station list in the storage unit 115, and is registered in the selectable station list.

In step S164, the tuning control unit 118 selects target station information that is the first station information in the selectable station list.

Further, in step S164, using the target station information, the tuning control unit 118 performs tuning control to cause the tuner 72 to select a service of an area-limited broadcast being provided at the center frequency of the target station information. The operation then moves on to step S165.

In step S165, the tuning control unit 118 determines whether a service of an area-limited broadcast being provided at the center frequency of the target station information has been received, or whether a TS has been acquired by the tuner 72 as a result of tuning.

If it is determined in step S165 that a service of an area-limited broadcast being provided at the center frequency of the target station information has not been received, the operation skips steps S166 through S168, and moves on to step S169.

If it is determined in step S165 that a service of an area-limited broadcast being provided at the center frequency of the target station information has been received, the operation moves on to step S166, and the tuning control unit 118 causes the display unit 76 and the speaker 78 to output the service of the area-limited broadcast being provided at the center frequency of the target station information.

Specifically, the tuning control unit 118 causes the display unit 76 to display the image of the service having its TS acquired by the tuner 72, and causes the speaker 78 to output the sound of the service.

The operation then moves from step S166 on to step S167, and the tuning control unit 118 causes the display unit 76 to display the area of the service of the area-limited broadcast being provided at the center frequency of the target station information, and a "Next Ch" button for selecting a service of an area-limited broadcast being provided by the station corresponding to the next station information in the selectable station list. The operation then moves on to step S168.

In step S168, the tuning control unit 118 determines whether the "Next Ch" button has been touched. If it is determined that the "Next Ch" button has not been touched, the operation returns to step S168.

If it is determined in step S168 that the "Next Ch" button has been touched, the operation moves on to step S169, and the tuning control unit 118 determines whether all the sets of station information in the selectable station list have been selected as target station information.

If it is determined in step S169 that there is station information yet to be selected as target station information among the sets of station information in the selectable station list, the operation moves on to step S170, and the tuning control unit 118 selects new target station information that is the next station information after the current target station information among the sets of station information in the selectable station list.

Further, in step S170, using the target station information, the tuning control unit 118 performs tuning control to cause the tuner 72 to select a service of an area-limited broadcast being provided at the center frequency of the target station information. The operation then returns to step S165.

If it is determined in step S169 that all the sets of station information in the selectable station list have been selected as target station information, the tuning operation in the sequential select mode comes to an end.

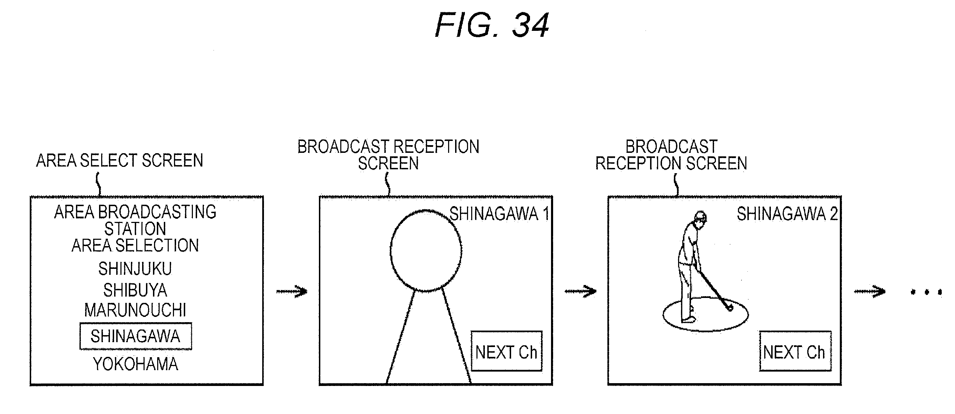

Fig. 34 is a diagram showing an example display on the display unit 76 in a case where a tuning operation in the sequential select mode is performed in the receiving terminal 33 shown in Fig. 22.

As described above with reference to Fig. 33, in the sequential select mode, the area select screen showing the area names in the station information as display place names is displayed on the display unit 76.

When the user selects one of the display place names displayed on the area select screen, the stations corresponding to the station information having the same area name as the display place name selected from the area select screen among the sets of station information registered in the station list in the storage unit 115 are set as selectable stations, and the station information about the selectable stations is registered in the selectable station list.

The first station information in the selectable station list is then selected as target station information, and a service of an area-limited broadcast being provided at the center frequency of the target station information is selected.

In a case where a TS of a service of an area-limited broadcast being provided at the center frequency of the target station information has been obtained as a result of the tuning, a broadcast reception screen showing the image of the service is displayed on the display unit 76, and the sound of the service is output from the speaker 78.

Further, the "Next Ch" button is displayed on the broadcast reception screen.

When the user touches the "Next Ch" button, the next station information after the current target station information among the sets of station information in the selectable station list is selected as new target station information, and a service of an area-limited broadcast being provided at the center frequency of the target station information is selected.

In a case where a TS of a service of an area-limited broadcast being provided at the center frequency of the target station information has been obtained as a result of the tuning, a broadcast reception screen showing the image of the service is displayed on the display unit 76, and the sound of the service is output from the speaker 78.

As in the above described case, the "Next Ch" button is displayed on the broadcast reception screen. Thereafter, every time the "Next Ch" button is touched, a service of an area-limited broadcast being provided by a selectable station having station information registered in the selectable station list is sequentially selected in the same manner as above.

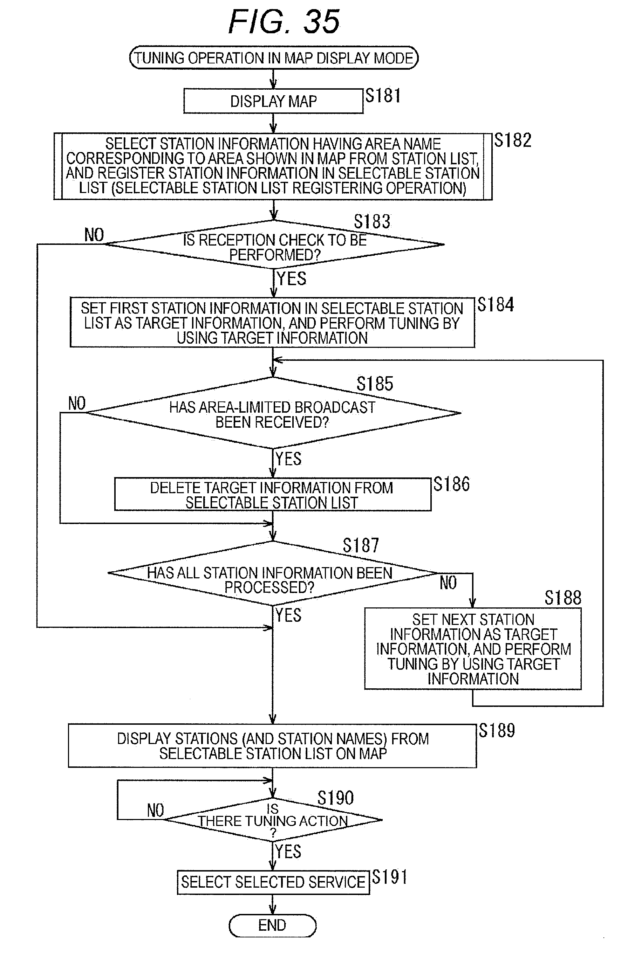

Fig. 35 is a flowchart for explaining a tuning operation in the map display mode among tuning operations to be performed by the receiving terminal 33 to perform tuning by using station information.

In step S181, the tuning control unit 118 causes the display unit 76 to display a map in accordance with an action of the user, and the operation moves on to step S182.

Specifically, the tuning control unit 118 stores map data in an internal memory. When the user controls the operating unit 81 so that a map of a predetermined area is displayed, the display unit 76 displays the map of the predetermined area in accordance with the action.

In step S182, the station selecting unit 117 sets a target place name that is the name of an area shown on the map displayed on the display unit 76, and selects the station information having the area name corresponding to the target place name from the station information registered in the station list in the storage unit 115. As in step S133 of Fig. 30, station information can be selected by using the system type, the segment operation mode, the service start date, and the like, as well as the area name. Here, the selectable station list registering operation described above in detail with reference to Fig. 31 is performed.

Further, the station selecting unit 117 registers, in the selectable station list storing the station information about selectable stations, the station information selected from the station information registered in the station list in the storage unit 115, and supplies the selectable station list to the tuning control unit 118. The operation then moves on to step S183.

In step S183, the tuning control unit 118 determines whether to perform a reception check, as in step S134 of Fig. 30.

If it is determined in step S183 that a reception check is not to be performed, the operation skips steps S184 through S188, and moves on to step S189, without a reception check.

If it is determined in step S183 that a reception check is to be performed, the operation moves on to step S184. In steps S184 through S188, a reception check is performed through the same procedures as those of steps S135 through S139 of Fig. 30.

After the reception check in steps S184 through S188 is completed, the tuning control unit 118 in step S189 causes the display unit 76 to display marks that represent selectable stations having station information registered in the selectable station list. On the map displayed on the display unit 76, the marks appear at the locations of the selectable stations indicated by the station longitudes and the station latitudes of the station information about the selectable stations.

As well as the map and the marks representing the selectable stations, the station names of the selectable stations can be displayed on the display unit 76.

The operation then moves from step S189 on to step S190, and the tuning control unit 118 determines whether the user has made a tuning action to select a station and a service of an area-limited broadcast being provided by the station. If it is determined that the user has not made a tuning action, the operation returns to step S190.

Specifically, by controlling the operating unit 81, the user can select a desired station (a selectable station) from the stations having marks and/or station names shown on the map on the display unit 76.

When the user selects a desired station from the stations having marks and/or station names shown on the map on the display unit 76, the tuning control unit 118 recognizes the frequency and the service name of each of one or more services of area-limited broadcasts being provided by the selected station (a selectable station) having its station name selected by the user, from the NITs and SDTs transmitted through the segment (the principal segment) of the center frequency (Fig. 14) of the station information about the selected station (or from an already created tuning table, if possible).

Further, the tuning control unit 118 generates a channel list screen showing the service name of each of one or more services of area-limited broadcasts being provided by the selected station, and causes the display unit 76 to display the channel list screen.

By controlling the operating unit 81, the user can select the service name of a desired service from the service names displayed on the channel list screen.

When the user selects one of the service names displayed on the channel list screen, the tuning control unit 118 performs tuning control to cause the tuner 72 to select a selected service (a logical channel) (a segment) that is the service having the service name selected by the user.

As a result, the image of the selected service is displayed on the display unit 76, and the sound of the selected service is output from the speaker 78, for example, as described above with reference to step S60 of Fig. 25.

In step S190, a check is made to determine whether a tuning action has been made to select a selected station from the map and select a selected service from the services of area-limited broadcasts being provided by the selected station.

If it is determined in step S190 that a tuning action has been made, or in a case where one station on the map has been selected as a selected station, and one service has been selected as a selected service from the channel list screen showing the service name of each of one or more services of area-limited broadcasts being provided by the selected station, the operation moves on to step S191, and the tuning control unit 118 performs tuning control to cause the tuner 72 to select the selected service. The tuning operation in the map display mode then comes to an end.

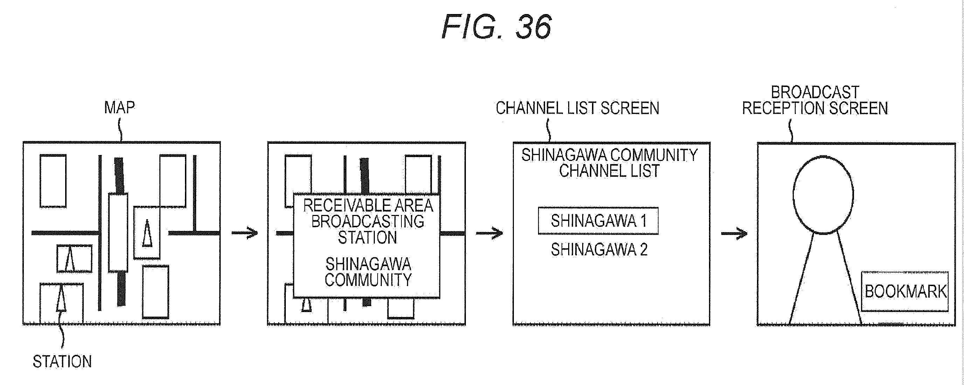

Fig. 36 is a diagram showing an example display on the display unit 76 in a case where a tuning operation in the map display mode is performed in the receiving terminal 33 shown in Fig. 22.

In the map display mode, a map is displayed on the display unit 76, as described above with reference to Fig. 35.

Further, in the map display mode, marks (triangular marks in Fig. 36) representing selectable stations are displayed at the locations of the selectable stations on the map on the display unit 76.

When the user makes an action to focus on a mark representing one of the selectable stations on the map, the station name ("Shinagawa Community" in Fig. 36) of the selectable station corresponding to the mark is displayed in a superimposed manner on the map on the display unit 76, for example.

When the user selects one of the selectable stations represented by the marks on the map, a channel list screen showing the service name of each of one or more services of area-limited broadcasts being provided by the selected station that is the selectable station selected by the user is displayed on the display unit 76.

When the user selects the service name of a desired service from the service names displayed on the channel list screen, the tuner 72 receives the selected service having its service name selected, and a broadcast reception screen showing the image of the selected service is displayed on the display unit 76.

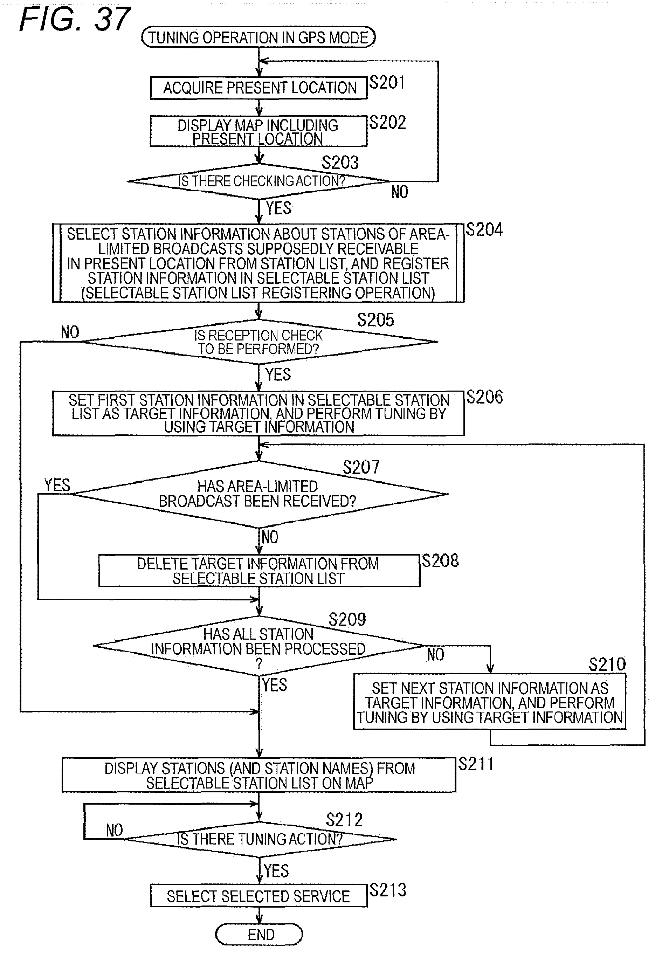

Fig. 37 is a flowchart for explaining a tuning operation in the GPS mode among tuning operations to be performed by the receiving terminal 33 to perform tuning by using station information.

Where a tuning operation in the GPS mode is performed, the station selecting unit 117 has a function to acquire the present location, such as a GPS.

In step S201, the station selecting unit 117 acquires the present location (of the receiving terminal 33), and supplies the present location to the tuning control unit 118. The operation then moves on to step S202.

In step S202, the tuning control unit 118 causes the display unit 76 to display a map including the present location supplied from the station selecting unit 117. The operation then moves on to step S203.

Specifically, the tuning control unit 118 stores map data in an internal memory, and causes the display unit 76 to display a map of a predetermined area including the present location supplied from the station selecting unit 117.

In step S203, the control unit 80 determines whether the user has made a checking action by controlling the operating unit 81 so as to check services of area-limited broadcasts receivable at the present location. If it is determined that any checking action has not been made, the operation returns to step S201.

If it is determined in step S203 that a checking action has been made, the operation moves on to step S204, and the station selecting unit 117 performs a selectable station list registering operation to select the station information about stations transmitting area-limited broadcasts considered to be receivable at the present location from the station information registered in the station list in the storage unit 115, and register the acquired station information in the selectable station list.

Specifically, in the selectable station list registering operation, the station selecting unit 117 selects a target station sequentially from the stations having station information registered in the station list in the storage unit 115.

Further, based on the transmission power, the station longitude, and the station latitude in the station information about the target station, the station selecting unit 117 determines the broadcast area of the target station that is a circular area formed around the location (of the target station) specified by the station longitude and the station latitude, and has a radius proportional to the transmission output.

In a case where the broadcast area of the target station includes the present location, the station selecting unit 117 determines that the target station is a station transmitting area-limited broadcasts considered to be receivable at the present location, and selects the station information about the target station from the station information registered in the station list in the storage unit 115.

Further, the station selecting unit 117 sets the stations selected from the station information registered in the station list in the storage unit 115 as selectable stations, and registers the station information about the selectable stations in the selectable station list. The selectable station list is supplied to the tuning control unit 118.

The selectable station list registering operation will be described later in detail.

The operation then moves from step S204 on to step S205, and the tuning control unit 118 determines whether to perform a check of reception of a station having its station information registered in the selectable station list supplied from the station selecting unit 117, or a check of reception of (an area-limited broadcast transmitted from) a selectable station, as in step S134 of Fig. 30.

If it is determined in step S205 that a reception check is not to be performed, the operation skips steps S206 through S210, and moves on to step S211, without a reception check.

If it is determined in step S205 that a reception check is to be performed, the operation moves on to step S206. In steps S206 through S210, a reception check is performed through the same procedures as those of steps S135 through S139 of Fig. 30.

After a reception check in steps S206 through S210 is completed, the tuning control unit 118 in step S211 causes the display unit 76 to display marks and station names representing selectable stations that are the stations having station information registered in the selectable station list on the map, as in step S189 of Fig. 35.

The operation then moves from step S211 on to step S212, and the same procedures as those of steps S190 and S191 of Fig. 35 are carried out in steps S212 and S213. The tuning operation in the GPS mode then comes to an end.

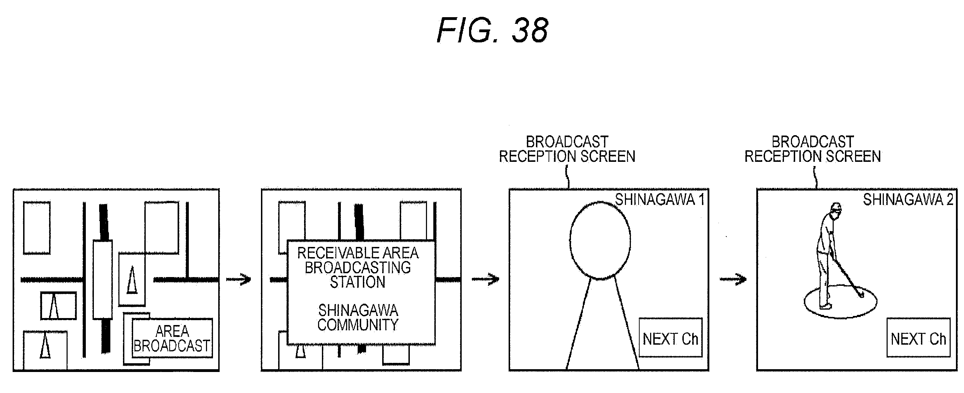

Fig. 38 is a diagram showing an example display on the display unit 76 in a case where a tuning operation in the GPS mode is performed in the receiving terminal 33 shown in Fig. 22.

In the GPS mode, a map showing the present location at the center is displayed on the display unit 76, for example.

Further, in the GPS mode, marks (triangular marks in Fig. 38) representing selectable stations are displayed at the locations of the selectable stations on the map on the display unit 76.

When the user makes an action to focus on a mark representing one of the selectable stations on the map, the station name ("Shinagawa Community" in Fig. 38) of the selectable station corresponding to the mark is displayed in a superimposed manner on the map on the display unit 76, for example, as in the case illustrated in Fig. 36.

When the user selects one of the selectable stations represented by the marks on the map, a channel list screen (not shown in Fig. 38) showing the service name of each of one or more services of area-limited broadcasts being provided by the selected station that is the selectable station selected by the user is displayed on the display unit 76.

When the user selects the service name of a desired service from the service names displayed on the channel list screen, the tuner 72 receives the selected service having its service name selected, and a broadcast reception screen showing the image of the selected service is displayed on the display unit 76.

In a case where the selected station is providing area-limited broadcasts of services other than the selected service, a "Next Ch" button is also displayed on the broadcast reception screen.

When the user touches the "Next Ch" button, one of the services being provided by the selected station other than the selected service is set as a new selected service in the receiving terminal 33, and the new selected service is selected.

A broadcast reception screen showing the image of the selected service is then displayed on the display unit 76. As in the above described case, the "Next Ch" button is displayed on the broadcast reception screen where necessary.

In a tuning operation in the GPS mode, a map may not be displayed, and a station list screen showing the station names of selectable stations may be simply displayed.

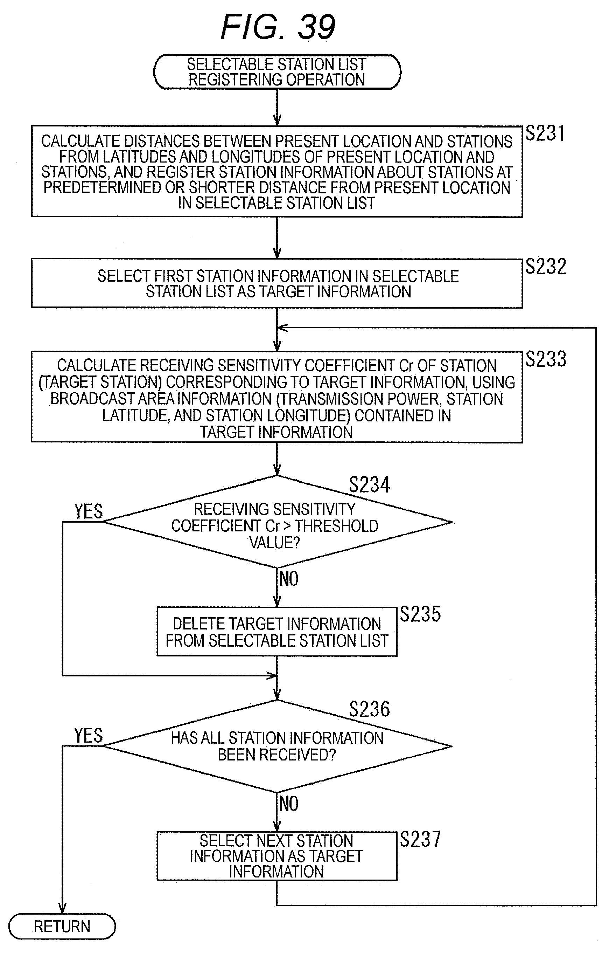

Fig. 39 is a flowchart for explaining the selectable station list registering operation to be performed in step S204 of Fig. 37.

In the selectable station list registering operation shown in Fig. 39, the station selecting unit 117 in step S231 selects a target station sequentially from the stations having station information registered in the station list in the storage unit 115.

Further, the station selecting unit 117 calculates the distance between the present location and the target station, using the station longitude and the station latitude in the station information about the target station.

When the distance between the present location and the target station is equal to or shorter than a predetermined value, the station selecting unit 117 sets the target station as (a candidate for) a selectable station, and registers the station information about the target station in the selectable station list.

As described above, based on the distance between the present location and the target station, the station selecting unit 117 performs preprocessing by (provisionally) registering the station information about the target station in the selectable station list.

After the station selecting unit 117 completes the preprocessing by having set all the stations having station information registered in the station list in the storage unit 115 as target stations, the operation moves from step S231 on to step S232, and thereafter, the station selecting unit 117 performs a selecting operation to select selectable stations from the stations having station information registered in the selectable station list based on the later described receiving sensitivity coefficient Cr (or to delete, from the selectable station list, the station information about the stations not to be set as selectable stations).

In Fig. 39, the above described preprocessing in step S231 may be skipped.

In a case where the preprocessing in step S231 is not performed, however, the selecting operation in step S232 and thereafter needs to be performed not on the stations having station information registered in the selectable station list, but on all the stations having station information registered in the station list in the storage unit 115.

Therefore, in a case where the preprocessing is not performed, the selecting operation including a calculation of the later described receiving sensitivity coefficient Cr and the like needs to be performed on all the stations having station information registered in the station list in the storage unit 115.

In a case where the preprocessing is performed, on the other hand, the receiving sensitivity coefficient Cr needs to be calculated only for the stations having station information registered in the selectable station list, and the selecting operation load can be reduced accordingly.

In view of this, the preprocessing can be considered to be an operation to narrow down the stations to be subjected to the selecting operation.

In step S232, the station selecting unit 117 selects the first station information in the selectable station list as target station information (target information). The operation then moves on to step S233.

In step S233, the station selecting unit 117 calculates the receiving sensitivity coefficient Cr of the target station that is the station corresponding to the target station information, using the transmission power, the station longitude, and the station latitude in the target station information. The operation then moves on to step S234.

Here, the receiving sensitivity coefficient Cr of a target station is a value corresponding to the reception level of a broadcast wave when the broadcast wave is received from the target station at the present location, and serves as an index in determining whether an area-limited broadcast being transmitted from the target station can be received at the present location.

Where Sx and Sy represent the station longitude and the station latitude of a target station, Rx and Ry represent the longitude and the latitude of the present location, and Ep represents the transmission power of the target station, the receiving sensitivity coefficient Cr of the target station is calculated according to the following equation, for example.

$$Cr = \log(Ep)/\sqrt{((Sx - Rx)2 + (Sy - Ry)2)}$$

In step S234, the station selecting unit 117 determines whether the receiving sensitivity coefficient Cr of the target station is larger (equal to or larger) than a threshold value θ.

Here, the threshold value θ is a value of a receiving sensitivity coefficient with which broadcast waves of area-limited broadcasts can be received appropriately (at a predetermined S/N (Signal to Noise Ratio), for example) in the receiving terminal 33.

Also, the reciprocal of the receiving sensitivity coefficient Cr of the target station corresponds to the radius of the circle serving as the broadcast area of the target station.

If the receiving sensitivity coefficient Cr of the target station is determined not to be larger than the threshold value θ in step S234, or in a case where (there is a high possibility that) an area-limited broadcast being transmitted from the target station cannot be received (appropriately) at the present location, the operation moves on to step S235, and the station selecting unit 117 deletes the target station information from the selectable station list, to exclude the target station from the selectable stations. The operation moves on to step S236.

On the other hand, if the receiving sensitivity coefficient Cr of the target station is determined to be larger than the threshold value θ in step S234, or in a case where (there is a high possibility that) area-limited broadcasts being transmitted from the target station can be received (appropriately) at the present location, the operation skips step S235, and moves on to step S236. The target station information is not deleted from the selecting station list, and the target station remains selected as a selectable station.

In step S236, the station selecting unit 117 determines whether all the sets of station information in the selectable station list have been selected as target station information.

If it is determined in step S236 that there is station information yet to be selected as target station information among the sets of station information in the selectable station list, the operation moves on to step S237, and the station selecting unit 117 selects new target station information that is the next station information after the current target station information among the sets of station information in the selectable station list.

The operation then returns from step S237 to step S233, and thereafter, the same procedures as above are repeated.

If it is determined in step S236 that all the sets of station information in the selectable station list have been selected as target station information, the selectable station list registering operation comes to an end, and the operation returns to the tuning operation.

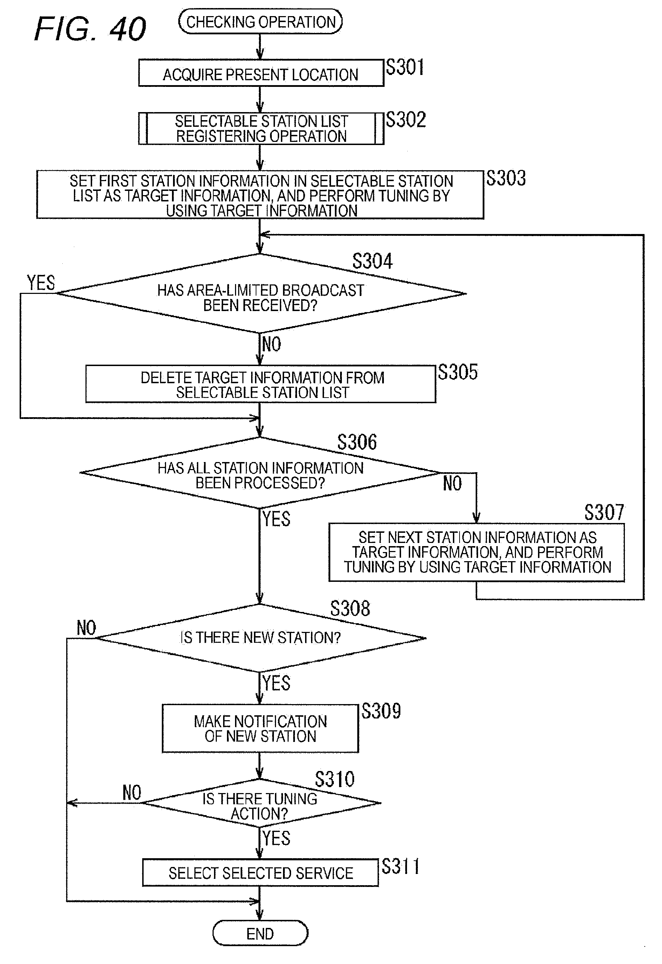

Fig. 40 is a flowchart for explaining a checking operation to be performed by the receiving terminal 33 shown in Fig. 22.

After the tuning operation in the GPS mode shown in Fig. 37 is performed, the user carrying the receiving terminal 33 might move, and the present location might change. As a result, the present location might be included in the broadcast area of a new station.

In the checking operation, a check is made to determine whether the present location after a present location change is included in the broadcast area of a new station. In a case where the present location after the change is included in the broadcast area of a new station, and area-limited broadcast being transmitted from the new station can be received by the receiving terminal 33, the user is notified of the existence of the new station.

Specifically, in step S301 in the checking operation, the station selecting unit 117 acquires the present location (of the receiving terminal 33), and supplies the present location to the tuning control unit 118. The operation then moves on to step S302.

In step S302, the station selecting unit 117 performs a selectable station list registering operation to select the station information about stations transmitting area-limited broadcasts considered to be receivable at the present location from the station information registered in the station list in the storage unit 115, and register the acquired station information in the selectable station list, as in step S204 of Fig. 37.

The station selecting unit 117 then supplies the selectable station list that is obtained as a result of the selectable station list registering operation and has the station information about the selectable stations registered therein, to the tuning control unit 118.

The operation then moves from step S302 on to step S303. In steps S303 through S307, a reception check is performed by carrying out the same procedures as those of steps S135 through S139 of Fig. 30.

When the reception check in steps S303 through S307 is completed, the tuning control unit 118 in step S308 determines whether the reception check (the procedures in steps S303 through S307 carried out immediately before this step) has resulted in newly recognizing reception of an area-limited broadcast transmitted from a selectable station (hereinafter also referred to as a new selectable station) whose area-limited broadcasts could not be recognized in the last reception check (the procedures in steps S303 through S307 carried out immediately before the reception check this time, or the procedures in steps S206 through S210 in the tuning operation in the GPS mode shown in Fig. 37).

If it is determined in step S308 that reception of an area-limited broadcast transmitted from a new selectable station has not been newly recognized in the reception check this time, the operation skips steps S309 through S311, and the checking operation comes to an end.

If it is determined in step S308 that reception of an area-limited broadcast transmitted from a new selectable station has been newly recognized in the reception check this time, or in a case where the station information about the new selectable station that is not registered in the selectable station list supplied from the station selecting unit 117 to the tuning control unit 118 in the last reception check is registered in the selectable station list supplied from the station selecting unit 117 to the tuning control unit 118 in the reception check this time, the operation moves on to step S309, and the tuning control unit 118 notifies the user of the existence of the new selectable station.

Here, the tuning control unit 118 notifies the user of the existence of the new selectable station by causing the display unit 76 to display a notification screen for notifying the user of the existence of a new selectable station, or outputting a sound for notifying the user of the existence of a new selectable station from the speaker 78, for example.

At the time of this notification, with the use of the area type (Fig. 14) contained in the station information, for example, the contents of the notification may be made to vary between a public area and a closed area. For example, if the user is notified of the existence of the new selectable stations of all the closed areas belonging to a public area at once, the user is notified of an enormous number of selectable stations serving for facilities such as shops, and might find it difficult to select a desired station. In view of this, when the user enters a public area, the user is notified only of the new selectable stations of the public area, and is not notified of any new selectable station of any closed area. When the user enters a closed area in a desired facility, the user is made to consciously select the corresponding station, so that area-limited broadcasts provided in the desired facility can be certainly viewed.

In a case where station information about another station provided by an affiliate is registered in the station list after filtering based on the service genre (Fig. 14) is performed, for example, the user is notified of the other station as a new selectable station when the receiving terminal 33 enters the broadcast area of the other station.

The operation then moves from step S309 on to step S310, and the tuning control unit 118 determines whether the user has made a tuning action to select a new selectable station and a service of an area-limited broadcast being provided by the new selectable station. If it is determined that the user has not made a tuning action, the operation skips step S311, and the checking operation comes to an end.

If it is determined in step S310 that a tuning action has been made, or in a case where a new selectable station has been selected as a selected station, and one service has been selected as a selected service from the channel list screen showing the service name of each of one or more services of area-limited broadcasts being provided by the selected station, the operation moves on to step S311, and the tuning control unit 118 performs tuning control to cause the tuner 72 to select the selected service. The checking operation then comes to an end.

The checking operation is periodically repeated, for example.

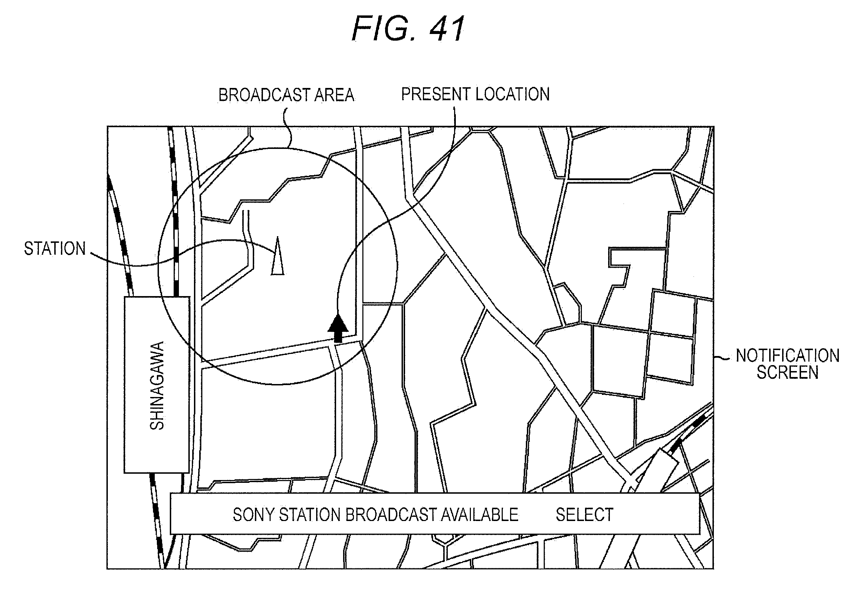

Fig. 41 is a diagram showing an example notification screen.

On the notification screen shown in Fig. 41, a map including the present location is displayed, and a mark (a triangular mark) representing a new selectable station is further displayed at the location of the new selectable station on the map.

Other than that, a mark (an arrow-like mark) representing the present location, a circle indicating the broadcast area of the new selectable station, and a message to the effect that services being provided by the new selectable station are available, are displayed on the map on the notification screen shown in Fig. 41.

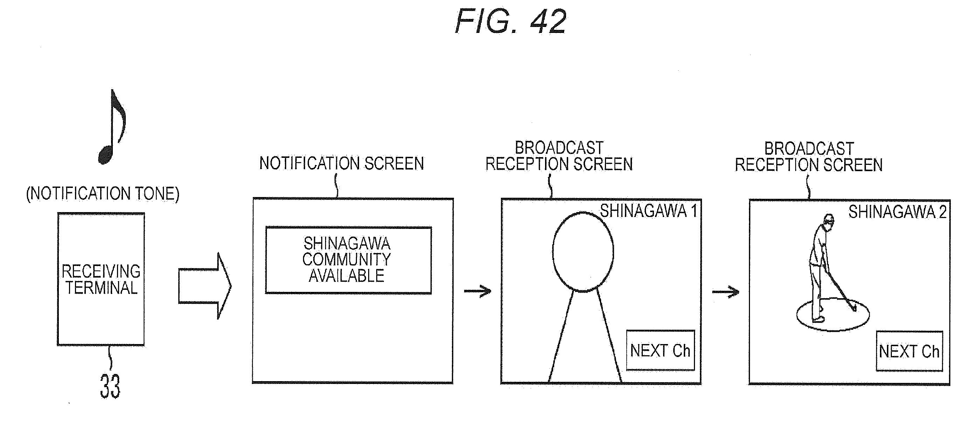

Fig. 42 is a diagram showing an example display on the display unit 76 in a case where the checking operation shown in Fig. 40 is performed in the receiving terminal 33 shown in Fig. 22.

In a case where reception of an area-limited broadcast transmitted from a new selectable station has been newly recognized in the current reception check in the checking operation, the tuning control unit 118 notifies the user of the existence of the new selectable station by causing the speaker 78 to output a notification tone for notifying the user of the existence of a new selectable station, and further causing the display unit 76 to display a notification screen.

After that, when the user makes a tuning action to select a service of an area-limited broadcast being provided by the new selectable station as a selected service, the tuner 72 receives the selected service, and the display unit 76 displays a broadcast reception screen showing the image of the selected service.

In a case where the new selectable station is providing services as area-limited broadcasts, a "Next ch" button is also displayed on the broadcast reception screen.

When the user touches the "Next ch" button, a service other than the currently selected service among the services being provided as area-limited broadcasts by the new selectable station is selected as a new selected service, and the new selected service is selected.

Further, a broadcast reception screen showing the image of the selected service as a result of the tuning is displayed on the display unit 76.

In a case where the checking operation is periodically performed, and the user is notified of the existence of a new selectable station in the checking operation as described above, the user can recognize the existence of a new selectable station at a location after a move without a tuning operation in the GPS mode every time the user moves.

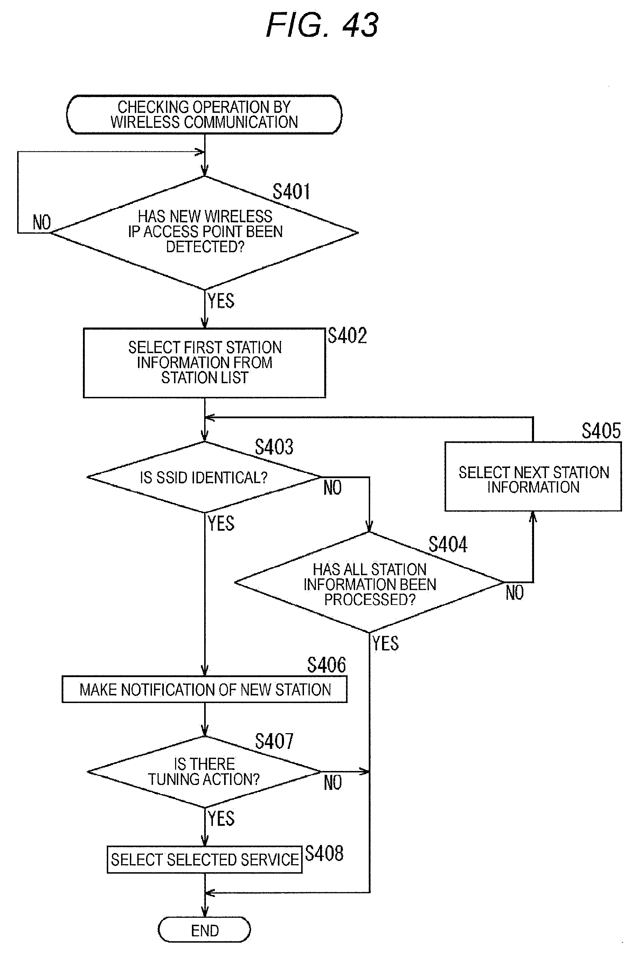

In a checking operation to be performed by the receiving terminal 33 shown in Fig. 22, the user may be notified of the existence of a new selectable station by detecting a wireless IP access point. Fig. 43 is a flowchart for explaining a checking operation by wireless communication to be performed by the receiving terminal 33 shown in Fig. 22.

In step S401, under the control of the control unit 80, the wireless communication interface 82 determines whether a new wireless IP access point has been detected. If it is determined in step S401 that a new wireless IP access point has been detected, the wireless communication interface 82 supplies the SSID obtained from the detected wireless IP access point to the station selecting unit 117. The operation then moves on to step S402.

In step S402, the station selecting unit 117 selects the first station information from the station information registered in the station list in the storage unit 115.

In step S403, the station selecting unit 117 determines whether the SSID obtained from the detected wireless IP access point is identical to the wireless IP access point identifier contained in the station information. If the SSID is determined not to be identical in step S403, the operation moves on to step S404.

In step S404, the station selecting unit 117 determines whether all the station information has been processed. If it is determined in step S404 that not all the station information has been processed, the operation moves on to step S405.

In step S405, the station selecting unit 117 selects the next station information from the station information registered in the station list in the storage unit 115.

The operation then returns from step S405 to step S403, and thereafter, the same procedures as above are repeated. Specifically, in a case where the determining procedure of checking whether the SSID is identical is repeated, and there is an identical SSID, the operation moves on to step S406. On the other hand, if there is not an identical SSID in all the station information, on the other hand, the checking operation is ended.

In step S406, the tuning control unit 118 notifies the user of the existing of a new selectable station based on the station information determined to have the same SSID as the wireless IP access point as a result of the determining procedure in step S403. Specifically, in a case where a wireless IP access point having an SSID identical to the wireless IP access point identifier contained in the station information, the broadcast area of a station conducting area-limited broadcasting is sensed, and the user is notified of the existence of the new selectable station.

Here, the tuning control unit 118 notifies the user of the existence of the new selectable station by causing the display unit 76 to display a notification screen for notifying the user of the existence of a new selectable station, or outputting a sound for notifying the user of the existence of a new selectable station from the speaker 78, for example. As described above, at the time of this notification, with the use of the area type (Fig. 14) contained in the station information, for example, the contents of the notification may be made to vary between a public area and a closed area.

The operation then moves from step S406 on to step S407, and the tuning control unit 118 determines whether the user has made a tuning action to select a new selectable station and a service of an area-limited broadcast being provided by the new selectable station. If it is determined that the user has not made a tuning action, the operation skips step S408, and the checking operation comes to an end.

If it is determined in step S407 that a tuning action has been made, or in a case where a new selectable station has been selected as a selected station, and one service has been selected as a selected service from the channel list screen showing the service name of each of one or more services of area-limited broadcasts being provided by the selected station, the operation moves on to step S408, and the tuning control unit 118 performs tuning control to cause the tuner 72 to select the selected service. The checking operation then comes to an end.

The checking operation by wireless communication is periodically repeated, for example.

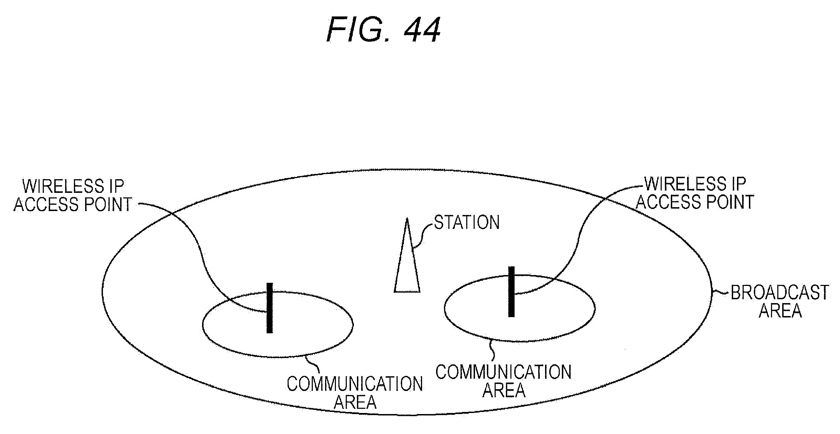

Fig. 44 is a diagram showing the relationship between the broadcast area of a station and the communication areas of wireless IP access points.

As shown in Fig. 44, in a case where two wireless IP access points are provided in the broadcast area of one station, the respective communication areas of the wireless IP access points are within the broadcast area in most cases. Therefore, in a case where the receiving terminal 33 has entered the communication area of a wireless IP access point, and the SSID obtained from the wireless IP access point is the same as the wireless IP access point identifier contained in the station information, the receiving terminal 33 can be considered to be within the broadcast area of the station.

As the checking operation by wireless communication is performed, a check is made to determine whether the present location after a present location change is included in the broadcast area of a new station when the present location of the receiving terminal 33 has changed. In a case where the present location after the change is included in the broadcast area of a new station, and area-limited broadcasts being transmitted from the new station can be received by the receiving terminal 33, the user is notified of the existence of the new station.

[Description of a Computer to Which the Present Invention Is Applied]

The above described series of operations of the station 32 and the receiving terminal 33 can be performed by hardware, and can also be performed by software. When the series of operations are to be performed by software, the program forming the software is installed into a computer. Here, the computer may be a computer incorporated into special-purpose hardware, or may be a general-purpose personal computer that can execute various kinds of functions as various kinds of programs are installed thereinto.

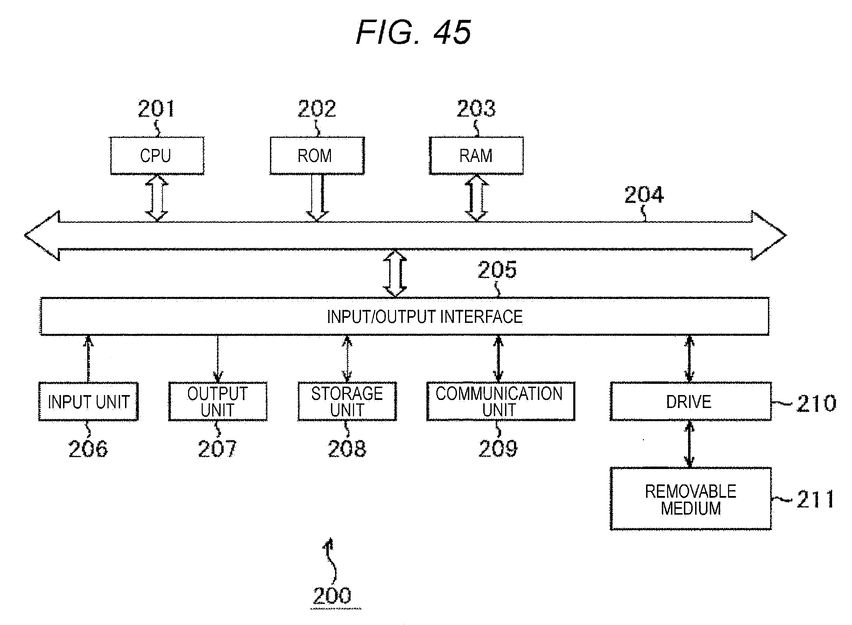

Fig. 45 is a block diagram showing an example structure of the hardware of a computer that performs the above described series of operations in accordance with a program.

In the personal computer 200, a CPU (Central Processing Unit) 201, a ROM (Read Only Memory) 202, and a RAM (Random Access Memory) 203 are connected to one another by a bus 204.

An input/output interface 205 is further connected to the bus 204. An input unit 206, an output unit 207, a storage unit 208, a communication unit 209, and a drive 210 are connected to the input/output interface 205.

The input unit 206 is formed with a keyboard, a mouse, a microphone, and the like. The output unit 207 is formed with a display, a speaker, and the like. The storage unit 208 is formed with a hard disk, a nonvolatile memory, or the like. The communication unit 209 is formed with a network interface or the like. The drive 210 drives a removable medium 211 such as a magnetic disk, an optical disk, a magnetooptical disk, or a semiconductor memory.

In the personal computer 200 having the above described structure, the CPU 201 loads a program stored in the storage unit 208 into the RAM 203 via the input/output interface 205 and the bus 204, and executes the program, so that the above described series of operations are performed.

The program to be executed by the personal computer 200 (the CPU 201) may be recorded on the removable medium 211 as a packaged medium to be provided, for example. Alternatively, the program can be provided via a wired or wireless transmission medium such as a local area network, the Internet, or digital satellite broadcasting.

In the personal computer 200, the program can be installed into the storage unit 208 via the input/output interface 205 as the drive 210 is mounted on the removable medium 211. Alternatively, the program may be received by the communication unit 209 via a wired or wireless transmission medium, and be installed into the storage unit 208. Also, the program may be installed beforehand into the ROM 202 or the storage unit 208.

The program to be executed by the computer may be a program for performing operations in chronological order in accordance with the sequence described in this specification, or may be a program for performing operations in parallel or performing an operation when necessary, such as when there is a call.

It should be noted that embodiments of the present invention are not limited to the above described embodiments, and various modifications may be made to them without departing from the scope of the invention.

Further, the present technique may take the following forms.

[1] A receiving device including:

an acquiring unit that acquires area broadcast information about a station transmitting broadcast waves of a one-segment broadcast through an arbitrary segment;
a storage unit that stores the area broadcast information;
a selecting unit that selects the station transmitting the one-segment broadcast by using the area broadcast information, the one-segment broadcast being receivable at a predetermined location, the station being selected as a selectable station that can be selected by tuning; and

a tuning control unit that performs tuning control to select the one-segment broadcast of the selectable station.

[2] The receiving device of [1], wherein the selecting unit selects a station transmitting the one-segment broadcast as a selectable station by using the area broadcast information, the one-segment broadcast being receivable in an area selected by a user.

[3] The receiving device of [1] or [2], wherein
the area broadcast information includes a system type as the specification type with which the broadcast waves of the one-segment broadcast are compliant, and a segment operation mode indicating the number of segments for the broadcast waves of the one-segment broadcast, and
the selecting unit select a station transmitting compatible broadcast waves as a selectable station by using the system type and the segment operation mode.

[4] The receiving device of any of [1] through [3], wherein
the area broadcast information includes a service period indicating the period of time during which the station provides the one-segment broadcast, and
the selecting unit selects a station within the service period as a selectable station.

[5] The receiving device of [4], wherein the service period is specified by a service start date indicating the start date of the period during which the one-segment broadcast is provided, a service end date indicating the end date, a weekly service pattern designating days of the week on which the one-segment broadcast is transmitted, and a daily service pattern designating hours in which the one-segment broadcast is transmitted.

[6] The receiving device of any of [1] through [5], wherein the tuning control unit performs control so that information about the selectable stations is displayed, and
the one-segment broadcast of a station selected by a user is selected from a display of the information about the selectable station.

[7] The receiving device of [6], wherein
the area broadcast information includes a wireless IP access point identifier that is information for identifying a wireless IP access point when a communication connection is performed,
when the wireless IP access point is detected, the selecting unit selects a selectable station that is a station in which the same wireless IP access point identifier as the identifier obtained from the detected wireless IP access point is designated, and
the tuning control unit makes a notification of the existence of the selectable station.

[8] The receiving device of any of [1] through [7], wherein the tuning control unit performs a reception check to determine whether the one-segment broadcast being transmitted from the selectable station is receivable, and performs control so that only information about the selectable station transmitting the one-segment broadcast determined to be receivable is displayed.

[9] A receiving method including the steps of:

acquiring area broadcast information about a station transmitting broadcast waves of a one-segment broadcast through an arbitrary segment;
storing the area broadcast information;
selecting the station transmitting the one-segment broadcast by using the area broadcast information, the one-segment broadcast being receivable at a predetermined location, the station being selected as a selectable station that can be selected by tuning; and
performing tuning control to select the one-segment broadcast of the selectable station,
the steps being carried out by a one-segment broadcast receiving device.

[10] A program for causing a computer to function as:

an acquiring unit that acquires area broadcast information about a station transmitting broadcast waves of a one-segment broadcast through an arbitrary segment;
a storage unit that stores the area broadcast information;
a selecting unit that selects the station transmitting the one-segment broadcast by using the area broadcast information, the one-segment broadcast being receivable at a predetermined location, the station being selected as a selectable station that can be selected by tuning; and
a tuning control unit that performs tuning control to select the one-segment broadcast of the selectable station.

REFERENCE SIGNS LIST

31 Terrestrial station, 32-1 through 32-3 Station, 33 Receiving terminal, 51 Related information acquiring unit, 52 Video data acquiring unit, 53 Video encoder, 54 Audio data acquiring unit, 55 Audio encoder, 56 Multiplexer, 57 Transmitting unit, 58, 71 Antenna, 72 Tuner, 73 Demultiplexer, 74 Video decoder, 75 Audio decoder, 76 Display unit, 77 Selecting unit, 78 Display unit, 79 Browser, 80 Control unit, 81 Operating unit, 82 Wireless communication interface, 111 through 113 Station information acquiring unit, 114 Registering unit, 115 Storage unit, 116 Updating unit, 117 Station selecting unit, 118 Tuning control unit, 201 CPU, 202 ROM, 203 RAM, 204 bus, 205 Input/output interface, 206 Input unit, 207 Output unit, 208 Storage unit, 209 Communication unit, 210 Drive, 211 Removable medium

**Claims**

1. A receiving device comprising:

   an acquiring unit configured to acquire area broadcast information about a station transmitting broadcast waves of a one-segment broadcast through an arbitrary segment;
   a storage unit configured to store the area broadcast information;
   a selecting unit configured to select the station transmitting the one-segment broadcast by using the area broadcast information, the one-segment broadcast being receivable at a predetermined location, the station being selected as a selectable station that can be selected by tuning; and
   a tuning control unit configured to perform tuning control to select the one-segment broadcast of the selectable station.

2. The receiving device according to claim 1, wherein the selecting unit selects a station transmitting the one-segment broadcast as a selectable station by using the area broadcast information, the one-segment broadcast being receivable in an area selected by a user.

3. The receiving device according to claim 2, wherein
   the area broadcast information includes a system type as a specification system with which the broadcast waves of the one-segment broadcast are compliant, and a segment operation mode indicating the number of segments for the broadcast waves of the one-segment broadcast, and
   the selecting unit selects a station transmitting compatible broadcast waves as a selectable station by using the system type and the segment operation mode.

4. The receiving device according to claim 2, wherein
   the area broadcast information includes a service period indicating a period of time during which the station provides the one-segment broadcast, and
   the selecting unit selects a station within the service period as a selectable station.

5. The receiving device according to claim 4, wherein the service period is specified by a service start date indicating a start date of the period during which the one-segment broadcast is provided, a service end date indicating an end date, a weekly service pattern designating a day of the week on which the one-segment broadcast is transmitted, and a daily service pattern designating hours in which the one-segment broadcast is transmitted.

6. The receiving device according to claim 1, wherein the tuning control unit performs control so that
   information about the selectable stations is displayed, and
   the one-segment broadcast of a station selected by a user is selected from a display of the information about the selectable station.

7. The receiving device according to claim 6, wherein
   the area broadcast information includes a wireless IP access point identifier as information for identifying a wireless IP access point when a communication connection is performed,
   when the wireless IP access point is detected, the selecting unit selects a selectable station that is a station in which the same wireless IP access point identifier as an identifier obtained from the detected wireless IP access point is designated, and
   the tuning control unit makes a notification of the existence of the selectable station.

8. The receiving device according to claim 1, wherein the tuning control unit performs a reception check to determine whether the one-segment broadcast being transmitted from the selectable station is receivable, and performs control so that only information about the selectable station transmitting the one-segment broadcast determined to be receivable is displayed.

9. A receiving method comprising the steps of:

   acquiring area broadcast information about a station transmitting broadcast waves of a one-segment broadcast through an arbitrary segment;
   storing the area broadcast information;
   selecting the station transmitting the one-segment broadcast by using the area broadcast information, the one-segment broadcast being receivable at a predetermined location, the station being selected as a selectable station that can be selected by tuning; and
   performing tuning control to select the one-segment broadcast of the selectable station,
   the steps being carried out by a one-segment broadcast receiving device.

10. A program for causing a computer to function as:

   an acquiring unit configured to acquire area broadcast information about a station transmitting broadcast waves of a one-segment broadcast through an arbitrary segment;
   a storage unit configured to store the area broadcast information;
   a selecting unit configured to select the station transmitting the one-segment broadcast by using the area broadcast information, the one-segment broadcast being receivable at a predetermined location, the station being selected as a selectable station that can be selected by tuning; and
   a tuning control unit configured to perform tuning control to select the one-segment broadcast of the selectable station.

# FIG. 1

```
┌─────────────────────────────┐
│    START OF TUNING TABLE     │
│      CREATING OPERATION      │
└─────────────────────────────┘
              │
              ▼
┌─────────────────────────────┐ S11
│  SET PREDETERMINED PHYSICAL  │
│  CHANNEL AS TARGET PHYSICAL  │
│           CHANNEL            │
└─────────────────────────────┘
              │
              ▼
┌─────────────────────────────┐ S12
│   SELECT CENTER SEGMENT OF   │
│   TARGET PHYSICAL CHANNEL    │
└─────────────────────────────┘
              │
              ▼
          ◇ S13
   HAS TS BEEN RECEIVED?  ──NO──┐
              │                 │
            YES                 │
              ▼                 │
┌─────────────────────────────┐ S14
│  ACQUIRE NIT AND SDT OF OWN  │
│  SEGMENT FROM TS OF CENTER   │
│           SEGMENT            │
└─────────────────────────────┘
              │
              ▼
          ◇ S15
  HAVE ALL PHYSICAL
  CHANNELS BEEN SELECTED AS TARGET
  PHYSICAL CHANNEL?  ──NO──┐
              │            ▼
            YES    ┌─────────────────────────────┐ S16
              │    │  SET NEXT PHYSICAL CHANNEL   │
              │    │  AS TARGET PHYSICAL CHANNEL  │
              │    └─────────────────────────────┘
              ▼
┌─────────────────────────────┐ S17
│      CREATE TUNING TABLE     │
│     BASED ON NIT AND SDT     │
└─────────────────────────────┘
              │
              ▼
          ┌───────┐
          │  END  │
          └───────┘
```

# FIG. 2

PHYSICAL CH-N

PHYSICAL CH-2

PHYSICAL CH-1

**NIT**

NETWORK ID

TSID
FREQUENCY

SERVICE ID 1
SERVICE ID 2

**SDT**

TSID

SERVICE ID 1
SERVICE NAME 1

SERVICE ID 2
SERVICE NAME 2

| SERVICE NAME | SERVICE ID | FREQUENCY |
|---|---|---|
| SERVICE 1 | ID1 | F1 |
| SERVICE 2 | ID2 | F1 |
| SERVICE 3 | ID3 | F2 |
| SERVICE 4 | ID4 | F3 |

~ TUNING TABLE

EP 2 712 179 A1

## FIG. 3

CENTER SEGMENT

CENTER SEGMENT

Frequency

Tuning
→ NIT/SDT
ACQUIRED

Tuning
→ TUNING
FAILED

Tuning
→ NIT/SDT
ACQUIRED

Tuning
→ NIT/SDT
ACQUIRED

Tuning
→ NIT/SDT
ACQUIRED

FIG. 4

## FIG. 5

DIGITAL TERRESTRIAL BROADCASTING CH

UNUSED CH → ARBITRARY ONE-SEGMENT BROADCASTING CH

Frequency

12 SEGMENTS (FOR FIXED TERMINALS)

1 SEGMENT (FOR MOBILE TERMINALS)

1 SEGMENT × MAX. 13 CH

EP 2 712 179 A1

# FIG. 6

CENTER SEGMENT

STATION

STATION

STATION

32-2

32-1

32-3

BROADCAST AREA B

BROADCAST AREA C

BROADCAST AREA A

EP 2 712 179 A1

## FIG. 7

```
┌─────────────────────────┐
│      FIRST METHOD       │
│   TUNING INFORMATION    │──────▶┐
│  ACQUISITION BY BROADCAST│       │
│      WAVE SCANNING      │       │
└─────────────────────────┘       │
                                  ▼
┌─────────────────────────┐   ┌──────────────┐      ┌──────────────┐
│     SECOND METHOD       │   │  RECEIVING   │      │   TUNING     │
│   BURYING OF TUNING     │──▶│  TERMINAL    │─────▶│ → CHANNEL    │
│ INFORMATION IN RECEIVING│   │   HOLDING    │      │ REPRODUCTION │
│       TERMINAL          │   │   TUNING     │      └──────────────┘
└─────────────────────────┘   │ INFORMATION  │
                              │              │
┌─────────────────────────┐   └──────────────┘
│      THIRD METHOD       │       ▲
│   TUNING INFORMATION    │───────┘
│ ACQUISITION BY MEANS OTHER│
│  THAN BROADCAST WAVES   │
└─────────────────────────┘
```

EP 2 712 179 A1

## FIG. 8

s1 s2    s6 s7 s8    s12 s13

**N I T－0**

NETWORK ID-0

MULTI-SEGMENT
INFORMATION DESCRIPTOR

TS DESCRIPTION FOR s7
TSID-7
FREQUENCY
SERVICE ID 7-1

**N I T－1**

NETWORK ID-1

TS DESCRIPTION FOR s1
TSID-1
FREQUENCY
SERVICE ID 1-1

TS DESCRIPTION FOR s2
TSID-2
FREQUENCY
SERVICE ID 2-1
SERVICE ID 2-2

TS DESCRIPTION FOR s13
TSID-13
FREQUENCY
SERVICE ID 13-1

EXCLUDING ONLY
DESCRIPTION
FOR s7

EP 2 712 179 A1

## FIG. 9

| SEGMENT | NIT actual (table_id=0x40) | NIT other (table_id=0x41) | SDT actual (table_id=0x42) | SDT other (table_id=0x46) |
|---|---|---|---|---|
| CENTER SEGMENT (s7) | NIT-0 | NIT-1 | SDT for s7 | SDT for s1 ~ SDT for s13 (EXCLUDING v FOR s7) |
| NON-CENTER SEGMENTS (s1 ~ s6, s8 ~ s13) | NIT-1 | NONE | SDT for each | NONE |

EP 2 712 179 A1

# FIG. 10

FIRST PHYSICAL CHANNEL  
SECOND PHYSICAL CHANNEL  
THIRD PHYSICAL CHANNEL  
FOURTH PHYSICAL CHANNEL  
FIFTH PHYSICAL CHANNEL  

Frequency

ONE-SEGMENT TERMINAL

RECEIVING TERMINAL ~33

EP 2 712 179 A1

## FIG. 11

A

| SERVICE NAME | SERVICE ID | FREQUENCY |
|---|---|---|
| ONE-SEGMENT SERVICE 1 | ID1 | F1 |
| COMMUNITY SERVICE 1 | ID2 | F2 |
| COMMUNITY SERVICE 2 | ID3 | F3 |
| COMMUNITY SERVICE 3 | ID4 | F4 |
| COMMUNITY SERVICE 4 | ID5 | F5 |
| COMMUNITY SERVICE 5 | ID6 | F6 |
| ONE-SEGMENT SERVICE 2 | ID7 | F7 |
| . | . | . |
| . | . | . |
| . | . | . |

B

| SERVICE NAME | SERVICE ID | FREQUENCY |
|---|---|---|
| ONE-SEGMENT SERVICE 1 | ID1 | F1 |
| COMMUNITY SERVICE 1 | ID2 | F2 |
| COMMUNITY SERVICE 2 | ID7 | F7 |
| . | . | . |
| . | . | . |
| . | . | . |

*FIG. 12*

BROADCAST AREA

TERRESTRIAL STATION H1

TERRESTRIAL STATION H2

MOVEMENT LINE

FIG. 13

## FIG. 14

STATION INFORMATION

| INFORMATION ITEM | | CONTENTS |
|---|---|---|
| STATION ID | station_id | ID FOR IDENTIFYING STATION ON TS-BY-TS BASIS |
| BROADCASTER ID | area_broadcaster_id | ID FOR UNIQUELY IDENTIFYING AREA-LIMITED BROADCASTER |
| SYSTEM TYPE | signal_type | SYSTEM TYPE SPECIFIED BY VARIOUS CONDITIONS |
| AREA TYPE | area_type | TYPE OF EXISTENCE OF BROADCAST AREA |
| SEGMENT OPERATION MODE | segment_mode | NUMBER OF TS SEGMENTS |
| TRANSMISSION POWER | emission_power | TRANSMISSION POWER OF STATION |
| STATION NAME | station_name | NAME OF STATION |
| BROADCASTER NAME | area_broadcaster_name | NAME OF AREA-LIMITED BROADCASTER |
| AREA ID | area_code | ID INDICATING AREA OF STATION |
| AREA NAME | area_name | NAME OF BROADCAST AREA |
| STATION LATITUDE | station_latitude | LATITUDE OF STATION LOCATION |
| STATION LONGITUDE | station_longitude | LONGITUDE OF STATION LOCATION |
| SERVICE START DATE | operation_start_date | SERVICE START DATE OF AREA-LIMITED BROADCAST |
| SERVICE END DATE | operation_end_date | SERVICE END DATE OF AREA-LIMITED BROADCAST |
| WEEKLY SERVICE PATTERN | weekly_pattern | AREA-LIMITED BROADCAST DAY OF WEEK |
| DAILY SERVICE PATTERN | daily_pattern | AREA-LIMITED BROADCAST TIME |
| SERVICE GENRE | service_category | GENRE OF AREA-LIMITED BROADCAST |
| PRINCIPAL SERVICE ID | entry_saervice_id | SERVICE ID OF PRINCIPAL SERVICE OF AREA-LIMITED BROADCAST |
| CENTER FREQUENCY | frequency | CENTER FREQUENCY OF AREA-LIMITED BROADCAST |
| MODULATION METHOD | modulation | MODULATION METHOD OF AREA-LIMITED BROADCAST |
| GUARD INTERVAL | guard_interval | GUARD INTERVAL OF AREA-LIMITED BROADCAST |
| TRANSMISSION MODE | transmission_mode | TRANSMISSION MODE OF AREA-LIMITED BROADCAST |
| WIRELESS IP ACCESS POINT IDENTIFIER | wifi_ap_identifier | INFORMATION FOR IDENTIFYING WIRELESS IP ACCESS POINT |

EP 2 712 179 A1

# FIG. 15

| 3bit | 6bit | 3bit | 4bit |
|---|---|---|---|
| 001 | AREA IDENTIFIER | AREA BROADCASTER IDENTIFIER | SEGMENT IDENTIFIER |

NETWORK ID

| 6bit | 7bit | 2bit | 2bit | 3bit | 4bit |
|---|---|---|---|---|---|
| AREA IDENTIFIER | SPECIFIC AREA IDENTIFIER | AREA TYPE | SYSTEM TYPE | AREA BROADCASTER IDENTIFIER | SEGMENT IDENTIFIER |

STATION ID

# FIG. 16

AREA IDENTIFIER = A
(X PREFECTURE)

SPECIFIC AREA IDENTIFIER = a
(Y CITY)

AREA BROADCASTER IDENTIFIER = α

STATION

SPECIFIC AREA IDENTIFIER = b
(Z CITY)

AREA BROADCASTER IDENTIFIER = α

STATION

SEGMENT IDENTIFIER    0        5  6 7        12

EP 2 712 179 A1

## FIG. 17

FIG. 18

## FIG. 19

```
area_broadcast_station_descriptor() {
    descriptor_tag                      8
    descriptor_tag                      8
    area_broadcast_station_id          24
    area_broadcaster_id                24
    signal_type                         3
    area_type                           2
    segment_mode                        2
    reserved                            1
    emission_power                      8
    station_latitude                   16
    station_longitude                  16
    reserved                            4
    area_code                          12
    service_category                    8
    station_name_flag                   1
    broadcaster_name_flag               1
    area_name_flag                      1
    operation_start_time_flag           1
    operation_end_time_flag             1
    operation_time_pattern_flag         1
    tuning_info_flag                    1
    related_wifi_AP_flag                1
    if(station_name_flag==1) {
        station_name_length             8
        for(i=0; i<N; i++) {
            station_name_byte         8×N
        }
    }
    if(broadcaster_name_flag==1) {
        broadcaster_name_length         8
        for(i=0; i<N; i++) {
            broadcaster_name_byte     8×N
        }
    }

    If(area_name_flag==1) {
        area_name_length                8
        for(i=0; i<N; i++) {
            area_name_byte            8×N
        }
    }
    If(operation_start_time_flag==1) {
        operation_start_time           24
    }
    If(operation_end_time_flag==1) {
        operation_end_time             24
    }
    If(operation_time_pattern_flag==1) {
        number_of_pattern               8
        for(i=0; i<number_of_pattern; i++) {
            weekly_pattern            7×N
            reserved                  1×N
            daily_pattern            24×N
        }
    }
    If(tuning_info_flag==1) {
        entry_frequency                16
        guard_interval                  2
        transmission_mode               2
        modulation                      2
        reserved                        2
    }
    if(related_wifi_AP_flag==1) {
        no_of_AP                        8
        for(i=0; i<N; i++) {
            wifi_AP_ssid             32×N
        }
    }
}
```

EP 2 712 179 A1

## FIG. 20

EP 2 712 179 A1

# FIG. 21

```
      ╭─────────────────────╮
      │  START TRANSMITTING  │
      │      OPERATION       │
      ╰─────────────────────╯
                │
                ▼
      ┌─────────────────────────┐  S31
      │ ACQUIRE RELATED INFORMATION │
      └─────────────────────────┘
                │
                ▼
      ┌─────────────────────────┐  S32
      │    ACQUIRE VIDEO DATA    │
      └─────────────────────────┘
                │
                ▼
      ┌─────────────────────────┐  S33
      │    ENCODE VIDEO DATA     │
      └─────────────────────────┘
                │
                ▼
      ┌─────────────────────────┐  S34
      │    ACQUIRE AUDIO DATA    │
      └─────────────────────────┘
                │
                ▼
      ┌─────────────────────────┐  S35
      │    ENCODE AUDIO DATA     │
      └─────────────────────────┘
                │
                ▼
      ┌─────────────────────────┐  S36
      │   PERFORM MULTIPLEXING   │
      └─────────────────────────┘
                │
                ▼
      ┌─────────────────────────┐  S37
      │      TRANSMIT TS         │
      └─────────────────────────┘
                │
                ▼
           ╭─────────╮
           │   END   │
           ╰─────────╯
```

*FIG. 22*

# FIG. 23

| | | |
|---|---|---|
| | | STATION INFORMATION ACQUISITION BY METHOD OTHER THAN CHANNEL SCANNING |

| CHANNEL SCANNING (STATION INFORMATION ACQUISITION) | TUNING | STATION LIST |
|---|---|---|

FIG. 24

EP 2 712 179 A1

# FIG. 25

```
( OPERATION TO ACQUIRE STATION INFORMATION BY CHANNEL SCANNING )
                              │
        ┌─────────────────────────────────────────┐
        │ DISPLAY SCANNING OPERATION SCREEN │ S51
        └─────────────────────────────────────────┘
                              │
         ┌────────────────────┤
         │                    ▼                    S52
    NO ◄─◄    HAS SCAN BUTTON BEEN TOUCHED?  ►
                              │ YES
              ┌───────────────────────────┐
              │ SELECT LOWEST FREQUENCY    │ S53
              └───────────────────────────┘
                              │
         ┌────────────────────┤              S54
    NO ◄─◄        IS THERE RECEPTION?       ►
         │                    │ YES
         │    ┌──────────────────────────────────────────┐
         │    │ ACQUIRE NITs (STATION INFORMATION) AND SDTs │ S55
         │    └──────────────────────────────────────────┘
         │                    │
         └───────────────────►│              S56
                 ◄      IS IT LAST FREQUENCY?     ►──── NO ──► ┌────────────────────────┐
                              │ YES                            │ SELECT NEXT FREQUENCY  │ S57
              ┌────────────────────────────────┐               └────────────────────────┘
              │ DISPLAY CHANNEL LIST SCREEN BY │ S58
              │     USING NITs AND SDTs        │
              └────────────────────────────────┘
                              │
         ┌────────────────────┤              S59
    NO ◄─◄    HAS SERVICE BEEN SELECTED?    ►
                              │ YES
              ┌───────────────────────────┐
              │ SELECT SELECTED SERVICE    │ S60
              └───────────────────────────┘
                              │              S61
    NO ◄─◄       IS IT AREA-LIMITED BROADCAST?  ►
                              │ YES
              ┌───────────────────────────┐
              │ DISPLAY BOOKMARK BUTTON    │ S62
              └───────────────────────────┘
                              │              S63
         ◄    HAS BOOKMARK BUTTON BEEN TOUCHED?  ►──── NO
                              │ YES
    ┌──────────────────────────────────────────────────────┐
    │ STORE STATION INFORMATION RELATED TO SELECTED SERVICE │ S64
    └──────────────────────────────────────────────────────┘
                              │
                         (  END  )
```

# FIG. 26

SCANNING OPERATION SCREEN

| | |
|---|---|
| | |

SCAN

→

CHANNEL LIST SCREEN

| GENERAL CHANNEL | AREA-LIMITED BROADCASTING CHANNEL |
|---|---|
| MHK | SHINAGAWA 1 |
| GETSU-TV | SHINAGAWA 2 |
| TVS | SHINAGAWA PRINCE CHANNEL |
| BUJI | Wing f CHANNEL |

→

BROADCAST RECEPTION SCREEN

BOOKMARK

# FIG. 27

OPERATION TO ACQUIRE STATION
INFORMATION BY DIRECT METHOD

↓

| ACQUIRE STATION INFORMATION | S111

↓

| SELECT SERVICE OF AREA-LIMITED BROADCAST BEING TRANSMITTED FROM STATION USING STATION INFORMATION | S112

↓

| DISPLAY BOOKMARK BUTTON | S113

↓

S114
HAS BOOKMARK BUTTON BEEN TOUCHED? —— NO

YES ↓

| STORE STATION INFORMATION | S115

↓

( END )

# FIG. 28

POSTER

TWO-DIMENSIONAL BAR-CODE

RECEIVING TERMINAL

33

BROADCAST RECEPTION SCREEN

BOOKMARK

# FIG. 29

```
┌──────────────────────────────┐
│   OPERATION TO ACQUIRE STATION   │
│ INFORMATION BY OTHER METHODS │
└──────────────────────────────┘
              │
              ▼
┌──────────────────────────────┐
│   ACQUIRE ONE OR MORE SETS   │  S121
│      OF STATION INFORMATION      │
└──────────────────────────────┘
              │
              ▼
┌──────────────────────────────┐
│   STORE STATION INFORMATION   │  S122
└──────────────────────────────┘
              │
              ▼
          (  END  )
```

# FIG. 30

```
TUNING OPERATION IN
INDIVIDUAL SELECT MODE
          │
          ▼
DISPLAY AREA SELECT SCREEN  S131
          │
          ▼
NO      S132
◇ HAS AREA BEEN SELECTED? ◇
          │ YES
          ▼
SELECT STATION INFORMATION HAVING AREA NAME CORRESPONDING  S133
TO SELECTED PLACE NAME FROM STATION LIST, AND REGISTER
STATION INFORMATION IN SELECTABLE STATION LIST (SELECTABLE
STATION LIST REGISTERING OPERATION)
          │
          ▼
NO      S134
◇ IS RECEPTION CHECK TO BE PERFORMED ? ◇
          │ YES
          ▼
PERFORM TUNING BY USING FIRST STATION INFORMATION IN  S135
SELECTABLE STATION LIST AS TARGET INFORMATION
          │
          ▼
YES     S136
◇ HAS AREA-LIMITED BROADCAST BEEN RECEIVED? ◇
          │ NO
          ▼
DELETE TARGET INFORMATION FROM  S137
SELECTABLE STATION LIST
          │
          ▼
        S138
◇ HAS ALL STATION INFORMATION BEEN PROCESSED? ◇  NO
          │ YES                                   │
          │                                       ▼
          │                              PERFORM TUNING BY USING NEXT  S139
          │                              STATION INFORMATION AS TARGET
          │                              INFORMATION
          ▼
DISPLAY STATION LIST SCREEN BY USING STATION  S140
INFORMATION IN SELECTABLE STATION LIST
          │
          ▼
NO      S141
◇ IS THERE TUNING ACTION? ◇
          │ YES
          ▼
SELECT SELECTED SERVICE  S142
          │
          ▼
        END
```

# FIG. 31

```
      ( SELECTABLE STATION LIST )
      (  REGISTERING OPERATION  )
                  │
                  ▼
   ┌───────────────────────────────┐ S151
   │ SELECT FIRST STATION INFORMATION │
   │        FROM STATION LIST        │
   └───────────────────────────────┘
                  │
      ┌──────────▼
      │          ▼           S152
      │      ◇◇◇◇◇◇◇◇◇◇◇◇◇◇◇◇◇◇
      │    ◇ HAS ALL STATION INFORMATION ◇  YES
      │    ◇    BEEN PROCESSED?        ◇─────────┐
      │      ◇◇◇◇◇◇◇◇◇◇◇◇◇◇◇◇◇◇            │
  ┌───────────┐ S157    │NO                        │
  │SELECT NEXT│         ▼           S153           │
  │ STATION   │ NO  ◇◇◇◇◇◇◇◇◇◇◇◇◇◇◇◇              │
  │INFORMATION│◄────◇ IS IT SELECTED AREA? ◇       │
  └───────────┘      ◇◇◇◇◇◇◇◇◇◇◇◇◇◇◇◇              │
      ▲                │YES                         │
      │                ▼           S154             │
      │            ◇◇◇◇◇◇◇◇◇◇◇◇◇◇◇◇◇◇◇              │
      │         ◇  ARE THERE             ◇          │
      │    NO   ◇ SYSTEM TYPE AND SEGMENT ◇         │
      │◄────────◇ OPERATION MODE COMPATIBLE WITH◇   │
      │         ◇   RECEIVING TERMINAL?   ◇         │
      │            ◇◇◇◇◇◇◇◇◇◇◇◇◇◇◇◇◇◇◇              │
      │                │YES                         │
      │                ▼           S155             │
      │    NO      ◇◇◇◇◇◇◇◇◇◇◇◇◇◇◇◇                │
      │◄───────────◇ IS IT WITHIN SERVICE ◇         │
      │            ◇      PERIOD?        ◇          │
      │            ◇◇◇◇◇◇◇◇◇◇◇◇◇◇◇◇                │
      │                │YES                         │
      │      ┌──────────▼────────────────┐ S156     │
      │      │ REGISTER STATION INFORMATION│         │
      └──────│   IN SELECTABLE STATION LIST│         │
             └────────────────────────────┘         ▼
                                              ( RETURN )
```

## FIG. 32

AREA SELECT SCREEN

AREA BROADCASTING
STATION
AREA SELECTION

SHINJUKU
SHIBUYA
MARUNOUCHI
SHINAGAWA
YOKOHAMA

→

STATION LIST SCREEN

SHINAGAWA STATION LIST

SHINAGAWA COMMUNITY

SHINAGAWA PRINCE S
Wing Station

→

CHANNEL LIST SCREEN

SHINAGAWA COMMUNITY
CHANNEL LIST

SHINAGAWA 1
SHINAGAWA 2

→

BROADCAST
RECEPTION SCREEN

BOOKMARK

EP 2 712 179 A1

# FIG. 33

( TUNING OPERATION IN SEQUENTIAL SELECT MODE )

↓

| DISPLAY AREA SELECT SCREEN | S161

↓

**S162**

NO ◇ HAS AREA BEEN SELECTED?

↓ YES

| SELECT STATION INFORMATION HAVING AREA NAME CORRESPONDING TO SELECTED PLACE NAME FROM STATION LIST, AND REGISTER STATION INFORMATION IN SELECTABLE STATION LIST (SELECTABLE STATION LIST REGISTERING OPERATION) | S163

↓

| SET FIRST STATION INFORMATION IN SELECTABLE STATION LIST AS TARGET INFORMATION, AND PERFORM TUNING BY USING TARGET INFORMATION | S164

↓

**S165**

NO ◇ HAS AREA-LIMITED BROADCAST BEEN RECEIVED?

↓ YES

| OUTPUT | S166

↓

| DISPLAY BUTTON FOR SELECTING NEXT STATION | S167

↓

**S168**

NO ◇ HAS BUTTON BEEN TOUCHED?

↓ YES

**S169**

◇ IS TARGET INFORMATION LAST STATION INFORMATION? — NO →

↓ YES

**S170**

| SET NEXT STATION INFORMATION AS TARGET INFORMATION, AND PERFORM TUNING BY USING TARGET INFORMATION |

( END )

# FIG. 34

EP 2 712 179 A1

AREA SELECT SCREEN

| AREA BROADCASTING STATION |
| AREA SELECTION |
| SHINJUKU |
| SHIBUYA |
| MARUNOUCHI |
| SHINAGAWA |
| YOKOHAMA |

→

BROADCAST RECEPTION SCREEN

SHINAGAWA 1

NEXT Ch

→

BROADCAST RECEPTION SCREEN

SHINAGAWA 2

NEXT Ch

→ ・・・

# FIG. 35

```
( TUNING OPERATION IN MAP DISPLAY MODE )
                    ↓
        ┌─────────────────────┐
        │     DISPLAY MAP      │ S181
        └─────────────────────┘
                    ↓
┌──────────────────────────────────────────────┐
│  SELECT STATION INFORMATION HAVING AREA NAME   │ S182
│ CORRESPONDING TO AREA SHOWN IN MAP FROM STATION LIST,│
│ AND REGISTER STATION INFORMATION IN SELECTABLE STATION│
│  LIST (SELECTABLE STATION LIST REGISTERING OPERATION) │
└──────────────────────────────────────────────┘
                    ↓
                              S183
  NO        ╱ IS RECEPTION CHECK TO BE ╲
 ←─────────⟨       PERFORMED?          ⟩
            ╲                         ╱
                    ↓ YES
┌──────────────────────────────────────────────┐
│ SET FIRST STATION INFORMATION IN SELECTABLE STATION │ S184
│ LIST AS TARGET INFORMATION, AND PERFORM TUNING BY  │
│          USING TARGET INFORMATION                  │
└──────────────────────────────────────────────┘
                    ↓
                              S185
  NO        ╱ HAS AREA-LIMITED BROADCAST ╲
 ←─────────⟨      BEEN RECEIVED?          ⟩
            ╲                            ╱
                    ↓ YES
        ┌─────────────────────────────┐
        │  DELETE TARGET INFORMATION FROM │ S186
        │    SELECTABLE STATION LIST      │
        └─────────────────────────────┘
                    ↓
                              S187
        ╱ HAS ALL STATION INFORMATION BEEN ╲    NO
       ⟨          PROCESSED?                ⟩ ─────┐
        ╲                                  ╱       ↓
                    ↓ YES                      S188
                                   ┌─────────────────────┐
                                   │   SET NEXT STATION   │
                                   │ INFORMATION AS TARGET │
                                   │ INFORMATION, AND PERFORM│
                                   │ TUNING BY USING TARGET │
                                   │     INFORMATION       │
                                   └─────────────────────┘
                    ↓
┌──────────────────────────────────────────────┐
│ DISPLAY STATIONS (AND STATION NAMES) FROM      │ S189
│    SELECTABLE STATION LIST ON MAP              │
└──────────────────────────────────────────────┘
                    ↓
                              S190
  NO        ╱        IS            ╲
 ←─────────⟨ THERE TUNING ACTION    ⟩
            ╲          ?           ╱
                    ↓ YES
        ┌─────────────────────────┐
        │ SELECT SELECTED SERVICE  │ S191
        └─────────────────────────┘
                    ↓
               (   END   )
```

# FIG. 36

MAP

STATION

RECEIVABLE AREA
BROADCASTING
STATION

SHINAGAWA
COMMUNITY

SHINAGAWA COMMUNITY
CHANNEL LIST

SHINAGAWA 1

SHINAGAWA 2

BROADCAST
RECEPTION SCREEN

BOOKMARK

*FIG. 37*

```
( TUNING OPERATION IN GPS MODE )
            │
            ▼◄─────────────────┐
┌──────────────────────────┐   │
│ ACQUIRE PRESENT LOCATION │ S201│
└──────────────────────────┘   │
            │                  │
            ▼                  │
┌──────────────────────────┐   │
│ DISPLAY MAP INCLUDING     │ S202│
│ PRESENT LOCATION          │   │
└──────────────────────────┘   │
            │          S203     │
            ▼                   │
      < IS THERE CHECKING ACTION? >──NO──┘
            │
           YES
            │
            ▼
┌──────────────────────────────────────────────┐
│ SELECT STATION INFORMATION ABOUT STATIONS OF  │ S204
│ AREA-LIMITED BROADCASTS SUPPOSEDLY RECEIVABLE │
│ IN PRESENT LOCATION FROM STATION LIST, AND     │
│ REGISTER STATION INFORMATION IN SELECTABLE     │
│ STATION LIST                                   │
│ (SELECTABLE STATION LIST REGISTERING OPERATION)│
└──────────────────────────────────────────────┘
            │              S205
NO ◄────< IS RECEPTION CHECK TO BE PERFORMED? >
│            │
│           YES
│            ▼
│  ┌────────────────────────────────────────┐
│  │ SET FIRST STATION INFORMATION IN         │ S206
│  │ SELECTABLE STATION LIST AS TARGET        │
│  │ INFORMATION, AND PERFORM TUNING BY       │
│  │ USING TARGET INFORMATION                 │
│  └────────────────────────────────────────┘
│            │◄──────────────────────────┐
│            ▼         S207               │
│  YES ◄< HAS AREA-LIMITED                │
│  │      BROADCAST BEEN RECEIVED? >      │
│  │        │NO                           │
│  │        ▼                             │
│  │  ┌─────────────────────────────┐     │
│  │  │ DELETE TARGET INFORMATION    │ S208│
│  │  │ FROM SELECTABLE STATION LIST │     │
│  │  └─────────────────────────────┘     │
│  │        │                             │
│  └────────►│                            │
│            ▼        S209                 │
│     < HAS ALL STATION INFORMATION       │
│       BEEN PROCESSED? >──NO──────┐      │
│            │                     ▼      │
│           YES              ┌──────────────────┐
│            │               │ SET NEXT STATION  │ S210
│            │               │ INFORMATION AS    │
│            │               │ TARGET INFORMATION,│
│            │               │ AND PERFORM TUNING │
│            │               │ BY USING TARGET    │
│            │               │ INFORMATION        │
│            │               └──────────────────┘
│            │                     │
│            │◄────────────────────┘
└───────────►│
            ▼
┌──────────────────────────────────────────┐
│ DISPLAY STATIONS (AND STATION NAMES) FROM  │ S211
│ SELECTABLE STATION LIST ON MAP             │
└──────────────────────────────────────────┘
            │
            ▼         S212
NO ◄──< IS THERE TUNING ACTION? >
│            │
│           YES
│            ▼
│  ┌──────────────────────────┐
│  │ SELECT SELECTED SERVICE   │ S213
│  └──────────────────────────┘
│            │
│            ▼
│         ( END )
```

# FIG. 38

AREA
BROADCAST

RECEIVABLE AREA
BROADCASTING
STATION

SHINAGAWA
COMMUNITY

BROADCAST
RECEPTION SCREEN

SHINAGAWA 1

NEXT Ch

BROADCAST
RECEPTION SCREEN

SHINAGAWA 2

NEXT Ch

# FIG. 39

$$\boxed{\begin{array}{c}\text{SELECTABLE STATION LIST}\\\text{REGISTERING OPERATION}\end{array}}$$

CALCULATE DISTANCES BETWEEN PRESENT LOCATION AND STATIONS FROM LATITUDES AND LONGITUDES OF PRESENT LOCATION AND STATIONS, AND REGISTER STATION INFORMATION ABOUT STATIONS AT PREDETERMINED OR SHORTER DISTANCE FROM PRESENT LOCATION IN SELECTABLE STATION LIST   S231

SELECT FIRST STATION INFORMATION IN SELECTABLE STATION LIST AS TARGET INFORMATION   S232

CALCULATE RECEIVING SENSITIVITY COEFFICIENT Cr OF STATION (TARGET STATION) CORRESPONDING TO TARGET INFORMATION, USING BROADCAST AREA INFORMATION (TRANSMISSION POWER, STATION LATITUDE, AND STATION LONGITUDE) CONTAINED IN TARGET INFORMATION   S233

S234
RECEIVING SENSITIVITY COEFFICIENT Cr > THRESHOLD VALUE?
YES
NO

DELETE TARGET INFORMATION FROM SELECTABLE STATION LIST   S235

S236
HAS ALL STATION INFORMATION BEEN RECEIVED?
YES
NO

SELECT NEXT STATION INFORMATION AS TARGET INFORMATION   S237

$$\boxed{\text{RETURN}}$$

*FIG. 40*  ( CHECKING OPERATION )

ACQUIRE PRESENT LOCATION  S301

SELECTABLE STATION LIST
REGISTERING OPERATION  S302

SET FIRST STATION INFORMATION IN SELECTABLE STATION
LIST AS TARGET INFORMATION, AND PERFORM TUNING BY
USING TARGET INFORMATION  S303

S304
HAS AREA-LIMITED BROADCAST
BEEN RECEIVED?
YES          NO

DELETE TARGET INFORMATION FROM
SELECTABLE STATION LIST  S305

S306
HAS ALL STATION INFORMATION
BEEN PROCESSED?
YES          NO

S307
SET NEXT STATION INFORMATION AS
TARGET INFORMATION, AND PERFORM
TUNING BY USING TARGET INFORMATION

S308
IS THERE NEW STATION?
NO          YES

MAKE NOTIFICATION
OF NEW STATION  S309

S310
IS THERE TUNING
ACTION?
NO          YES

SELECT SELECTED SERVICE  S311

( END )

## FIG. 41

BROADCAST AREA · PRESENT LOCATION · STATION · SHINAGAWA · NOTIFICATION SCREEN · SONY STATION BROADCAST AVAILABLE · SELECT

EP 2 712 179 A1

## FIG. 42

(NOTIFICATION TONE)

RECEIVING TERMINAL

33

NOTIFICATION SCREEN

SHINAGAWA COMMUNITY AVAILABLE

BROADCAST RECEPTION SCREEN

SHINAGAWA 1

NEXT Ch

BROADCAST RECEPTION SCREEN

SHINAGAWA 2

NEXT Ch

EP 2 712 179 A1

# FIG. 43

```
    ┌─────────────────────────────────┐
    │      CHECKING OPERATION BY      │
    │      WIRELESS COMMUNICATION     │
    └─────────────────────────────────┘
```

S401
HAS NEW WIRELESS IP ACCESS POINT BEEN DETECTED?

NO

YES

S402
SELECT FIRST STATION INFORMATION FROM STATION LIST

S403
IS SSID IDENTICAL?

YES          NO

S405
SELECT NEXT STATION INFORMATION

S404
HAS ALL STATION INFORMATION BEEN PROCESSED?

NO

YES

S406
MAKE NOTIFICATION OF NEW STATION

S407
IS THERE TUNING ACTION?

NO

YES

S408
SELECT SELECTED SERVICE

END

## FIG. 44

WIRELESS IP
ACCESS POINT

WIRELESS IP
ACCESS POINT

STATION

BROADCAST
AREA

COMMUNICATION
AREA

COMMUNICATION
AREA

EP 2 712 179 A1

## FIG. 45

EP 2 712 179 A1

**INTERNATIONAL SEARCH REPORT**

| International application No. |
| --- |
| PCT/JP2012/062089 |

**A. CLASSIFICATION OF SUBJECT MATTER**
*H04N5/44*(2011.01)i, *H04B1/16*(2006.01)i, *H04H20/61*(2008.01)i, *H04H20/93*
(2008.01)i, *H04H60/40*(2008.01)i, *H04H60/42*(2008.01)i, *H04H60/43*(2008.01)i,
*H04N7/173*(2011.01)i

According to International Patent Classification (IPC) or to both national classification and IPC

**B. FIELDS SEARCHED**

Minimum documentation searched (classification system followed by classification symbols)
H04N5/44, H04B1/16, H04H20/61, H04H20/93, H04H60/40, H04H60/42, H04H60/43,
H04N7/173

Documentation searched other than minimum documentation to the extent that such documents are included in the fields searched
Jitsuyo Shinan Koho          1922–1996   Jitsuyo Shinan Toroku Koho    1996–2012
Kokai Jitsuyo Shinan Koho    1971–2012   Toroku Jitsuyo Shinan Koho    1994–2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 2009-231946 A  (Fujitsu Ltd.),<br>08 October 2009 (08.10.2009),<br>entire text; all drawings<br>& US 2009/0239464 A1 | 1-6,8-10<br>7 |
| X<br>A | JP 2009-232119 A  (KDDI Corp.),<br>08 October 2009 (08.10.2009),<br>entire text; all drawings<br>(Family: none) | 1-6,8-10<br>7 |
| A | JP 2009-49945 A  (Casio Hitachi Mobile<br>Communications Co., Ltd.),<br>05 March 2009 (05.03.2009),<br>paragraph [0029]<br>(Family: none) | 4,5 |

☐ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>07 June, 2012 (07.06.12) | Date of mailing of the international search report<br>19 June, 2012 (19.06.12) |
| --- | --- |
| Name and mailing address of the ISA/<br>Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006325032 A

- JP 2007329847 A